# EUROPEAN PATENT APPLICATION

(11) **EP 4 071 687 A1**
(43) Date of publication of application: **12.10.2022**
(21) Application number: 22152117.2
(22) Date of filing: 01.06.2015
(51) Int. Cl.: G06Q 10/10, G06Q 30/00, G06Q 30/02, G06Q 50/00, H04L 12/16

(54) **ACTIONABLE VERIFIABLE MICRO-CROWD SOURCING**

(30) Priority: 30.05.2014 US 201462004996 P
(62) Divisional of application: 15798877.5
(71) Applicant: Mcrowdsourcing Canada Inc., Ottawa, Ontario K1N 5M5 (CA)
(72) Inventor: MINGARELLI, Giovanna, Ottawa, K1N 1K2 (CA); LEE, Brandon, Ottawa, K1N 1K2 (CA)
(74) Representative: Broderick, Terence

(57) **Abstract**

Today crowdsourcing consists of activities which may involve large numbers of individuals but there is no social aspect to the crowdsourcing activities and poor visibility of the crowdsourced results by others. Embodiments of the invention provide an online portal supporting both mobile and non-mobile users with social media and social network visibility of the crowdsourcing being undertaken / requested by others. Such crowdsourcing may also be inventivised by either the generator of the crowdsourced microactions or third parties who are independent of the generator and executer of the crowdsourced activity. Beneficially, the crowdsourcing portal leverages acquiring multimedia content or a user's geolocation in mobile environments to provide part of the completion process for a crowdsourced activity. Accordingly, embodiments of the invention provide for these features within a crowd sourcing portal and provide users with a rich environment within which to create, manage, track, complete and promote crowdsourcing activities.

## Description

### CROSS-REFERENCE TO RELATED APPLICATIONS

This patent application claims the benefit of priority as a 371 National Phase Patent Application of PCT/CA2015/000,351 filed June 1, 2015 entitled "Actionable Verifiable Micro-Crowd Sourcing", which itself claims priority from U.S. Provisional Patent Application No. 62/004,996 filed May 30, 2014 entitled "Actionable Verifiable Micro-Crowd Sourcing", the entire contents of each being included herein by reference.

### FIELD OF THE INVENTION

This invention relates to crowd sourcing and more particularly to the creation, management, tracking, completion, verification and promotion of micro-crowd sourcing.

### BACKGROUND OF THE INVENTION

Crowdsourcing refers to the practice of obtaining needed services, ideas, content, etc. by soliciting contributions from a large group of people, and especially from an online community, rather than from traditional employees or suppliers. The word "crowdsourcing" was coined in 2005 but came to widespread public focus in 2006 and may apply to a wide range of activities. The process is often used to sub-divide tedious work or to fund-raise startup companies and charities, and can also occur offline. It combines the efforts of numerous self-identified volunteers, workers, etc. wherein each contributor of their own initiative contributes a small portion to the greater result. The term "crowdsourcing" is a portmanteau of "crowd" and "outsourcing"; it is distinguished from outsourcing in that the work comes from an undefined public rather than being commissioned from a specific, named group.

Whilst crowdsourcing can involve the division of labor for tedious tasks such that they are split to exploit crowd-based outsourcing, it can also apply to specific requests, such as crowdfunding, a broad-based competition, and a general search for answers, solutions, or a missing person. Today, crowdsourcing has transferred mainly to the Internet. The Internet provides a particularly good venue for crowdsourcing since individuals tend to be more open in web-based projects where they are not being physically judged or scrutinized and thus can feel more comfortable sharing. This ultimately allows for well-designed artistic projects because individuals are less conscious, or maybe even less aware, of scrutiny towards their work. In an online atmosphere, more attention can be given to the specific needs of a project, rather than spending as much time in communication with other individuals.

Crowdsourcing can either take an explicit or an implicit route. Explicit crowdsourcing lets users work together to evaluate, share and build different specific tasks, while implicit crowdsourcing means that users solve a problem as a side effect of something else they are doing. With explicit crowdsourcing, users can evaluate particular items like books or webpages, or share by posting products or items. Users can also build artifacts by providing information and editing other people's work. Implicit crowdsourcing can take two forms: standalone and piggyback. Standalone allows people to solve problems as a side effect of the task they are actually doing, whereas piggyback takes users' information from a third-party website to gather information.

There are some common categories of crowdsourcing that can be used effectively in the commercial world. Some of these web-based crowdsourcing efforts include crowdvoting, wisdom of the crowd, crowdfunding, microwork, creative crowdsourcing and inducement prize contests. Although these are not an exhaustive list, they cover the current major ways in which people use crowds to perform tasks. However, whilst today services such as Mechanical Turk by Amazon^{™} provide enterprises with access to crowdsourced work in many instances the work is in fact for a single worker to complete in isolation. Similarly with crowdfunding many such services are primarily brokering services piggybacking of the wave of publicity over crowdsourcing. Accordingly, today most crowdsourcing online portals are primarily operated as brokering type services.

Whilst projects may involve large numbers of crowdsources there is no social aspect to the crowdsourcing activities and poor visibility of the crowdsourced results by others. Accordingly, it would be beneficial to provide an online portal supporting both mobile and non-mobile users that offers social media and social network visibility of the crowdsourcing being undertaken / requested by others. It would also be beneficial for the crowdsourcing portal to incentivise users to perform crowdsource activities or allow a user independent of the generator and executer of the crowdsourced activity to incentivise. Similarly, it would be beneficial for such a crowdsourcing portal to leverage either the ease of acquiring multimedia content or establishing a user's geolocation in mobile environments to provide part of the completion process for a crowdsourced activity. Accordingly, embodiments of the invention provide for these features within a crowd sourcing portal and more particularly provide users with a rich environment within which to create, manage, track, complete and promote crowdsourcing activities.

Other aspects and features of the present invention will become apparent to those ordinarily skilled in the art upon review of the following description of specific embodiments of the invention in conjunction with the accompanying figures.

### SUMMARY OF THE INVENTION

It is an object of the present invention to address limitations within the prior art relating crowd sourcing and more particularly to the creation, management, tracking, completion, verification and promotion of micro-crowd sourcing.

In accordance with an embodiment of the invention there is provided a method comprising providing an incentive to a first user to perform either an action or a task generated by a second user, wherein the incentive is a reward for completion of either the action or the task by a third user based upon the first user engaging the third user.

In accordance with an embodiment of the invention there is provided a method comprising:
generating within a network based software application at least one of an action and a task for completion, the generation being by a first user;
receiving within the network based software application feedback from a predetermined subset of a plurality of users relating to the at least one of an action and a task; wherein
the predetermined subset of a plurality of users are registered members of the network based software application;
a first portion of the predetermined subset of a plurality of users complete the at least one of an action and a task;
a second portion of the predetermined subset of a plurality of users do not complete the at least one of an action and a task; and
the completion of the at least one of an action and a task by each user of the first portion of the predetermined subset of a plurality of users comprises providing to the network based software application verification data generated by at least one of the user of the first portion of the predetermined subset of a plurality of users and by an independent individual during the user of the first portion of the predetermined subset of a plurality of users completion of the at least one of an action and a task.

In accordance with an embodiment of the invention there is provided a method of validating a user comprising:
receiving a registration of the user via a network based software application comprising at least one social association of a plurality of social associations;
tracking the activity of the user via the network based software application with respect to their completion of or participation within a microaction of a plurality of microactions established within the network based software application by either the user or other users;
determining whether the activity of the user was valid by verifying the completion of or participation within the microaction of the plurality of microactions via the web based network application;
adjusting a ranking associated with the user in dependence upon the determination;
rewarding the verified user's completed microaction within a gaming system comprising points, badges and levels and providing the verified user with at least one of a reward and a gift from at least one of another user and an entity, wherein the at least one of a reward and a gift is determined in dependence upon the type of action performed; and
validating the user to other users of the network based software application or to other social media platforms and network based software services upon the user's ranking meeting a predetermined threshold.

In accordance with an embodiment of the invention there are provided computer executable instructions for execution by a microprocessor stored upon a non-volatile non-transitory memory, the computer executable instructions providing a process comprising the steps of:
receiving a registration of the user via a network based software application comprising at least one social association of a plurality of social associations;
tracking the activity of the user via the network based software application with respect to their completion of or participation within a microaction of a plurality of microactions established within the network based software application by either the user or other users;
determining whether the activity of the user was valid by verifying the completion of or participation within the microaction of the plurality of microactions via the web based network application;
adjusting a ranking associated with the user in dependence upon the determination;
rewarding the verified user's completed microaction within a gaming system comprising points, badges and levels and providing the verified user with at least one of a reward and a gift from at least one of another user and an entity, wherein the at least one of a reward and a gift is determined in dependence upon the type of action performed; and
validating the user to other users of the network based software application or to other social media platforms and network based software services upon the user's ranking meeting a predetermined threshold.

In accordance with an embodiment of the invention there is provided a system comprising:
a registration engine in execution upon a first computer server comprising a microprocessor and a network interface coupled to a computer network, the registration engine for receiving a registration of the user via the computer network comprising at least one social association of a plurality of social associations;
a tracking engine in execution upon a second computer server comprising a microprocessor and a network interface coupled to the computer network, wherein the tracking engine tracks the activity of the user with respect to their completion of or participation within a microaction of a plurality of microactions established within the network based software application by either the user or other users;
a verification engine in execution upon a third computer server comprising a microprocessor and a network interface coupled to the computer network, the verification engine for determining whether the activity of the user was valid by verifying the completion of or participation within the microaction of the plurality of microactions via the web based network application which includes a peer-to-peer verification system;
a user profile engine in execution upon a fourth computer server comprising a microprocessor and a network interface coupled to the computer network, the user profile engine for at least:
   adjusting a ranking associated with the user in dependence upon the determination; and
   validating the user to other users of the network based software application upon the user's ranking meeting a predetermined threshold; and
a reward engine in execution upon a fifth computer server comprising a microprocessor and a network interface coupled to the computer network, the reward engine for at least one of:
   providing a user whose completion of or participation within the microaction of the plurality of microactions has been verified with a predetermined number of verified user points relating to a gaming system;
   providing a user whose completion of or participation within the microaction of the plurality of microactions has been verified with at least one of a reward and a gift from at least one of another user and an entity wherein the at least one of a reward and a gift is determined in dependence upon at least the type of action performed during completion of or participation within the microaction of the plurality of microactions; and
   providing a user a reward or gift from another user or entity, including other users, businesses, governments and international organizations, based on the type of action performed against a new microaction
   providing a user in conjunction with a notification relating to a new microaction of the plurality of microactions that there is at least one of a reward and a gift associated with the new microaction of the plurality of microactions.

Other aspects and features of the present invention will become apparent to those ordinarily skilled in the art upon review of the following description of specific embodiments of the invention in conjunction with the accompanying figures.

### BRIEF DESCRIPTION OF THE DRAWINGS

Embodiments of the present invention will now be described, by way of example only, with reference to the attached Figures, wherein:
Figure 1 depicts a network environment within which embodiments of the invention may be employed;
Figure 2 depicts a wireless portable electronic device supporting communications to a network such as depicted in Figure 1 and as supporting embodiments of the invention;
Figure 3 depicts an initialization process flow for a micro-crowd sourcing system and micro-crowd sourcing application / platform according to an embodiment of the invention;
Figure 4 depicts a welcome card and the process flow of card presentation and swipe gesture detection for a micro-crowd sourcing system and micro-crowd sourcing application / platform according to an embodiment of the invention;
Figure 5 depicts screen images for a micro-crowd sourcing system and micro-crowd sourcing application / platform according to an embodiment of the invention;
Figures 6A and 6B depict a sign-up process flow for a micro-crowd sourcing system and micro-crowd sourcing application / platform according to an embodiment of the invention;
Figures 7, 8A and 8B depict screen images presented during the sign-up process flow of Figures 6A and 6B for a micro-crowd sourcing system and micro-crowd sourcing application / platform according to an embodiment of the invention;
Figures 9 and 10 depict screen images relating to the sign-up process flow of Figures 6A and 6B for a micro-crowd sourcing system and micro-crowd sourcing application / platform according to an embodiment of the invention;
Figure 11 depict screen images during the log-in process flow of Figure 12 for a micro-crowd sourcing system and micro-crowd sourcing application / platform according to an embodiment of the invention;
Figure 12 depicts a log-in process flow for a micro-crowd sourcing system and micro-crowd sourcing application / platform according to an embodiment of the invention;
Figure 13 depicts screen images relating to a log-in reward sequence for a micro-crowd sourcing system and micro-crowd sourcing application / platform according to an embodiment of the invention;
Figure 14 depicts screen images relating to the home screen process flow of Figure 15 for a micro-crowd sourcing system and micro-crowd sourcing application / platform according to an embodiment of the invention;
Figure 15 depicts a home screen process flow for a micro-crowd sourcing system and micro-crowd sourcing application / platform according to an embodiment of the invention;
Figure 16 depicts screen images relating to a profile of a user and their activity screen for a micro-crowd sourcing system and micro-crowd sourcing application / platform according to an embodiment of the invention;
Figure 17 depicts screen images relating to activity notifications for a micro-crowd sourcing system and micro-crowd sourcing application / platform according to an embodiment of the invention;
Figure 18 depicts a screen image relating to a microaction card for a micro-crowd sourcing system and micro-crowd sourcing application / platform according to an embodiment of the invention;
Figures 19A and 19B depict a microaction card process flow for a micro-crowd sourcing system and micro-crowd sourcing application / platform according to an embodiment of the invention;
Figures 20 and 21 depict screen images relating to microaction cards and a microaction for a micro-crowd sourcing system and micro-crowd sourcing application / platform according to an embodiment of the invention;
Figures 22A and 22B depict a microaction carousel process flow for a micro-crowd sourcing system and micro-crowd sourcing application / platform according to an embodiment of the invention;
Figure 23A and 23B depict screen images relating to performing microactions for a micro-crowd sourcing system and micro-crowd sourcing application / platform according to an embodiment of the invention;
Figures 24A and 24B depict a microaction process flow for a micro-crowd sourcing system and micro-crowd sourcing application / platform according to an embodiment of the invention;
Figures 25 and 26 depict screen images relating to a geo-location microaction and creating microactions for a micro-crowd sourcing system and micro-crowd sourcing application / platform according to an embodiment of the invention;
Figures 27 depicts a microaction generation process flow for a micro-crowd sourcing system and micro-crowd sourcing application / platform according to an embodiment of the invention;
Figures 28A and 28B depict screen images relating to rewards associated with a microaction for a micro-crowd sourcing system and micro-crowd sourcing application / platform according to an embodiment of the invention;
Figure 29 depicts a reward process flow for a micro-crowd sourcing system and micro-crowd sourcing application / platform according to an embodiment of the invention;
Figures 30 depicts screen images relating to promoting a microaction for a micro-crowd sourcing system and micro-crowd sourcing application / platform according to an embodiment of the invention;
Figures 31 and 32 depicts process flows relating to microaction promotion for a micro-crowd sourcing system and micro-crowd sourcing application / platform according to an embodiment of the invention;
Figure 33 depicts a screen image relating to moderation of a microaction for a micro-crowd sourcing system and micro-crowd sourcing application / platform according to an embodiment of the invention;
Figure 34 depicts screen images relating to searching for micro-crowd content based upon a hashtag a micro-crowd sourcing system and micro-crowd sourcing application / platform according to an embodiment of the invention;
Figure 35 depicts a screen image relating to a user selecting to view their activity screen within a micro-crowd sourcing system and micro-crowd sourcing application / platform according to an embodiment of the invention;
Figure 36 depicts a screen image relating to a help interface for a user within a micro-crowd sourcing system and micro-crowd sourcing application / platform according to an embodiment of the invention;
Figure 37 depicts screen images relating to a settings screen and default operating system for a user within a micro-crowd sourcing system and micro-crowd sourcing application / platform according to an embodiment of the invention;
Figure 38 depicts a process flow relating to a user engaging a microaction game loop within a micro-crowd sourcing system and micro-crowd sourcing application / platform according to an embodiment of the invention;
Figure 39 depicts a camera flow chart relating to user navigation of images within a micro-crowd sourcing system and micro-crowd sourcing application / platform according to an embodiment of the invention;
Figure 40 depicts a rating microaction process flow navigated by a user employing a micro-crowd sourcing system and micro-crowd sourcing application / platform according to an embodiment of the invention;
Figure 41 depicts a dare / challenge game loop process flowchart relating to a user's actions within a micro-crowd sourcing system and micro-crowd sourcing application / platform according to an embodiment of the invention;
Figure 42 depicts a flowchart executing within a micro-crowd sourcing system and micro-crowd sourcing application / platform according to an embodiment of the invention relating to a user acquiring energy points based upon levels of microaction etc.;
Figure 43 depicts a reputation augmentation process flow relating to users within a micro-crowd sourcing system and micro-crowd sourcing application / platform according to an embodiment of the invention such that their reputation increases based upon verified activities;
Figure 44 depicts a process flow relating to a user's ability within a micro-crowd sourcing system and micro-crowd sourcing application / platform according to an embodiment of the invention to reject a microaction and provide a reason; and
Figure 45 depicts an exemplary hierarchy layering for a micro-crowd sourcing system and micro-crowd sourcing application / platform according to an embodiment of the invention.

### DETAILED DESCRIPTION

The present invention is directed to crowd sourcing and more particularly to the creation, management, tracking, completion, verification and promotion of micro-crowd sourcing.

The ensuing description provides exemplary embodiment(s) only, and is not intended to limit the scope, applicability or configuration of the disclosure. Rather, the ensuing description of the exemplary embodiment(s) will provide those skilled in the art with an enabling description for implementing an exemplary embodiment. It being understood that various changes may be made in the function and arrangement of elements without departing from the spirit and scope as set forth in the appended claims.

A "portable electronic device" (PED) as used herein and throughout this disclosure, refers to a wireless device used for communications and other applications that requires a battery or other independent form of energy for power. This includes devices, but is not limited to, such as a cellular telephone, smartphone, personal digital assistant (PDA), portable computer, pager, portable multimedia player, portable gaming console, laptop computer, tablet computer, wearable device, and an electronic reader.

A "fixed electronic device" (FED) as used herein and throughout this disclosure, refers to a wireless and /or wired device used for communications and other applications that requires connection to a fixed interface to obtain power. This includes, but is not limited to, a laptop computer, a personal computer, a computer server, a kiosk, a gaming console, a digital set-top box, an analog set-top box, an Internet enabled appliance, an Internet enabled television, and a multimedia player.

A "wearable device" as used herein and throughout this disclosure, refers to an electronic devices worn by the user including those under, within, with or on top of clothing and are part of a broader general class of wearable technology which includes "wearable computers" which in contrast are directed to general or special purpose information technologies and media development. Such wearable devices and / or wearable sensors may include, but not be limited to, smartphones, smart watches, e-textiles, smart shirts, activity trackers, smart glasses, jewelry, and sensors.

An "application" (commonly referred to as an "app") as used herein may refer to, but is not limited to, a "software application", an element of a "software suite", a computer program designed to allow an individual to perform an activity, a computer program designed to allow an electronic device to perform an activity, and a computer program designed to communicate with local and / or remote electronic devices. An application thus differs from an operating system (which runs a computer), a utility (which performs maintenance or general-purpose chores), and a programming tools (with which computer programs are created). Generally, within the following description with respect to embodiments of the invention an application is generally presented in respect of software permanently and / or temporarily installed upon a PED and / or FED.

A "social network" or "social networking service" as used herein may refer to, but is not limited to, a platform to build social networks or social relations among people who may, for example, share interests, activities, backgrounds, or real-life connections. This includes, but is not limited to, social networks such as U. S. based services such as Facebook, Google+, Tumblr, Instagram, Reddit, Pinterest and Twitter; as well as Nexopia, Badoo, Bebo, VKontakte, Delphi, Hi5, Hyves, iWiW, Nasza-Klasa, Soup, Glocals, Skyrock, The Sphere, StudiVZ, Tagged, Tuenti, XING, Orkut, Mxit, Cyworld, Mixi, renren, Ushahidi, weibo and Wretch.

"Social media" or "social media services" as used herein may refer to, but is not limited to, a means of interaction among people in which they create, share, and/or exchange information and ideas in virtual communities and networks. This includes, but is not limited to, social media services relating to magazines, Internet forums, weblogs, social blogs, microblogging, wikis, social networks, podcasts, photographs or pictures, video, rating and social bookmarking as well as those exploiting blogging, picture-sharing, video logs, wall-posting, music-sharing, crowdsourcing and voice over IP, to name a few. Social media services may be classified, for example, as collaborative projects (for example, Wikipedia); blogs and microblogs (for example, Twitter^{™}); content communities (for example, YouTube and DailyMotion); social networking sites (for example, Facebook^{™}); virtual game-worlds (e.g., World of Warcraft^{™}); and virtual social worlds (e.g. Second Life^{™}).

An "enterprise" as used herein may refer to, but is not limited to, a provider of a service and / or a product to a user, customer, or consumer. This includes, but is not limited to, a retail outlet, a store, a market, an online marketplace, a manufacturer, an online retailer, a charity, a utility, a service provider, a political party, an advocacy group, an activist group, a government, a government organization, and a non-government organization. Such enterprises may be directly owned and controlled by a company or may be owned and operated by a franchisee under the direction and management of a franchiser.

A "service provider" as used herein may refer to, but is not limited to, a third party provider of a service and / or a product to an enterprise and / or individual and / or group of individuals and / or a device comprising a microprocessor. This includes, but is not limited to, a retail outlet, a store, a market, an online marketplace, a manufacturer, an online retailer, a utility, an own brand provider, and a service provider wherein the service and / or product is at least one of marketed, sold, offered, and distributed by the enterprise solely or in addition to the service provider.

A 'third party' or "third party provider" as used herein may refer to, but is not limited to, a so-called "arm's length" provider of a service and / or a product to an enterprise and / or individual and / or group of individuals and / or a device comprising a microprocessor wherein the consumer and / or customer engages the third party but the actual service and / or product that they are interested in and / or purchase and / or receive is provided through an enterprise and / or service provider.

A "user" as used herein may refer to, but is not limited to, an individual or group of individuals who may, but not limited to, monitor, acquire, store, transmit, process, generate, participate, use, and manage either locally or remotely by their engagement with a service provider, third party provider, enterprise, social network, social media etc. via a dashboard, web service, website, software plug-in, software application, graphical user interface, for example, one or more aspects of a micro-crowd sourcing system and micro-crowd sourcing application / platform according to an embodiment of the invention. This includes, but is not limited to, private individuals, employees of organizations and / or enterprises, members of community organizations, members of charity organizations, men, women, children, and teenagers. In its broadest sense the user may further include, but not be limited to, software systems, mechanical systems, robotic systems, android systems, etc. that may be characterised by an ability to at least one of monitor, acquire, store, transmit, process, generate, participate, use, and manage one or more aspects of a micro-crowd sourcing system and micro-crowd sourcing application / platform according to an embodiment of the invention.

"User information" as used herein may refer to, but is not limited to, user behavior information, user profile information, user geo-location information, user biometric information, and estimation(s) and / or projection(s) of user information derived from current and / or historical biometric information. "Biometric" information as used herein may refer to, but is not limited to, data relating to a user characterised by data relating to a subset of conditions including, but not limited to, their environment, medical condition, biological condition, physiological condition, chemical condition, ambient environment condition, position condition, neurological condition, drug condition, and one or more specific aspects of one or more of these said conditions.

"Electronic content" (also referred to as "content" or "digital content") as used herein may refer to, but is not limited to, any type of content that exists in the form of digital data as stored, transmitted, received and / or converted wherein one or more of these steps may be analog although generally these steps will be digital. Forms of digital content include, but are not limited to, information that is digitally broadcast, streamed or contained in discrete files. Viewed narrowly, types of digital content include popular media types such as MP3, JPG, AVI, TIFF, AAC, TXT, RTF, HTML, XHTML, PDF, XLS, SVG, WMA, MP4, FLV, and PPT, for example, as well as others, see for example *http:*//*en.wikipedia.org*/*wiki*/*List_of_file_formats.* Within a broader approach digital content mat include any type of digital information, e.g. digitally updated weather forecast, a GPS map, an eBook, a photograph, a video, a Vine^{™}, a blog posting, a Facebook^{™} posting, a Twitter^{™} tweet, online TV, a Simple Message System (SMS) message, data transmitted via a wired interface, data transmitted via a wireless interface etc. The digital content may be any digital data that is at least one of generated, selected, created, modified, and transmitted in response to a user request, said request may be a query, a search, a trigger, an alarm, and a message for example.

Reference to a "document" as used herein may refer to, but is not limited to, any machine-readable and machine-storable work product. A document may be a file, a combination of files, one or more files with embedded links to other files, etc. The files may be of any type, such as text, audio, image, video, etc. Parts of a document to be rendered to an end user can be thought of as "content" of the document. A document may include "structured data" containing both content (words, pictures, etc.) and some indication of the meaning of that content (for example, e-mail fields and associated data, HTML tags and associated data, etc.). In the context of the Internet, a common document is a Web page. Web pages often include content and may include embedded information (such as meta-information, hyperlinks, etc.) and/or embedded instructions (such as Javascript, etc.). In many cases, a document has a unique, addressable, storage location and can therefore be uniquely identified by this addressable location such as a universal resource locator (URL) for example used as a unique address used to access information on the Internet.

A "screen" and/ or "card" as used herein may refer to, but is not limited to, a display screen forming part or all of a user interface presented to a user executing or accessing a micro-crowd sourcing systems and micro-crowd sourcing applications / platforms (MCSSAPs) according to embodiments of the invention. In some embodiments cards may be displayed over a screen or screens in a similar manner to a deck of cards over a card table. Within a broader approach a screen and / or card may be displayed in other formats according to the display capabilities of the PED or FED upon which the digital content within the screen and / or card is presented. Accordingly, whilst embodiments of the invention are described with respect to devices such as smartphones, tablets, laptops etc. with good graphic display capabilities the embodiments of the invention may be implemented within other PEDs and / or FEDs without such graphics capabilities, e.g. generic cellular telephones, by exploiting less graphical and / or non-graphical implementations. For example, each card within a set of cards may be replaced with a text, SMS message, or elements of an email whilst a screen may be replaced with an email, for example.

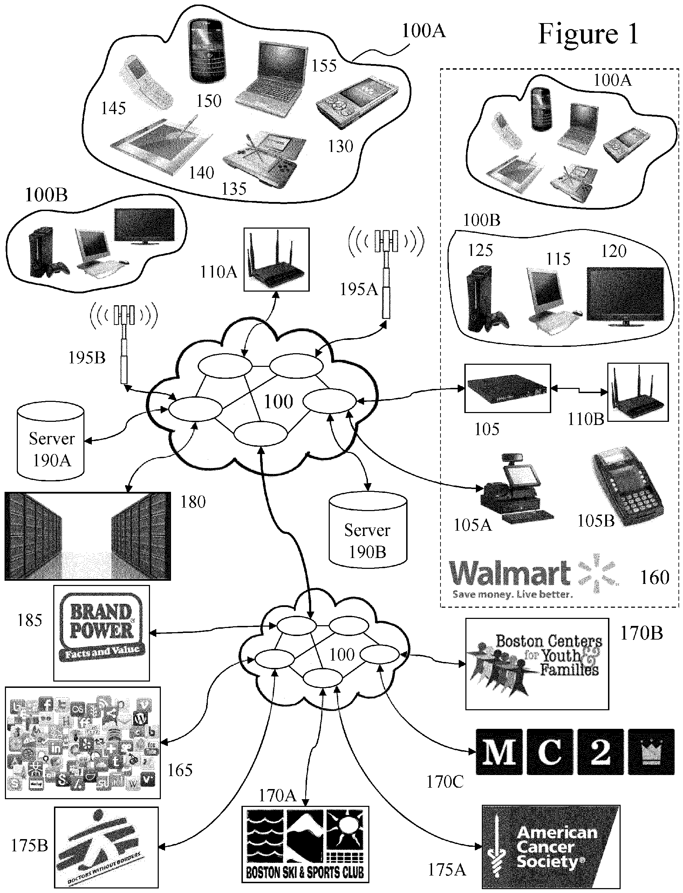

Referring to Figure 1 there is depicted a network environment 100 within which embodiments of the invention may be employed supporting micro-crowd sourcing systems and micro-crowd sourcing applications / platforms (MCSSAPs) according to embodiments of the invention. Such MCSSAPs, for example supporting multiple channels and dynamic content. As shown first and second user groups 100A and 100B respectively interface to a telecommunications network 100. Within the representative telecommunication architecture a remote central exchange 180 communicates with the remainder of a telecommunication service providers network via the network 100 which may include for example long-haul OC-48 / OC-192 backbone elements, an OC-48 wide area network (WAN), a Passive Optical Network, and a Wireless Link. The central exchange 180 is connected via the network 100 to local, regional, and international exchanges (not shown for clarity) and therein through network 100 to first and second cellular APs 195A and 195B respectively which provide Wi-Fi cells for first and second user groups 100A and 100B respectively. Also connected to the network 100 are first and second Wi-Fi nodes 110A and 110B, the latter of which being coupled to network 100 via router 105. Second Wi-Fi node 110B is associated with Enterprise 160, e.g. WalMart^{™}, within which other first and second user groups 100A and 100B exist. Second user group 100B may also be connected to the network 100 via wired interfaces including, but not limited to, DSL, Dial-Up, DOCSIS, Ethernet, G.hn, ISDN, MoCA, PON, and Power line communication (PLC) which may or may not be routed through a router such as router 105.

Also depicted as associated with Enterprise 160 are point-of-sale (POS) terminal 105A and POS handheld 105B representing devices with which a user may provide information via a near-field communication (NFC) according to a NFC protocol. Such protocols include, but are not limited, to those based on existing radio-frequency identification (RFID) standards including ISO/IEC 14443 and FeliCa together with standards built upon them such as ISO/IEC 18092 and those defined by the NFC Forum. Applications include contactless transactions, data exchange, and simplified setup of more complex communications such as Wi-Fi as well as communication between a NFC device and an unpowered NFC chip, typically referred to as a "tag". For example, two devices may employ NFC to initially share MAC Address and IP addresses and then use Wi-Fi Direct to share files and documents.

Within the cell associated with first AP 110A the first group of users 100A may employ a variety of PEDs including for example, laptop computer 155, portable gaming console 135, tablet computer 140, smartphone 150, cellular telephone 145 as well as portable multimedia player 130. Within the cell associated with second AP 110B are the second group of users 100B which may employ a variety of FEDs including for example gaming console 125, personal computer 115 and wireless / Internet enabled television 120 as well as cable modem 105. First and second cellular APs 195A and 195B respectively provide, for example, cellular GSM (Global System for Mobile Communications) telephony services as well as 3G and 4G evolved services with enhanced data transport support. Second cellular AP 195B provides coverage in the exemplary embodiment to first and second user groups 100A and 100B. Alternatively the first and second user groups 100A and 100B may be geographically disparate and access the network 100 through multiple APs, not shown for clarity, distributed geographically by the network operator or operators. First cellular AP 195A as show provides coverage to first user group 100A and environment 170, which comprises second user group 100B as well as first user group 100A. Accordingly, the first and second user groups 100A and 100B may according to their particular communications interfaces communicate to the network 100 through one or more wireless communications standards such as, for example, IEEE 802.11, IEEE 802.15, IEEE 802.16, IEEE 802.20, UMTS, GSM 850, GSM 900, GSM 1800, GSM 1900, GPRS, ITU-R 5.138, ITU-R 5.150, ITU-R 5.280, andIMT-1000. It would be evident to one skilled in the art that many portable and fixed electronic devices may support multiple wireless protocols simultaneously, such that for example a user may employ GSM services such as telephony and SMS and Wi-Fi / WiMAX data transmission, VOIP and Internet access. Accordingly portable electronic devices within first user group 100A may form associations either through standards such as IEEE 802.15 and Bluetooth as well in an ad-hoc manner.

Also connected to the network 100 are Social Networks (SOCNETS) 165, first and second user networks 170A and 170B respectively, e.g. Boston Ski & Sports Club and Boston Centers for Youth & Families, MCSSAP provider 170C, e.g. MCSSAP PROVIDER^{™}, and first to second charity communities 175A and 175B respectively, e.g. American Cancer Society and Doctors without Frontiers, as well as first and second servers 190A and 190B which together with others, not shown for clarity. Also depicted in promoter / advertiser 185, e.g. Brand Power^{™}. First and second servers 190A and 190B may host according to embodiments of the inventions multiple services associated with a provider of micro-crowd sourcing systems and micro-crowd sourcing applications / platforms (MCSSAPs); a provider of a SOCNET or Social Media (SOME) exploiting MCSSAP features; a provider of a SOCNET and / or SOME not exploiting MCSSAP features; a provider of services to PEDS and / or FEDS; a provider of one or more aspects of wired and / or wireless communications; an Enterprise 160 exploiting MCSSAP features; license databases; content databases; image databases; content libraries; customer databases; websites; and software applications for download to or access by FEDs and / or PEDs exploiting and / or hosting MCSSAP features. First and second servers 190A and 190B may also host for example other Internet services such as a search engine, financial services, third party applications and other Internet based services.

Accordingly, a consumer and / or enterprise (CONENT) may exploit a PED and / or FED within an Enterprise 160, for example, and access one of the first or second servers 190A and 190B respectively to perform an operation such as accessing / downloading an application which provides MCSSAP features according to embodiments of the invention; execute an application already installed providing MCSSAP features; execute a network based application providing MCSSAP features; or access content. Similarly, a CONENT may undertake such actions or others exploiting embodiments of the invention exploiting a PED or FED within first and second user groups 100A and 100B respectively via one of first and second cellular APs 195A and 195B respectively and first Wi-Fi nodes 110A.

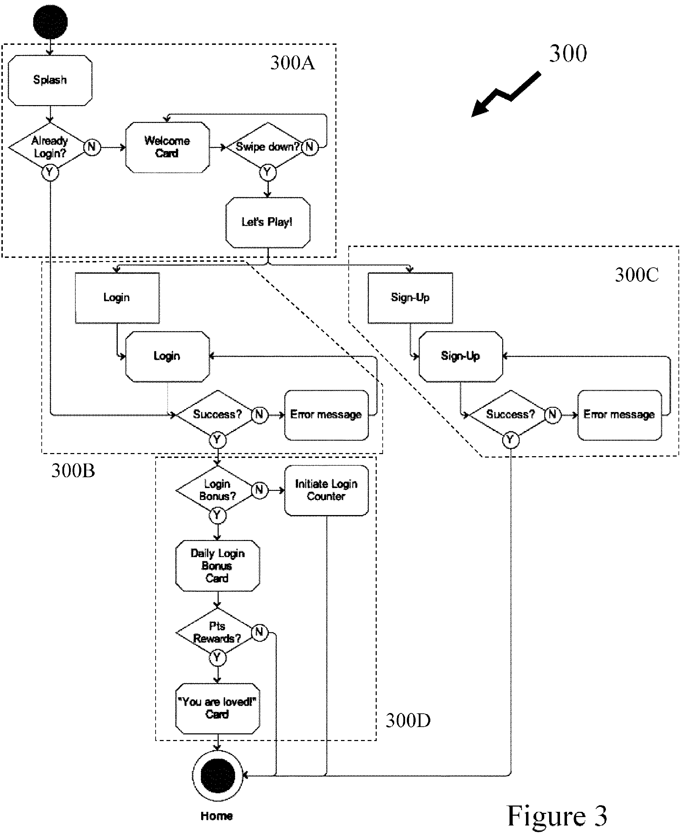

Accordingly, whilst embodiments of the invention are described below in respect of a Figures 3 to 33 with respect to a CONTENT accessing a MCSSAP according to embodiments of the invention with respect to devices such as smartphones, tablets, laptops etc. with good graphic display capabilities the embodiments of the invention may be implemented within other PEDs and / or FEDs without such graphics capabilities, e.g. generic cellular telephones, that are also supported by the communications network described *supra* in respect of Figure 1. Accordingly a CONTENT exploiting less graphical and / or non-graphical based FEDs and / or PEDs within first and second user groups 100A and 100B may be supported via the MCSSAP features and their communications via the network 100 to first and second servers 190A and 190B respectively. For example, rather than a graphical user interface (GUI) within an application hosted and launched upon the CONTENT's PED and / or FED then communications may be performed through one or more other channels including, but not limited to, rendering the content (e.g. text and / or images) for the GUI into an electronic message, e.g. email, text, or SMS according to the capabilities of the CONTENT's PED and / or FED. Similarly, multiple elements within the content to be rendered on a GUI may be reduced to a series / set of electronic messages such that, for example, a set of 10 cards each relating to a different microaction are rendered as an email, 10 SMS messages, etc.

Within embodiments of the invention a microaction may be linked to a NFC communication, e.g. validated / verified as completed by the user obtaining a code stored within an NFC tag deployed at a predetermined location. Similarly, a NFC link with a terminal, kiosk, POS terminal, POS handheld etc. may provide for the transmission of a microaction in addition to the distribution formats discussed supra in respect of the MCSSAP GUI, SMS, texts, email etc. Similarly, verification of microactions may require acquisition of data from a tag, device, terminal, etc. via NFC communications which is then provided back to the MCSSAP etc. for verification / completion monitoring and MCSSAP updating. In other embodiments of the invention, the NFC communications may be employed to provide a user with a communications node for communications to the MCSSAP, for example, via a wired interface wherein the environment of the microaction does not permit wireless communications, e.g. within an underground structure, an area of poor or no wireless coverage, within a metallic framed / clad building etc.

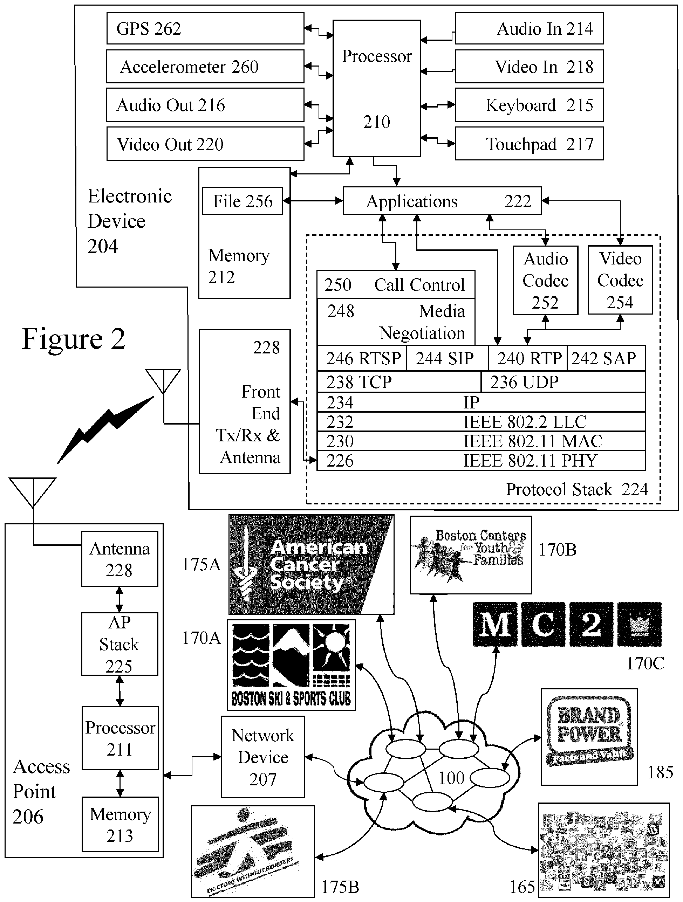

Now referring to Figure 2 there is depicted an electronic device 204 and network access point 207 supporting MCSSAP features according to embodiments of the invention. Electronic device 204 may, for example, be a PED and / or FED and may include additional elements above and beyond those described and depicted. Also depicted within the electronic device 204 is the protocol architecture as part of a simplified functional diagram of a system 200 that includes an electronic device 204, such as a smartphone 155, an access point (AP) 206, such as first AP 110, and one or more network devices 207, such as communication servers, streaming media servers, and routers for example such as first and second servers 190A and 190B respectively. Network devices 207 may be coupled to AP 206 via any combination of networks, wired, wireless and/or optical communication links such as discussed above in respect of Figure 1 as well as directly as indicated. Network devices 207 are coupled to network 100 and therein Social Networks (SOCNETS) 165, Social Networks (SOCNETS) 165, first and second user networks 170A and 170B respectively, e.g. Boston Ski & Sports Club and Boston Centers for Youth & Families, MCSSAP provider 170C, e.g. MCSSAP PROVIDER^{™}, and first to second charity communities 175A and 175B respectively, e.g. American Cancer Society and Doctors without Frontiers. Also depicted in promoter / advertiser 185, e.g. Brand Power^{™}.

The electronic device 204 includes one or more processors 210 and a memory 212 coupled to processor(s) 210. AP 206 also includes one or more processors 211 and a memory 213 coupled to processor(s) 210. A non-exhaustive list of examples for any of processors 210 and 211 includes a central processing unit (CPU), a digital signal processor (DSP), a reduced instruction set computer (RISC), a complex instruction set computer (CISC) and the like. Furthermore, any of processors 210 and 211 may be part of application specific integrated circuits (ASICs) or may be a part of application specific standard products (ASSPs). A non-exhaustive list of examples for memories 212 and 213 includes any combination of the following semiconductor devices such as registers, latches, ROM, EEPROM, flash memory devices, non-volatile random access memory devices (NVRAM), SDRAM, DRAM, double data rate (DDR) memory devices, SRAM, universal serial bus (USB) removable memory, and the like.

Electronic device 204 may include an audio input element 214, for example a microphone, and an audio output element 216, for example, a speaker, coupled to any of processors 210. Electronic device 204 may include a video input element 218, for example, a video camera or camera, and a video output element 220, for example an LCD display, coupled to any of processors 210. Electronic device 204 also includes a keyboard 215 and touchpad 217 which may for example be a physical keyboard and touchpad allowing the user to enter content or select functions within one of more applications 222. Alternatively the keyboard 215 and touchpad 217 may be predetermined regions of a touch sensitive element forming part of the display within the electronic device 204. The one or more applications 222 that are typically stored in memory 212 and are executable by any combination of processors 210. Electronic device 204 also includes accelerometer 260 providing three-dimensional motion input to the process 210 and GPS 262 which provides geographical location information to processor 210.

Electronic device 204 includes a protocol stack 224 and AP 206 includes a communication stack 225. Within system 200 protocol stack 224 is shown as IEEE 802.11 protocol stack but alternatively may exploit other protocol stacks such as an Internet Engineering Task Force (IETF) multimedia protocol stack for example. Likewise AP stack 225 exploits a protocol stack but is not expanded for clarity. Elements of protocol stack 224 and AP stack 225 may be implemented in any combination of software, firmware and/or hardware. Protocol stack 224 includes an IEEE 802.11-compatible PHY module 226 that is coupled to one or more Front-End Tx/Rx & Antenna 228, an IEEE 802.11-compatible MAC module 230 coupled to an IEEE 802.2-compatible LLC module 232. Protocol stack 224 includes a network layer IP module 234, a transport layer User Datagram Protocol (UDP) module 236 and a transport layer Transmission Control Protocol (TCP) module 238.

Protocol stack 224 also includes a session layer Real Time Transport Protocol (RTP) module 240, a Session Announcement Protocol (SAP) module 242, a Session Initiation Protocol (SIP) module 244 and a Real Time Streaming Protocol (RTSP) module 246. Protocol stack 224 includes a presentation layer media negotiation module 248, a call control module 250, one or more audio codecs 252 and one or more video codecs 254. Applications 222 may be able to create maintain and/or terminate communication sessions with any of devices 207 by way of AP 206. Typically, applications 222 may activate any of the SAP, SIP, RTSP, media negotiation and call control modules for that purpose. Typically, information may propagate from the SAP, SIP, RTSP, media negotiation and call control modules to PHY module 226 through TCP module 238, IP module 234, LLC module 232 and MAC module 230.

It would be apparent to one skilled in the art that elements of the electronic device 204 may also be implemented within the AP 206 including but not limited to one or more elements of the protocol stack 224, including for example an IEEE 802.11-compatible PHY module, an IEEE 802.11-compatible MAC module, and an IEEE 802.2-compatible LLC module 232. The AP 206 may additionally include a network layer IP module, a transport layer User Datagram Protocol (UDP) module and a transport layer Transmission Control Protocol (TCP) module as well as a session layer Real Time Transport Protocol (RTP) module, a Session Announcement Protocol (SAP) module, a Session Initiation Protocol (SIP) module and a Real Time Streaming Protocol (RTSP) module, media negotiation module, and a call control module. Portable and fixed electronic devices represented by electronic device 204 may include one or more additional wireless or wired interfaces in addition to the depicted IEEE 802.11 interface which may be selected from the group comprising IEEE 802.15, IEEE 802.16, IEEE 802.20, UMTS, GSM 850, GSM 900, GSM 1800, GSM 1900, GPRS, ITU-R 5.138, ITU-R 5.150, ITU-R 5.280, IMT-1000, DSL, Dial-Up, DOCSIS, Ethernet, G.hn, ISDN, MoCA, PON, and Power line communication (PLC).

Now referring to Figure 3 there is depicted a process flow 300 for micro-crowd sourcing systems and micro-crowd sourcing applications / platforms (MCSSAPs) during initialization. As depicted process flow 300 comprises first to fourth sub-flows 300A to 300D respectively. Upon launch in first sub-flow 300A a determination is made as to whether the user is already logged in or not wherein if not the process executes to display a welcome card, determine whether the user swipes down, and displays a "Let's Play" card before progressing to either second sub-flow 300B if the user is already a member and third sub-flow 300C if the user is not registered. Whilst the process is installing and making this determination a "splash" screen is displayed to the user. If the user was logged in already the process proceeds to second sub-flow 300B. Where the flow proceeds to second sub-flow 300B then the user's login credentials are checked to decide whether the user may be logged in or not. If positive determination the process proceeds to fourth sub-flow 300D otherwise it loops for new credentials. The user may, for example, have already been logged into a social media website which would trigger first sub-flow 300A to direct immediately to second sub-flow 300B.

In third sub-flow 300C the user is prompted to sign-up to the MCSSAP wherein a successful registration proceeds to the home screen otherwise the process loops within third sub-flow 300C. In fourth sub-flow 300D for registered users the process decides whether they are due a login bonus, e.g. logged in for three days sequentially, logged in five times in a day, logged in more than 50% of a predetermined period of time, e.g. a month, a quarter, or just a pseudorandomly generated number meets a predetermined criteria. If not, the login counter is updated as the process proceeds to display the home screen otherwise the process displays a daily login bonus card and proceeds to decide if reward points are applied or not. If they are, a "You are loved" card is displayed.

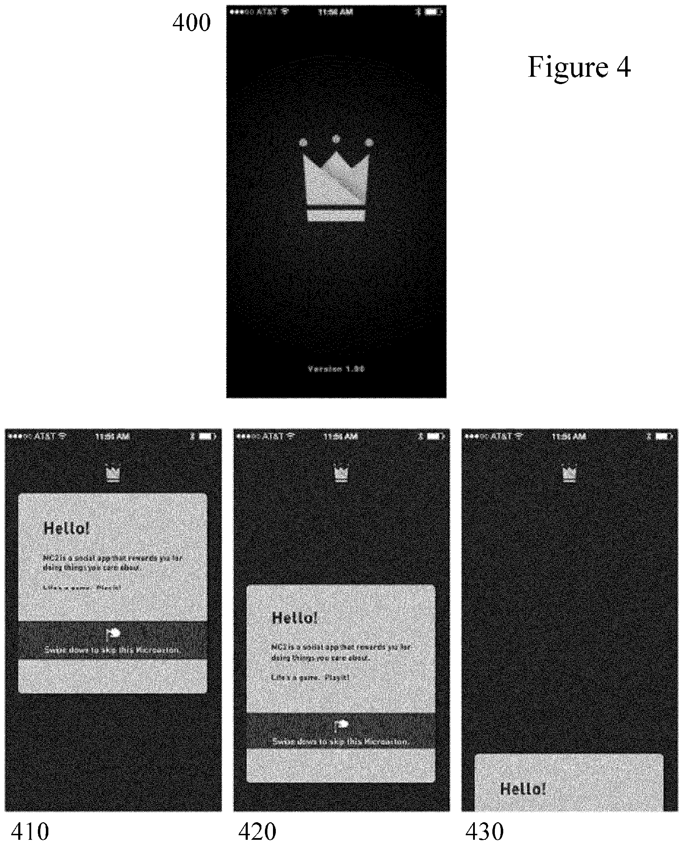

Referring to Figure 4 there are depicted:
- Splash screen 400
- Welcome card 410
- First transition card 420, being the welcome card after user swipe down gesture detected;
- Second transition card 430, being part of a swipe animation after the user swipe down gesture is detected.
- Plays MCSSAP PROVIDER Crown Animation as depicted in Figure 4 with first screen image 400.

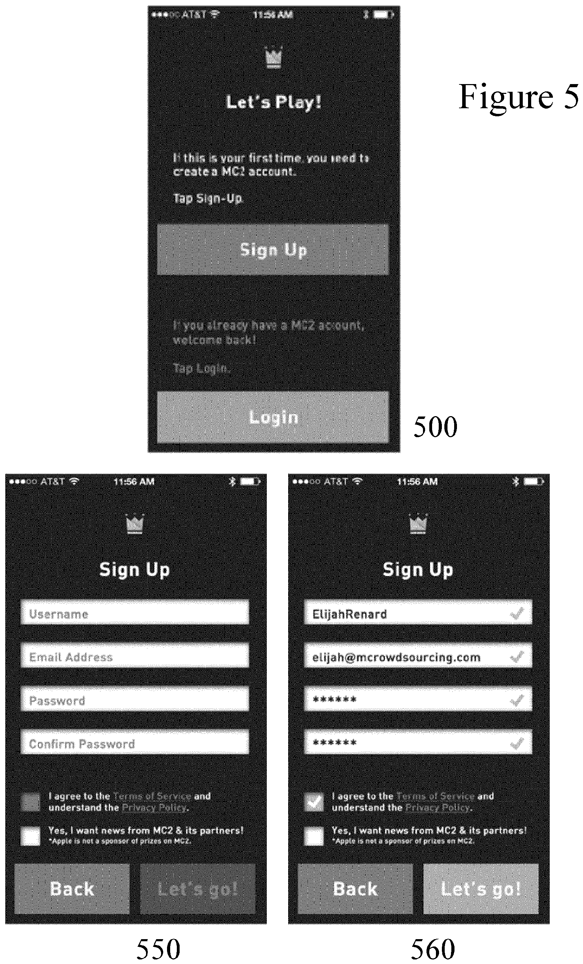

Referring to Figure 5 there are depicted "Let's Play" card 500 presented to the user within first sub-flow 300A of Figure 3 and first sign-up card 550 presented to the user initially in third sub-flow 300C of Figure 3. First sign-up card 550 comprises mandatory requirements for the user registration such as username, valid email address (which may be verified), valid and confirmed password meeting MCSSAP requirements, and completion of a checkbox that the user agrees to the terms and conditions. Links within the displayed text associated with the check box link directly to corresponding screens for terms of service, privacy policy, etc. At this point the user cannot access the MCSSAP as no data has been evident. However, as evident in second sign-up card 560 in Figure 5 once these fields have been completed by a user then they are able to enter the MCSSAP, in the example shown via the "Let's Go" button icon that is now "illuminated" and selectable.

The MCSSAP's user interface (UI) is made of Screens and Cards. According to an embodiment of the invention screens are static elements displayed in the background whilst cards are displayed on top of a screen, and can be swiped by the user. Alternatively, screens may be displayed on top of each other and swiped. Within one embodiment of the invention a swipe down, e.g. defined as a default gesture to navigate within a MCSSAP, leads to the navigation to a next screen. A swipe up gesture may be defaulted to open carousels of cards, and swipe left/right gesture to navigate through a carousel of cards, e.g. a stack of pending, active, or completed microactions (MAs). The MCSSAP detects which gesture the user has performed, and completes the swipe animation. Such a sequence of displaying a card, in this instance the Welcome Card, followed by gesture detection and swipe animation is depicted in Figure 4 with second to fourth screen images 410 to 430 respectively.

In registering the user provides a username. Rules may be applied to the username, such that for example, with an MCSSAP managed by MCSSAP PROVIDER^{™} (MCrowdsourcing Canada Inc.), usernames containing the words Admin, MCSSAP PROVIDER or MCrowdsourcing cannot be claimed unless they are official MCSSAP PROVIDER accounts, i.e. MCSSAP provider. A valid username may be length limited, e.g. cannot be longer than 15 characters, and required to only contain alphanumeric characters [letters A-Z, numbers 0-9] with the exception of underscores, e.g. @Billy is valid, @Billy_ is valid, @_Billy is valid. A username may, in some embodiments, not contain any symbols, dashes, or spaces. Usernames may be case-sensitive or not, but they respect the uppercase and lowercase letters typed by the user when registering and displaying. For an MCSSAP without case sensitivity @Billy and @billy are the same user but may be displayed as the user entered them when registering. Usernames are unique.

With respect to email addresses then these may, for example, be validate through requiring the user to access an email sent to the email address and perform an action, e.g. reply, select a hyperlink, etc. During sign-up, the user must type their password twice, as the MCSSAP runs a verification to confirm that both entries are identical in order to avoid typographical issues etc. As noted, the user must accept the MCSSAP terms of service and privacy policy by tapping on a checkbox although in another embodiment of the invention the acceptance may be implied or by default of progressing to use the MCSSAP. Optionally, the user in registering may accept to receive news from the MCSSAP and its partners which may, for example, be via an opt-in to receive emails from MCSSAP and its partners.

Within an embodiment of the invention the user may connect one or more social networks, e.g. their Facebook^{™} account or Twitter^{™} account, wherein the MCSSAP retrieves names, profile photographs, etc. from whichever account is enabled first or the account enabled by the user and selected. Within the former embodiment if the user has connected Facebook^{™}, then Twitter^{™}, MCSSAP uses the Facebook^{™} profile photograph whereas if the user has connected Twitter^{™}, then Facebook^{™}, MCSSAP uses the Twitter^{™} profile multimedia content. Optionally, a user may skip "Social" section of registration by tapping a "Skip" button / icon. The MCSSAP may request access to the user's location which is enabled by a checkmark against a checkbox and a prompt, for example.

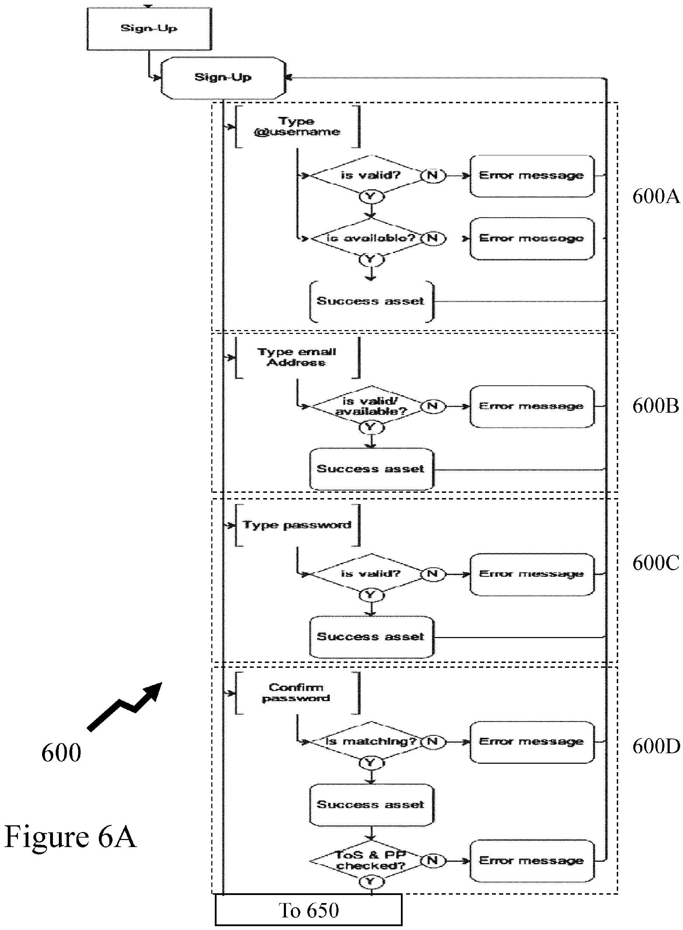

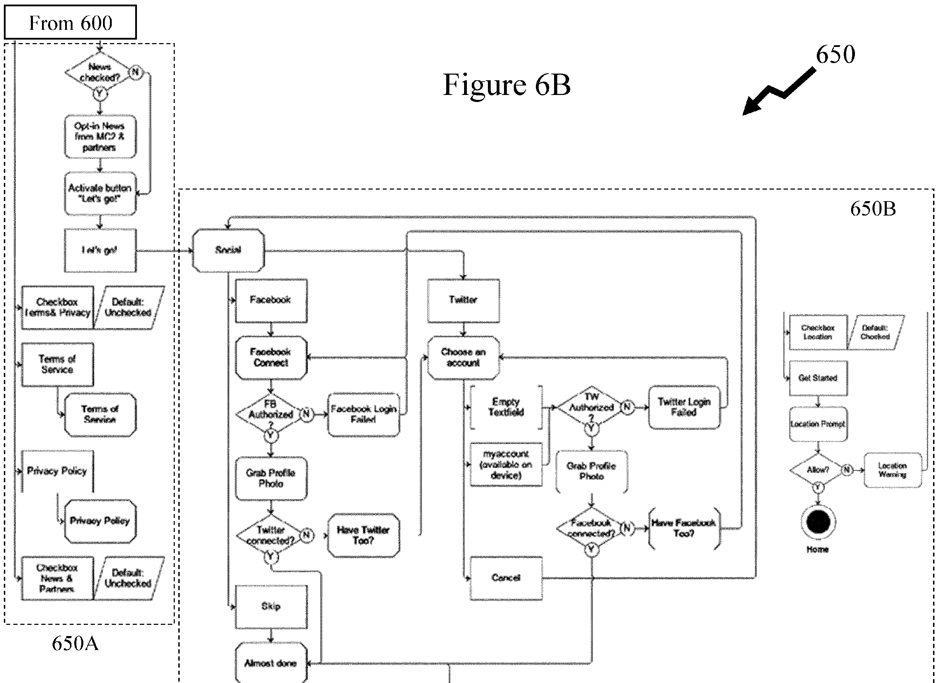

Referring to Figures 6A and 6B there are depicted sign-up process sub-flows 600 and 650 for a MCSSAP according to an embodiment of the invention. As depicted process sub-flow 600 comprises first to fourth flows 600A to 600D respectively, wherein these represent:
- First flow 600A relates to entry of the user's username according to the rules of the MCSSAP;
- Second flow 600B relates to entry of the user's email address according to the rules of the MCSSAP, wherein verification is not displayed for clarity;
- Third flow 600C relates to entry of the user's password according to the rules of the MCSSAP; and
- Fourth flow 600D relates to entry of the user's password confirmation according to the rules of the MCSSAP.

As depicted process sub-flow 650 comprises first and second flows 650A and 650B respectively, wherein these represent:
- First flow 650A relates to determination of the user's preference for news / email notifications as well as their verification of acceptance of terms of service, privacy policy, etc.;
- Second flow 650B relates to determination of social network associations, e.g. Facebook^{™} and Twitter^{™} although other SOCNETs may be included / excluded based upon, for example, a user selection of SOCNETs they are registered with.

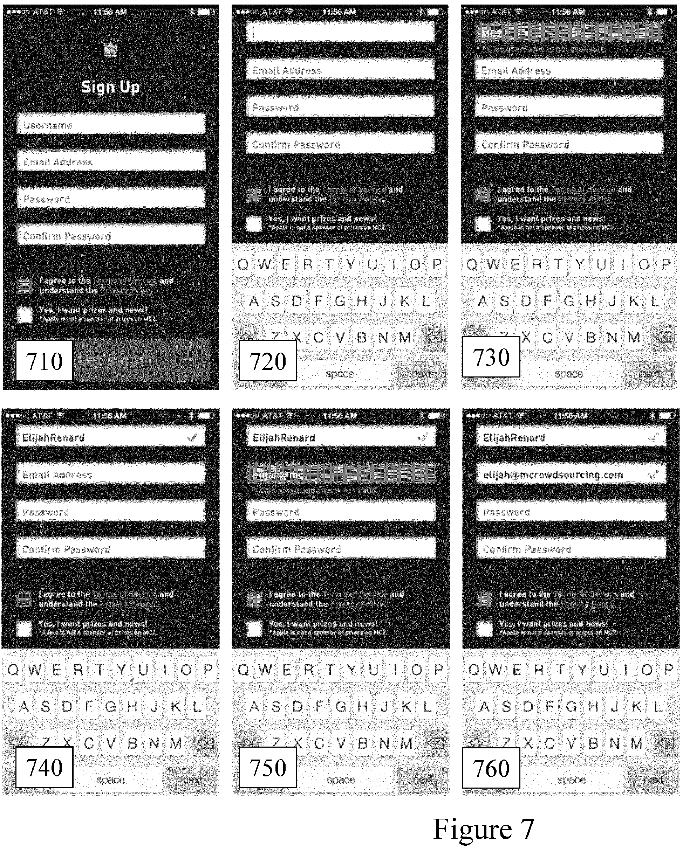

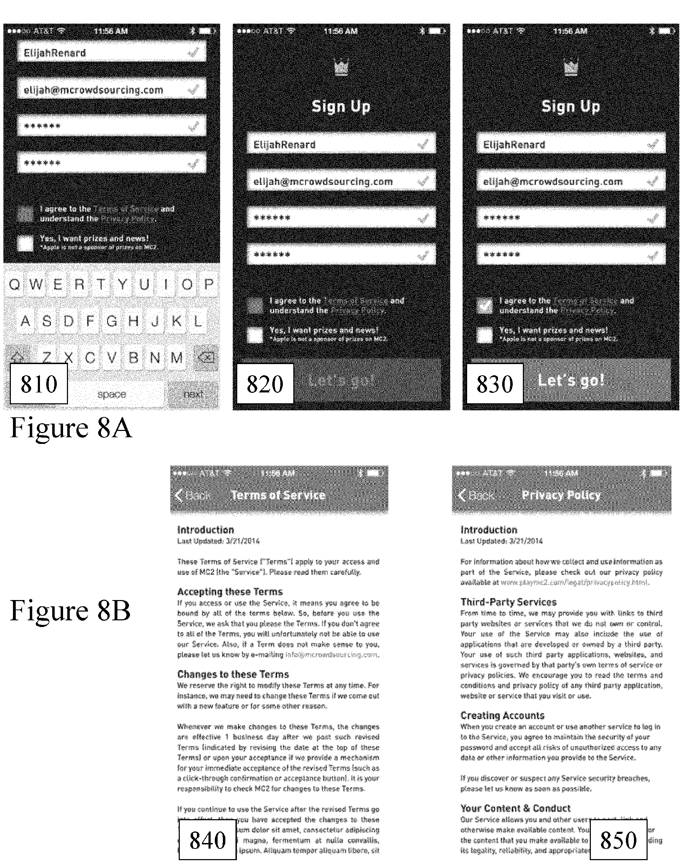

Figures 7 and 8 depict screen images presented during the sign-up process flow of Figures 6A and 6B for a MCSSAP according to an embodiment of the invention.

Referring to Figure 7 there are depicted first to sixth screen images 710 to 760 respectively, wherein
- First screen image 710 depicts a sign-up screen;
- Second screen image 720 wherein a user tap on a touchscreen, for example, triggers a touchscreen keyboard;
- Third screen image 730 wherein a username entered is not valid;
- Fourth screen image 740 wherein the user has entered a valid and available username;
- Fifth screen image 750 wherein the user has entered a non-valid email address; and
- Sixth screen image 760 wherein the user has entered a valid email address.

Referring to Figures 8A and 8B there are depicted first to fifth screen images 810 to 850 respectively, wherein
- First screen image 810 depicts a screen upon validation of the user's password;
- Second screen image 820 wherein upon all text fields being validated the keyboard is hidden;
- Third screen image 830 wherein the user has checked the checkbox associated with the terms of service;
- Fourth screen image 840 depicts an example of a screen displaying the MCSSAP terms of service if the user enables the hypertext link within the registration screen; and
- Fifth screen image 850 depicts an example of a screen displaying the MCSSAP privacy policy if the user enables the hypertext link within the registration screen.

Accordingly, when a user taps on any of the text fields within first screen image 710, the keyboard appears, shifting the content up as depicted in second screen image 720. The "Let's go!" button is enabled when all text fields are filled and the Terms of Service checkbox is checked. Validation of each text field may be upon tapping the enabled "Let's go!" button in an embodiment of the invention or upon the user tapping another text field implying completion of the text field they were currently entering text into. As the user starts to type the MCSSAP erases the default text. As noted *supra* the user can access the MCSSAP terms of service and privacy policy by tapping the corresponding hypertext links on the signup (registration) screen. Tapping the back feature on either of the screens depicted by fourth and fifth screen images 840 and 850 respectively returns the user to the signup screen.

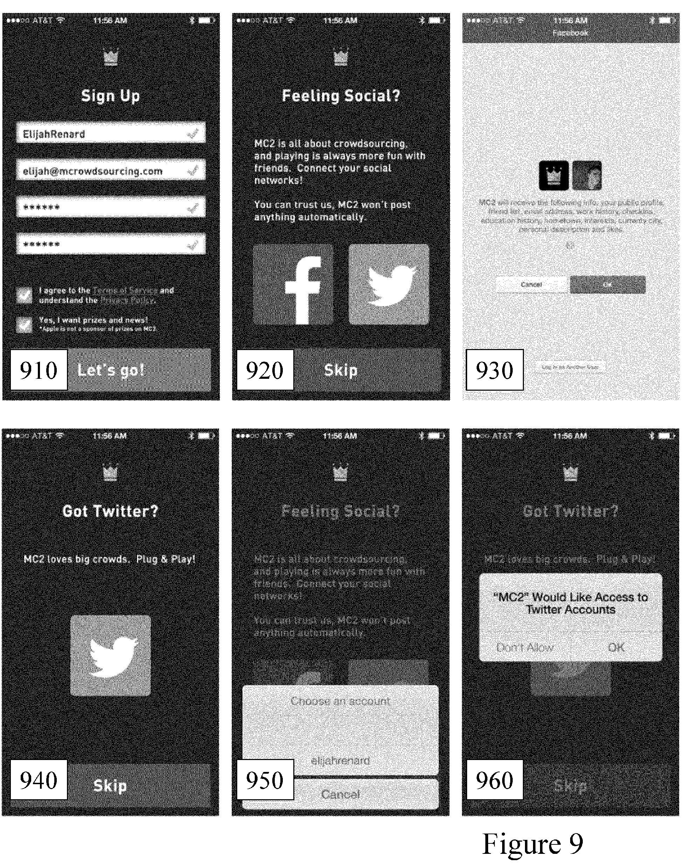

Now referring to Figure 9 there are depicted first to sixth screen images 910 to 960 respectively, wherein
- First screen image 910 depicts a signup screen wherein the user has checked the second checkbox indicating that they wish to receive prizes and news (which as indicated within the terms of service and privacy policy allows the MCSSAP to share user data with third party sponsors, advertisers, promoters, prize giving enterprises, etc.);
- Second screen image 920 wherein upon completing their registration correctly the user is presented with a SOCNET page allowing the user to link their MCSSAP registration and membership to their SOCNETs or skip (as indicated Facebook^{™} and Twitter^{™} logs are presented although other SOCNETs, different numbers of SOCNETs, and different means of selecting one or more SOCNETs as known within the art);
- Third screen image 930 wherein the user has tapped the Facebook^{™} icon in second screen image 920 wherein the MCSSAP launches Facebook^{™} Connect wherein the user enters their Facebook^{™} credentials to login and associate / authorise the MCSSAP;
- Fourth screen image 940 wherein the MCSSAP asks the user if they wish to associate their Twitter^{™} account after the association of their Facebook^{™} account;
- Fifth screen image 950 wherein the user has tapped the Twitter^{™} icon in fourth screen image 940 wherein the MCSSAP launches a sub-menu wherein the user can select their Twitter^{™} account and if appropriate enter credentials to login and associate / authorise the MCSSAP; and
- Sixth screen image 960 wherein the MCSSAP through a pop-up sub-menu requests confirmation of access to the user's Twitter^{™} account.

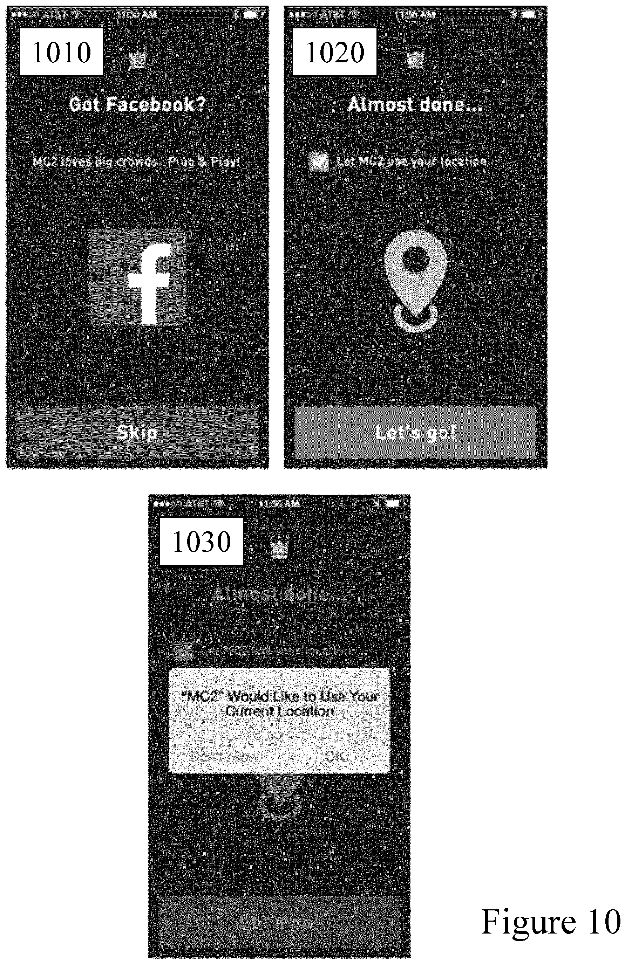

Now referring to Figure 10 there are depicted first to third screen images 1010 to 1030 respectively, wherein
- First screen image 1010 depicts an alternate screen to that depicted in fourth screen image 940 in Figure 9 wherein if the user had elected to associate Twitter^{™} initially they are prompted to associate their Facebook^{™} account;
- Second screen image 1020 depicts a screen presented to the user after completion of their SOCNET associations or their selection of "skip" in second screen image 920 in Figure 9 wherein the user may enable access of their geolocation information by the MCSSAP;
- Third screen image 1030 depicts a screen presented to the user upon the user checking the checkbox that they accept access of their geolocation information by the MCSSAP wherein the user must make a second confirmation to allow the MCSSAP to access their current location.

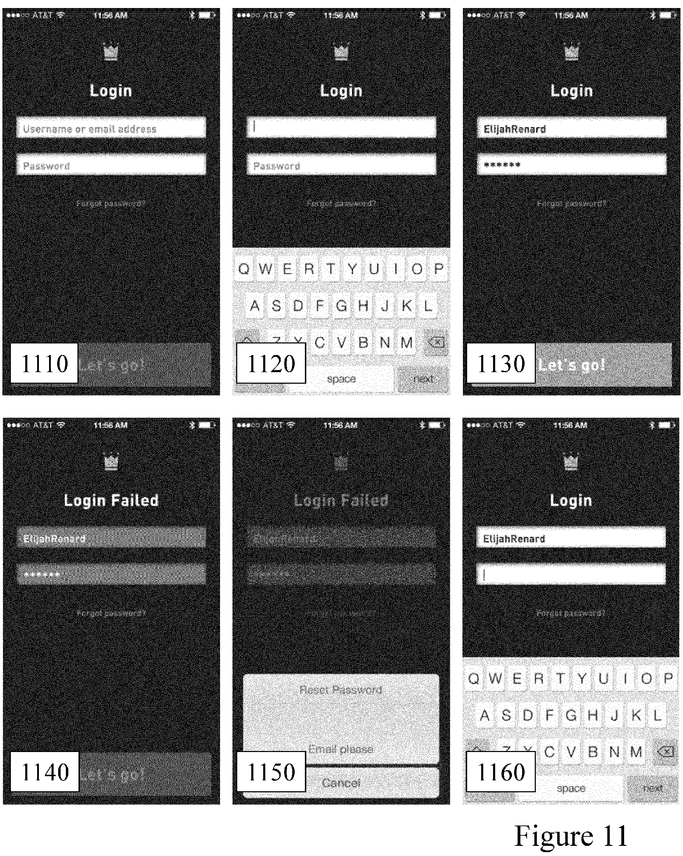

With respect to the logging in process described *supra* in respect of Figure 3 then once a user has logged in they are automatically logged in upon subsequent launches of the MCSSAP application until they manually logout or remove the MCSSAP from their device as evident from first sub-flow 300A. Upon logging in the user is initially presented with first screen image 1110 in Figure 11 wherein they are required to type their username or email address together with their password. Upon selection of a text field to enter data then the screen transitions to second screen image 1120 wherein a keyboard is displayed to the user upon their touchscreen interface on their device. Once both fields are completed then third screen image 1130 is presented with the "Let's go!" button enabled. On each screen a "Forgot Password" link is presented. In the event that the login fails then fourth screen image 1140 is presented with the text fields visually changed. Optionally, if one of the username / email address or password is incorrect then only that field within fourth screen image 1140 may be indicated to the user. If the user selects the "Forgot Password" link then they are presented with fifth screen image 1150 wherein they are prompted to reset their password via an email to the email address provided upon their registration with the MCSSAP. Where the user retries then sixth screen image 1160 is presented with pop-up keyboard etc. in a similar manner to second screen image 1120.

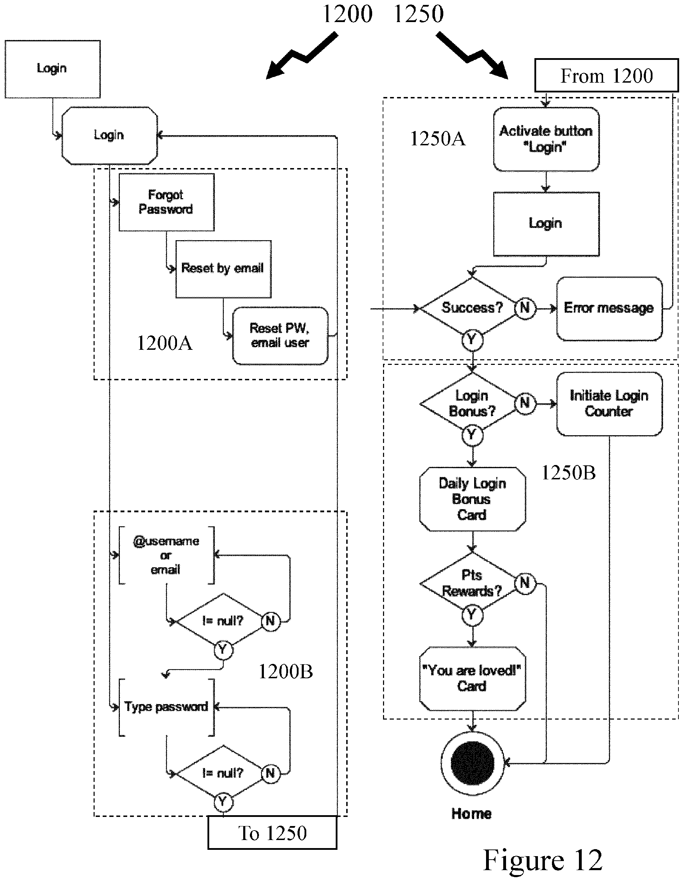

Now referring to Figure 12 there is depicted a log-in process flow comprising first and second flows 1200 and 1250 for a MCSSAP according to an embodiment of the invention wherein in first flow 1200 first and second sub-flows 1200A and 1250 represent the processes of resetting their password and entering the username / email and password. As indicated once the user enters their username / email the process then proceeds to their entering the password but does not provide the reciprocal process. Optionally, the reciprocal process may be provided. Upon completion of their username / email and password then third sub-flow 1250A in flow 1250 checks the information and provides access to the MCSSAP or displays an error screen such as depicted by fourth screen image 1140 in Figure 11 for example. Once logged in then the process proceeds with fourth sub-flow 1250B in second flow1250 to determine whether the user receives a login bonus or not. If not the process proceeds directly to the home screen otherwise the user is presented with a daily bonus login card before determining whether or not the user is due additional points reward points arising from microactions and / or other actions by other users within the MCSSAP performed are to be given to the user or not. A positive determination results in a "You are loved" card being displayed to the user and their points being increased otherwise the process proceeds directly to the home screen.

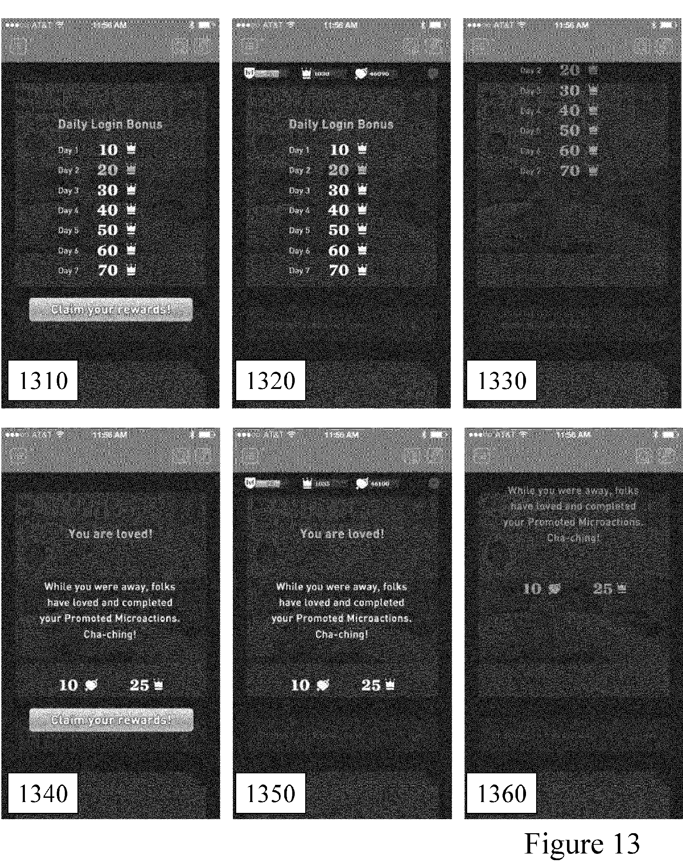

Accordingly, in first to third screen images 1310 to 1330 in Figure 13 examples of the daily login bonus card and points redemption is presented to the user. Within the embodiments of the invention described in respect of Figures 1 to 33 references to "Crowns" are made. These being a visual indicator provided in respect of points rewarded or being rewarded and should be read as being equivalent to points. Now referring to Figure 13 there are depicted first to third screen images 1310 to 1330 respectively, wherein
- First screen image 1310 depicts daily login bonus overlay indicating that as the number of consecutive days logging in increases the daily reward bonus and indicates the current bonus together with a "Claim your rewards" button;
- Second screen image 1320 is presented upon selection of the "Claim your rewards" button;
- Third screen image 1330 is presented as the MCSSAP transitions from second screen image 1320 to the next screen.

As depicted the login bonus grants Crowns based on the user's Login Streak:
- Day 1 =10 Crowns
- Day 2 = 20 Crowns
- Day 3 = 30 Crowns
- Day 4 = 40 Crowns
- Day 5 = 50 Crowns
- Day 6 = 60 Crowns
- Day 7 = 70 Crowns + Reset login streak to Day 1.

After the 7th day or when the user skips a day, reset the login streak to Day 1. However, it would be evident that other rewards may be presented and / or granted to the user or that the number of Crowns increases in a non-fixed manner with the number of days. Optionally, the number of days presented may be based upon the current value. Accordingly, for example days 7-14 may be presented if the user has been logged in for 10 days for example. Once the user taps the "Claim your rewards!" button, it disappears, and the Points Bar is visible, second screen image 1320 in Figure 13, and the user's points are increased. After a few seconds, the Points Bar is hidden through a transition such as depicted by third screen image 1330 in Figure 13, and the Card follows up, fading away. When the first screen image 1310 is displayed the buttons in the header are disabled and the user must tap the ""Claim your rewards!" button to continue. Alternatively, if the user does not tap the "Claim your rewards!" button then the screen disappears after a predetermined period of time and the user's points are not increased.

Where the fourth sub-flow 1250B in Figure 12 determines the user is due additional points reward points arising from microactions and / or other actions by other users within the MCSSAP performed are to be given then the screen displayed is fourth screen image 1340 in Figure 13 together with a "Claim your rewards!" button. In a similar manner to the daily bonus points once the user taps the "Claim your rewards!" button, it disappears, and the "You are loved" Points Bar is visible, fifth screen image 1350 in Figure 13, and the user's points are increased. After a few seconds, the Points Bar is hidden through a transition such as depicted by sixth screen image 1360 in Figure 13, and the Card follows up, fading away. Information from this rewards overlay sequence may be repeated as notifications to the user within an activity section of the MCSSAP.

As depicted in fourth screen image 1340 the user is presented with "Loves" and / or Crowns. "Loves" may be considered similar to Crowns and / or points but are rewarded based upon different actions by other users than those triggering Crowns, for example. According to an embodiment of the invention:
- When others have loved microactions created by the user, the user gains Loves;
- Where others have loved microactions completed by the user [submissions from the user], then the user gains Loves;
- Where another user has completed a microaction, the user completing the microaction gain Crowns; and/or
- When others have completed microactions the user who promoted them gains Crowns.

For example, Janet viewed nine microactions Giovanna completed and loved them. Bob saw a microaction Giovanna created and loved it. When Giovanna logs in tomorrow, Giovanna will have 10 "Loves" to claim.

Within another example Mike saw a microaction Giovanna created and promoted it [using 5 Crowns]. Another user saw Giovanna's promoted microaction and completed it. When Mike logins tomorrow, he has 10 Crowns to claim [twice the amount he invested] and Giovanna, when she next logs in gets 5 Crowns.

It would be evident that the rewards / points (e.g. Crowns / Loves) etc. rewarded to the originator, promoter, and executor of a microaction may be varied from those examples given. In other embodiments of the invention these may be set at fixed levels or be varied according to one or more aspects of one or more of the originator, promoter, executor and microaction. For example, a microaction may set a time limit wherein rewards are only given within the time limit. Optionally, the reward may decrease with time from the time the microaction was established, for example, or reduce based upon reduced content being provided by the executor of the microaction. Optionally, a reward may increase, for example, where the microaction is completed further from the originator and / or promoter or based upon the complexity of the microaction. Whilst embodiments of the invention are described with respect to rewards at levels and of format determined by the MCSSAP within other embodiments of the invention the reward may be established by the originator with moderation to prevent abuse. Accordingly, a user may encourage completion of an urgent microaction. Nothing within the embodiments prevents a single user being a combination of originator, promoter, and executor.

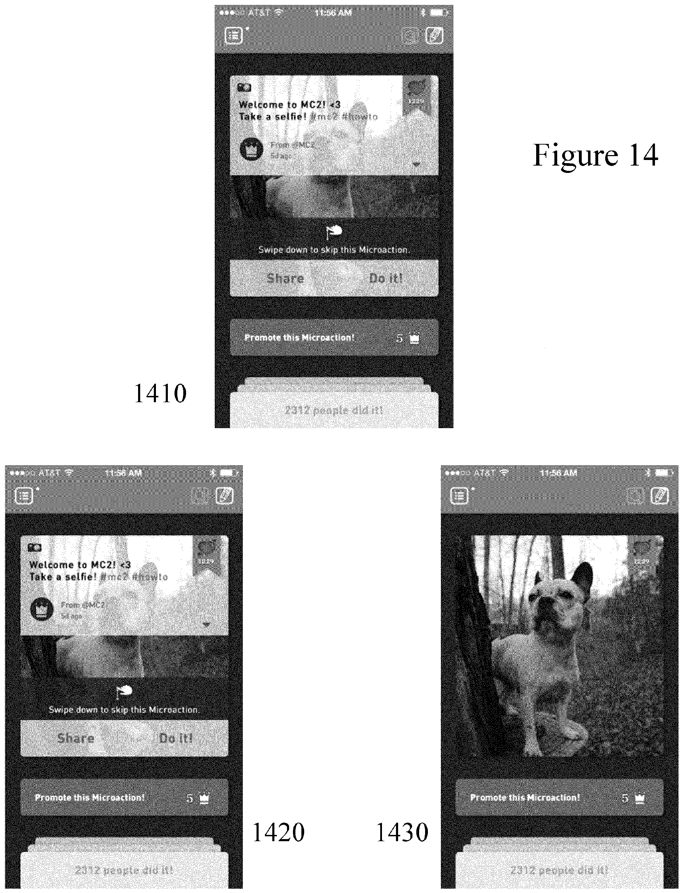

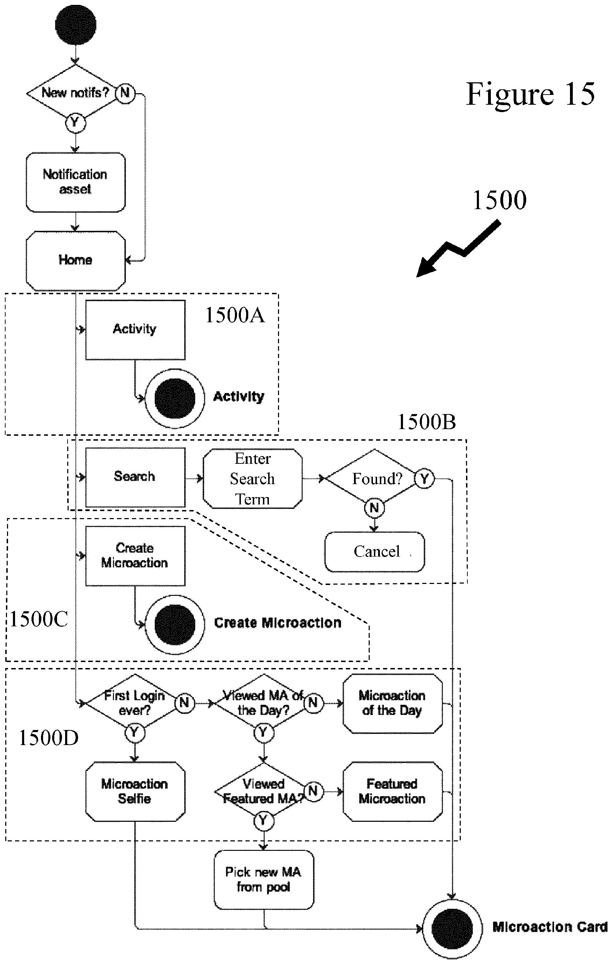

Now referring to Figure 14 there are depicted first to third screen images 1410 to 1430 relating to a home screen process flow depicted in respect of Figure 15 for a MCSSAP according to an embodiment of the invention. As depicted in first screen image 1410 the home screen comprises an activity [notifications] button, a search button, a create microaction button, and a microaction card. Optionally, the first microaction Card may be displayed under the "You are loved!" screen(s) depicted and described in respect of Figure 13. Accordingly:
- Activity button selection by the user calls the activity screen. An asset is displayed near the Activity button when the user receives notifications (this asset may also depicted to the user when they return to the home screen or ask for a new microaction);
- Search button selection takes the user to a search allowing the user to search for microactions matching one or more search terms they enter; and
- Create microaction button takes the user to a create microaction screen.

The MCSSAP displays one microaction card at a time which may, according to embodiments of the invention, be the latest microaction generated, the oldest uncompleted microaction, or randomly selected from a pool of all available Microactions. A microaction card may be discarded if the user swipes it down resulting in another microaction card (if available) being presented to the user. In an embodiment of the invention every new user may be given one or more microactions to engage them with the MCSSAP and provide essentially a tutorial to the user through their performing the microaction. For example, the first microaction card seen by every new user is a "Take a selfie" generated by an administration account / user wherein to complete the microaction the user takes a self-portrait photograph (the "selfie"). In embodiments of the invention the number of microaction cards presented by default may be varied, selected randomly from a set of default microactions, or be a microaction originating from another user who is part of a SOCNET with the user. Once the tutorial microactions has/have been completed and / or discarded then according to an embodiment of the invention a "Microaction of the Day" card may be displayed to the user and such a card may be displayed on the user's first daily login. This is a microaction selected by the MCSSAP provider and / or the MCSSAP. Optionally, the microaction may be created by any user or the user group may be filtered based upon aspects of the user including, but not limited to, geolocation, proximity, microactions completed by the user, SOCNET(s) association(s), status of the user, and time / date information. If the user discards or completes the "Microaction of the Day" then they may be presented with a "Featured Microaction" which may also be displayed during the user's first daily login.

Referring to Figure 15 a home screen process flow depicted in respect of Figure 15 for a MCSSAP according to an embodiment of the invention is presented comprising first to fourth sub-flows which respectively, from the home screen, relate to selecting an "activity" i.e. a microaction, searching for a microaction, creating a microaction, and display of microactions at first user log ins, both ever and daily. As depicted in second screen image 1420 a home screen is presented to the user comprising a microaction card. Every microaction, created and submitted, has multimedia content associated with it, e.g. an image, photograph, video. The user can tap on the microaction to hide the information overlay and view the multimedia content, as depicted in third screen image 1430. The "Love" button is always displayed. Key zones of the information overlay are mapped to other functions, such as the "Love" button, the creator's image, a "More" arrow", a "Share" button, and a "Do it!" button.

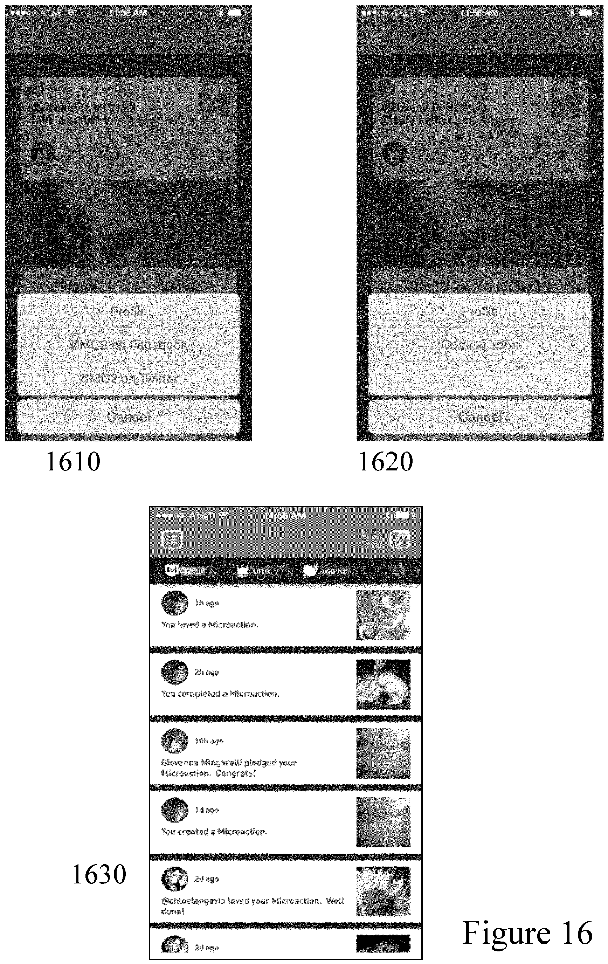

Figure 16 depicts first and second screen images 1610 and 1620 relating to a profile of a user and their activity screen (third screen image 1630) for MCSSAP according to an embodiment of the invention. When tapping on another user's profile multimedia content or username, the MCSSAP calls a default menu displaying links to the user's SOCNET accounts, if available (first screen image 1610). If no SOCNET accounts were linked, the menu reads a default text (second screen image 1620).

Third screen image 1630 relating to a user activity screen which displays sections, including but not limited to, header bar, points bar, an activity stream presented as a vertical list (other formats may be employed). Each activity within the activity list is presented by an image of the user originating the microaction or an activity associated with the microaction, a time indicator for when the microaction or activity associated with the microaction was created, a text field describing the microaction or an activity associated with the microaction, and a thumbnail of the multimedia content associated with the microaction. The header contains elements common across the MCSSAP screens including, activity button, search button, and create button which redirects to the "Create microaction" screen

The microaction of the day may be curated by the MCSSAP provider or automatically selected as described above and is displayed as the first microaction when users come into the MCSSAP application. If the user is a new user, the "Microaction of the Day" is displayed after the tutorial microaction(s). The "Microaction of the Day" is also displayed during the user's first login of the day and its priority order is shelved after being viewed by the user once. This means that if the user logins, views the Daily Login Bonus Card, taps the Activity button and leaves the MCSSAP application, the "Microaction of the Day" hasn't met the required first view to be shelved. Once shelved, the "Microaction of the Day" returns to the random pool of Microactions.

Whilst a "Microaction of the Day" may be selected and / or created by the MCSSAP provider as well as being created by any user. The MCSSAP provider can decide to mark a microaction as the "Microaction of the Day" regardless of when it was created and by whom. Optionally, the microaction may be selected in dependence upon a search term or terms established by the MCSSAP provider or based upon an event, holiday, celebration, news item, etc. Optionally, the "Microaction of the Day" may be determined for different regions, jurisdictions, municipalities, communities, user groups, SOCNET members, etc. For example, a user, Jack, created the microaction "Go to the park #nature #sunnyday" back in February. After a week of cold rain, it's sunny again and MCSSAP PROVIDER enters the search term "sunny" and the database/pool of microactions is searched and Jack's microaction marked as the "Microaction of the Day." Optionally, microactions may have time limits attached to them, e.g. a microaction "Clean the Capital May 24" presented to users having geolocation data within a predetermined range of Washington D.C. and rewarding those photographed collecting garbage, has little benefit subsequently. Time limits may be established by the user creating the microaction or may be applied by the MCSSAP provider and / or a moderator.

Similarly, the featured microaction may be selected and / or created by the MCSSAP provider and displayed to the user when the user's access the MCSSAP application. If the user is a new user, the Featured Microaction is displayed after the tutorial microaction and the "Microaction of the Day". The featured microaction is also displayed during the user's first login of the day and its priority order is shelved after being viewed by the user once. This means that if the user logins, views the daily login bonus card, views the "Microaction of the Day" card and leaves the MCSSAP application, the featured microaction is not shelved for this user but will be viewed as the first microaction when they log back in later that day. If the user only returns on the following day, then the featured microaction is displayed immediately after the "Microaction of the Day."

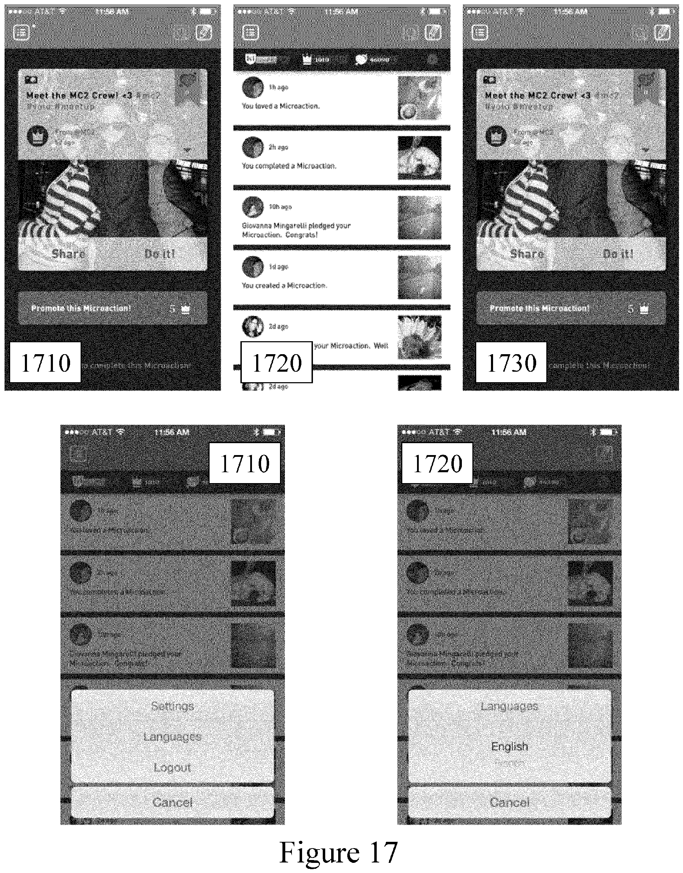

Now referring to Figure 17 there are depicted screen images relating to activity notifications for a MCSSAP according to an embodiment of the invention. Referring to first to third images 1710 to 1730 respectively depicting home screen with notification, activity screen, and home screen without notification then a dot, asset, appears next to the Activity button when the user receives a notification, see first screen image 1710. As long as the user hasn't viewed the Activity Screen, the notification asset is displayed within the Header. Once the user has viewed the Activity Screen, the Home Screen is back to displaying the Activity button without the notification dot, see third screen image 1730. In the Activity Screen, second screen image 1710, the Points Bar is displayed under the Header and above the Activity Stream. This includes, but is not limited to, a Level Shield relating the user's current level and a visual cue indicating their progression, depiction of "Crowns" as asset and current total, depiction of "Love" as asset and current total, and a gear icon which represents a link to the settings screen, depicted as fourth screen image 1740 and its linked screen fifth screen image 1750 relating to language preferences, Tapping the Settings button, the gear, calls a default sub-menu allowing the user to change settings, e.g. Languages, or Logout. The Languages calls a default operating system menu, listing all available languages.

Within the activity stream there are presented the user's activity and notifications, from newest to oldest. Table 1 lists the type of events tracked, along with the content of a notification.

**Table 1**

| Notification | Profile | Time Stamp | Default Text | Thumbnail | Re-Direction |
|---|---|---|---|---|---|
| Microaction Completed by User | Profile Owner | Yes | "You completed a Microaction" | Display User's Photo Submission | Link to User Submission |
| Microaction Created by User | Profile Owner | Yes | "You created a Microaction" | Display Microaction's Photo | Link to Microaction |
| Microaction Loved by User | Profile Owner | Yes | "You loved a Microaction" | Display Microaction's Photo | Link to Loved Microaction (Original or Submission) |
| Microaction Promoted by User | Profile Owner | Yes | "You promoted a Microaction" | Display Microaction's Photo | Link to Microaction |
| sMicroaction Completed by Other User | Person's Photo | Yes | "[Person's Name] completed your Microaction" | Display Other User's Photo Submission | Link to Other User's Submission |
| Microaction Promoted by Other User | Person's Photo | Yes | "[Person's Name] promoted your Microaction" | Display Microaction's Photo | Link to User Submission |
| Microaction Loved by Other User | Person's Photo | Yes | "[Person's Name] loved your Microaction" | Display Microaction's Photo or User Submitted Photo | Link to Loved Microaction (Original or Submission) |

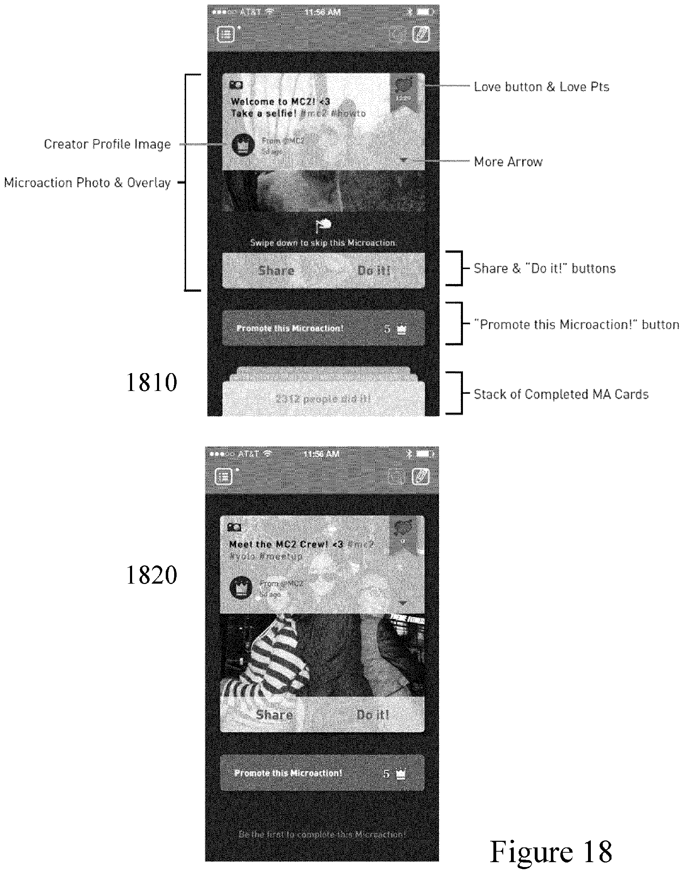

Figure 18 depicts a first screen image 1810 relating to a microaction card for a MCSSAP according to an embodiment of the invention. Each microaction card contains the following elements:
- The microaction [text], up to 140 characters;
- The profile multimedia content of its creator
- The username of its creator
- The time since creation (e.g. 1h, 5d, 2m, 5y);
- The Love button
- The amount of Loves;
- The Microaction multimedia content;
- The "More" arrow;
- The "Share" button;
- The "Do it!" button;
- "Share this Microaction!" button OR "Promoted by @username" button; and
- A stack of cards at the bottom of the screen, representing the "They did it!" carousel

The Profile Multimedia Content - typically extracted from a SOCNET of user, e.g. whichever the user connected first. If the user hasn't connected a social account, the profile multimedia content displayed may be a default image which will be provided from MCSSAP PROVIDER or a multimedia content uploaded by the user directly into the application. Tapping on the creator's multimedia content calls a sub-menu with links to their social accounts, if available. Accordingly, during login the MCSSAP application updates the user's multimedia content during login, thereby displaying the most recent image used on the connected social account.

The Love Button - has three states:
- "Disabled" - the user is viewing their own microaction, the Love button is disabled;
- "Default" - the user hasn't loved the microaction yet; and
- "Loved" - the user has loved the microaction, the button is disabled and its final state is displayed. This asset is different than the one used for the Disabled state.

The Microaction Multimedia Content - displayed under the text overlay. The user can tap anywhere on the microaction card toggle between the multimedia content view and a text view, that is anywhere except on another button.

The More Arrow - calls a sub-menu allowing the user to report the microaction. This may be modified in so-called "white labelled" versions of the MCSSAP application to yield flags / reporting features.

The Share Button - calls a sub-menu allowing the user to share on a SOCNET, e.g. Facebook^{™} or Twitter^{™}. If the microaction creator had entered a link during the microaction creation then that link is shared on the SOCNET. When applicable, the microaction's multimedia content is also shared.

The "Do it!" Button - calls a completing microaction sequence such as described below.

The "Promote this Microaction!" Button - calls the Promote Screen, allowing the user to promote a microaction. Promoting costs Crowns, e.g. 5. Optionally, the user may commit more Crowns to a microaction to encourage others to complete the microaction as they are rewarded with the number of Crowns associated with a microaction.

The "Promoted by @username" Button - displays the Promoter's @username and profile multimedia content, if available. Tapping on the Promoter's username or multimedia content calls a sub-menu with links to their social accounts, if available. If the Promoter doesn't have a profile multimedia content, it displays default image, which will be provided by MCSSAP provider or uploaded by the Promoter.

The Stack of Cards - displays the total amount of submissions, e.g. "X people did it!". When the user can tap on the stack or swipe it up to see the completed microaction carousel. When nobody has completed the microaction, the text "Be the first to complete this microaction!" is displayed to incite the user to be the first to complete the Microaction, as indicated in second screen image 1820 in Figure 18.

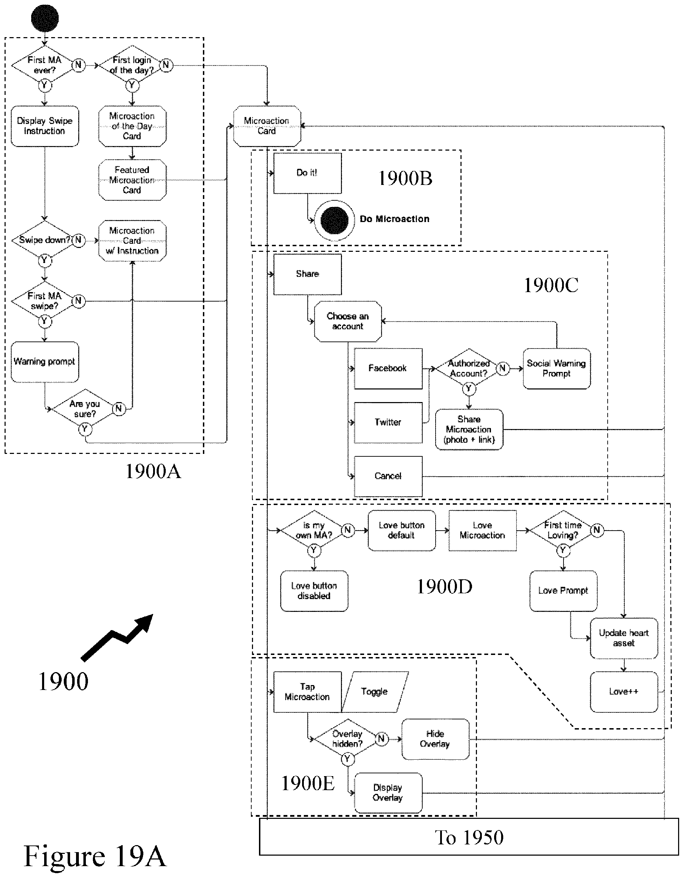

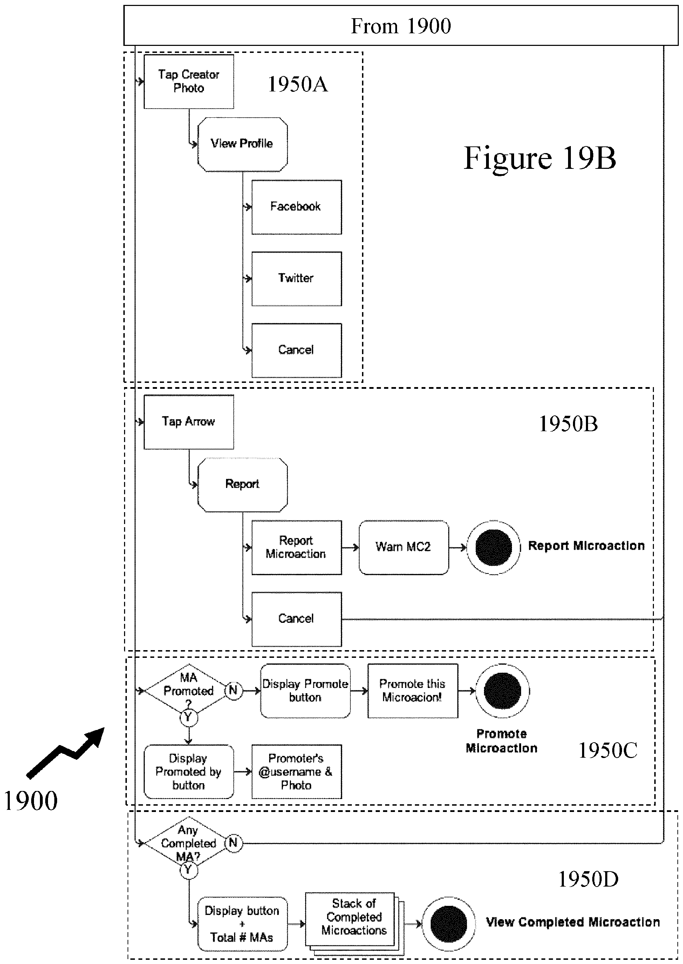

Now referring to Figures 19A and 19B there is depicted a microaction card process flow for a MCSSAP according to an embodiment of the invention comprising first to fifth sub-flows 1900A to 1900E in first flow 1900 and sixth to ninth sub-flows 1950A to 1950D in second flow 1950. These provide:
- First sub-flow 1900A controls the sequence of initial cards presented to the user;
- Second sub-flow 1900B triggers a do microaction sub-flow when the user selects the "Do It!" button;
- Third sub-flow 1900C controls sharing of the microaction to SOCNETs;
- Fourth sub-flow 1900D controls the user's ability to Love a microaction;
- Fifth sub-flow 1900E controls the toggling of the microaction display overlay and multimedia content;
- Sixth sub-flow 1950A controls acquisition of the creator multimedia content;
- Seventh sub-flow 1950B controls the tap arrow functionality;
- Eighth sub-flow 1950C controls the promotion of a microaction;
- Ninth sub-flow 1950D controls the display to a user of completed microactions.

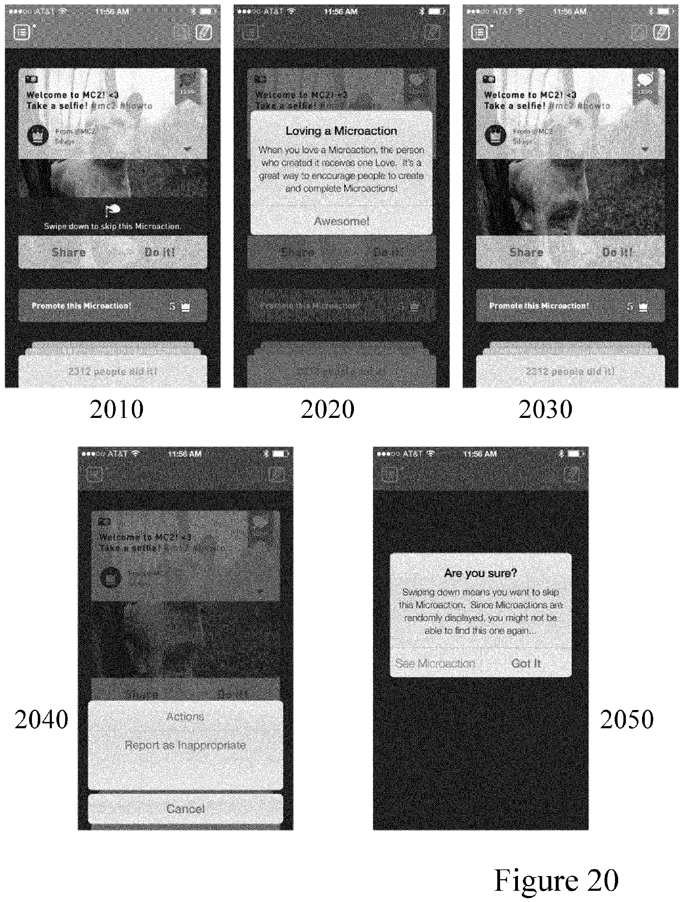

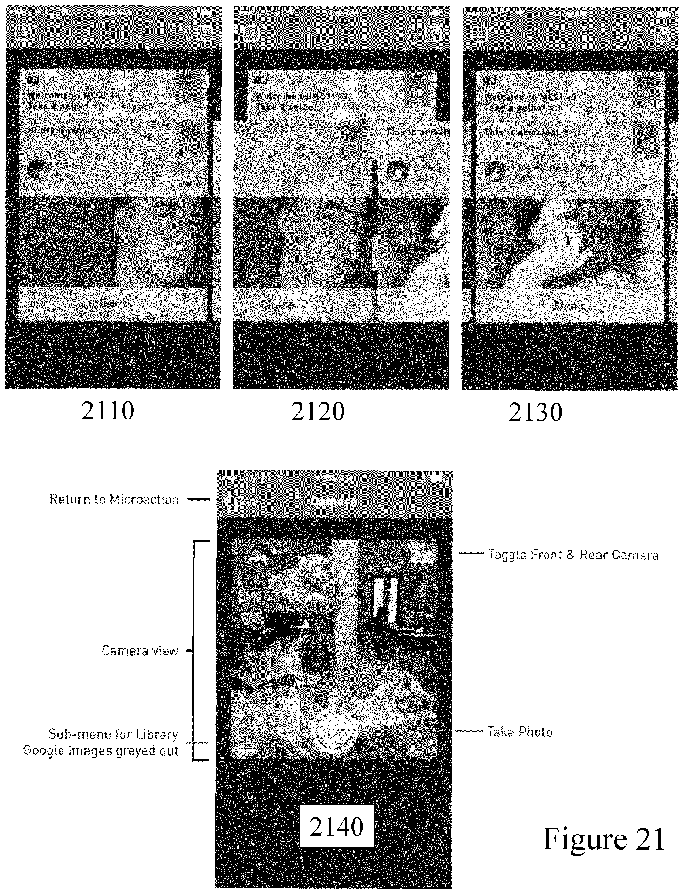

Referring to Figures 20 and 21 there are depicted first to fifth screen images 2010 to 2050 and sixth to eighth screen images 2110 to 2130 respectively relating to microaction cards and a microaction for a MCSSAP according to an embodiment of the invention. These relate to:
- First screen image 2010 depicts the view for a user viewing a microaction;
- Second screen image 2020 depicts a user loving a microaction for the first time;
- Third screen image 2030 depicts a Loved microaction;
- Fourth screen image 2040 depicts the screen after a user has tapped on the "More" arrow;
- Fifth screen image 2050 depicts a confirmation screen presented to a user the first time swiping a card down;
- Sixth screen image 2110 depicts a user viewing the tutorial microaction where this was to take a "selfie";
- Seventh screen image 2120 depicts a user swiping sideways through completed microactions; and
- Eighth screen image 2130 depicts the view for a user having selected to view another user's completed microaction, in this case their tutorial "selfie" microaction.

Sixth to eighth screen images 2110 to 2130 depict actions of a user with respect to a stack of completed microaction cards. When the user taps on the stack of completed microaction cards, or swipes it up, the MCSSAP loads a batch of 10 completed microaction cards, ordered by Love points, highest first. If no Love points were given on any of the completed microactions, the MCSSAP displays them according to their identity, e.g. database entry. The first microaction will be the most "Loved" microaction. The completed microaction cards are displayed above the microaction card, low enough to display only the microaction text. Upon the Stack is populated with an initial batch of 10 cards, if available. When the user swipes to view the 9^{th} card, the MCSSAP loads the next batch of 10 cards so the user always view the edge of the next card, if available. The functionalities of the regular microaction card apply to each individual card of the stack. Optionally, the number of cards within the stack may be varied to different predetermined values, e.g. 5, 20, 21, etc. or alternatively the number may be established in dependence upon characteristics of the user and / or the device they are accessing the MCSSAP on. For example, a user who historically is logged as viewing a large number of completed microaction cards may have the batch size adjusted up whilst another who rarely views the stack of completed microaction cards may have a lower batch size. Optionally, the size of a batch may be varied according to the user's context, geolocation, network connectivity, etc.

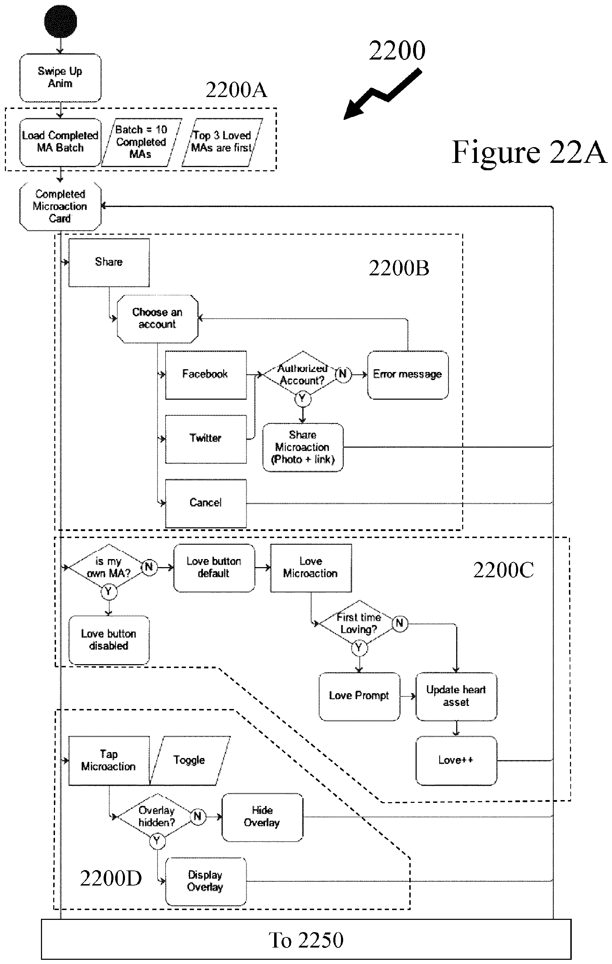

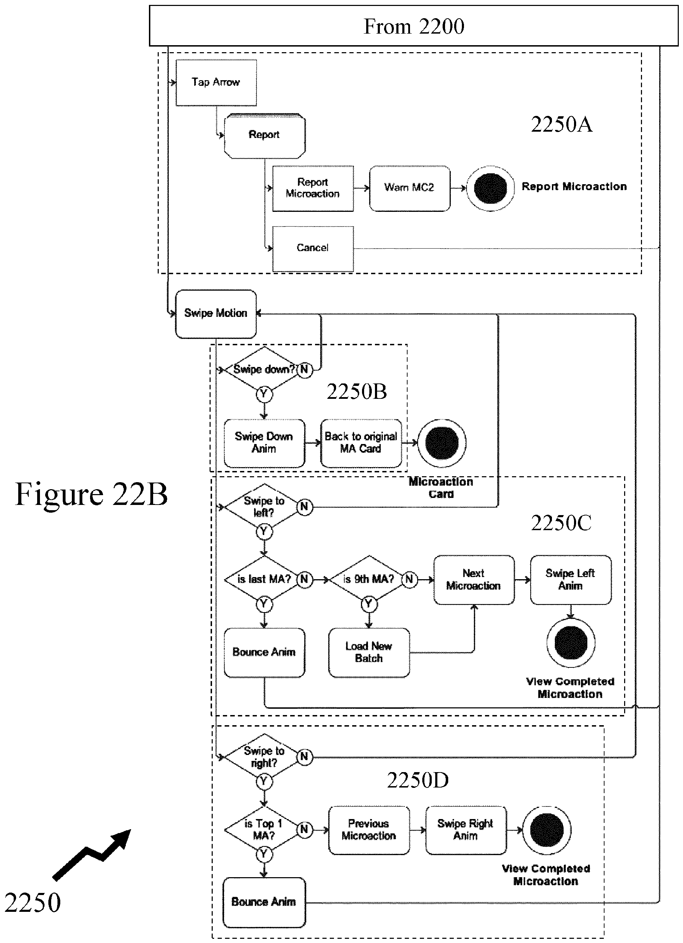

Figures 22A and 22B depict a microaction carousel process flow for a MCSSAP according to an embodiment of the invention comprising first to fourth sub-flows 2200A to 2200D in first flow 2200 and fifth to eighth sub-flows 2250A to 2250D in second flow 2250. These provide:
- First sub-flow 2200A controls the loading of the initial card batch presented to the user;
- Second sub-flow 2200B controls sharing of a completed microaction to one or more SOCNETs;
- Third sub-flow 2200C controls the user's ability to Love a completed microaction;
- Fourth sub-flow 2200D controls the toggling of the microaction display overlay and multimedia content for a completed microaction;
- Fifth sub-flow 2250A controls the tap arrow functionality in respect of a completed microaction card;
- Sixth sub-flow 2250B controls the swipe down functionality with respect to a completed microaction card;
- Seventh sub-flow 2250C controls the swipe left functionality with respect to a completed microaction card;; and
- Eighth sub-flow 2250D controls the swipe right functionality with respect to a completed microaction card.

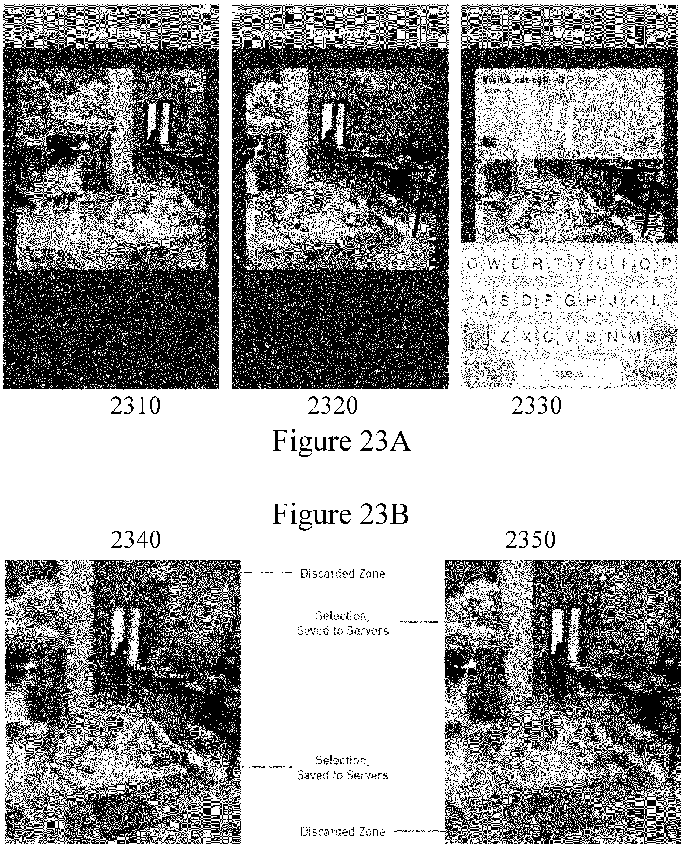

Figures 23A and 23B depicts screen images relating to performing microactions for a MCSSAP according to an embodiment of the invention. To complete a microaction, the user typically will perform the following sequence of using a camera, cropping the image, and writing a comment. With the camera the user can take a multimedia content or multimedia contents and pick one or pick an image from their device's gallery to associate with the completed microaction. Within cropping the user can align the selected / acquired image on the microaction card frame by modifying the image's horizontal and vertical position. Optionally, resizing and rotating may be applied in other embodiments of the invention. The mask may be predefined by the MCSSAP application. Finally in writing a comment the user can type up to 140 characters and add a link. A character capacity is represented by a dark grey circle which behaves like a pie-chart, filling clock-wise with orange as the user types. Any word starting with a hashtag, the # symbol, is highlighted and stored as a tag for searching against. Accordingly, a user may be able to search for hashtags associated with microactions, to follow people, to follow action - quests wherein any future microactions with the same combination of hashtags are automatically associated with the user and displayed to them.

Fourth screen image 2140 in Figure 21 and first to fifth screen images 2310 to 2350 depict respectively in Figures 23A and 23B:
- Fourth screen image 2140 shows the screen presented as the user accesses the device's camera;
- First screen image 2310 shows the start of a cropping process applied to a captured image;
- Second screen image 2320 shows the framed multimedia content which can be moved laterally and vertically;
- Third screen image 2330 depicts the user writing their comment;
- Fourth screen image 2340 depicts an example of cropping; and
- Fifth screen image 2350 depicts an example of reframing a selection.

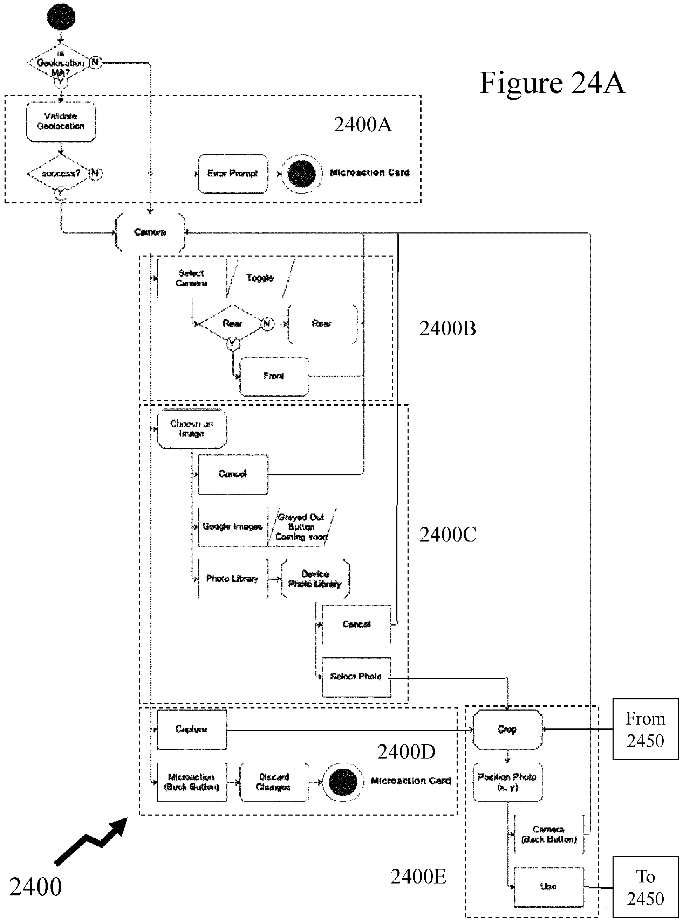

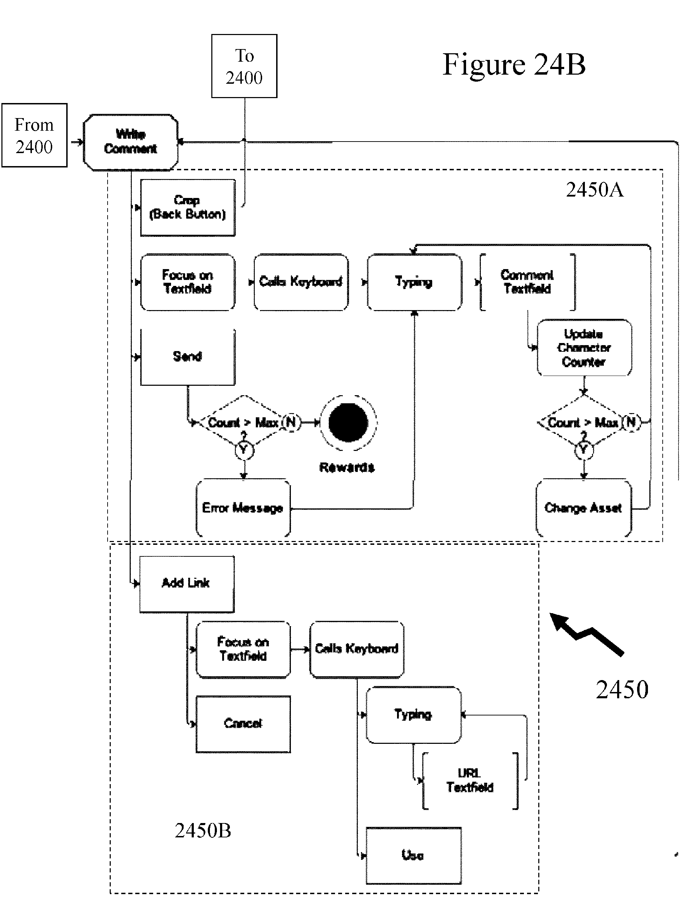

Figures 24A and 24B depict a microaction carousel process flow for a MCSSAP according to an embodiment of the invention comprising first to fifth sub-flows 2400A to 2400E in first flow 2400 and sixth and seventh sub-flows 2450A and 2450B in second flow 2450. These provide:
- First sub-flow 2400A controls the acquisition of geolocation data;
- Second sub-flow 2400B controls the selection of the camera on the device for taking an image;
- Third sub-flow 2400C controls the acquisition of an image from Google Images, Multimedia content Library etc. rather than user's own camera;
- Fourth sub-flow 2400D controls the capture of an image using the selected camera;
- Fifth sub-flow 2400E controls the cropping of an image;
- Sixth sub-flow 2450A controls the writing of a comment in respect of a completed microaction;
- Seventh sub-flow 2450B controls the addition of a link to the completed microaction.

Optionally, where the device only has a single camera or no camera then the MCSSAP may disable access to features / functions that have no use. Optionally, in addition to lateral / vertical motion of the multimedia content during the cropping scaling and / or rotation may be applied to the multimedia content.

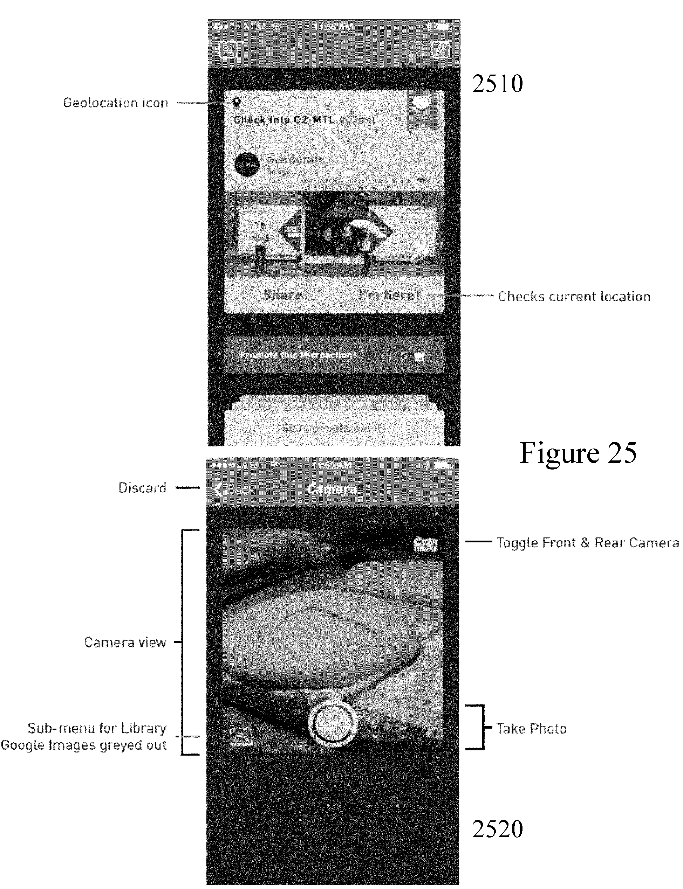

Figure 25 depicts a screen image relating to a geo-location microaction for a MCSSAP according to an embodiment of the invention. With respect to geo-location based microaction if a user has not accepted having their location acquired by the MCSSAP then they will be able to view geolocation microactions. For a geolocation microaction the user is presented with a screen such as first screen image 2510 in Figure 25 and they must then complete the sequence of steps comprising:
- Hit the "I'm Here" button;
- Take a multimedia content;
- Crop the multimedia content;
- Accept the cropped multimedia content; and
- Write a comment, optional for user.

If the geolocation step failed or the user is not within a predetermined range of the specified location for the microaction then the system displays a "Keep Going" prompt and the user is brought back to the microaction card.

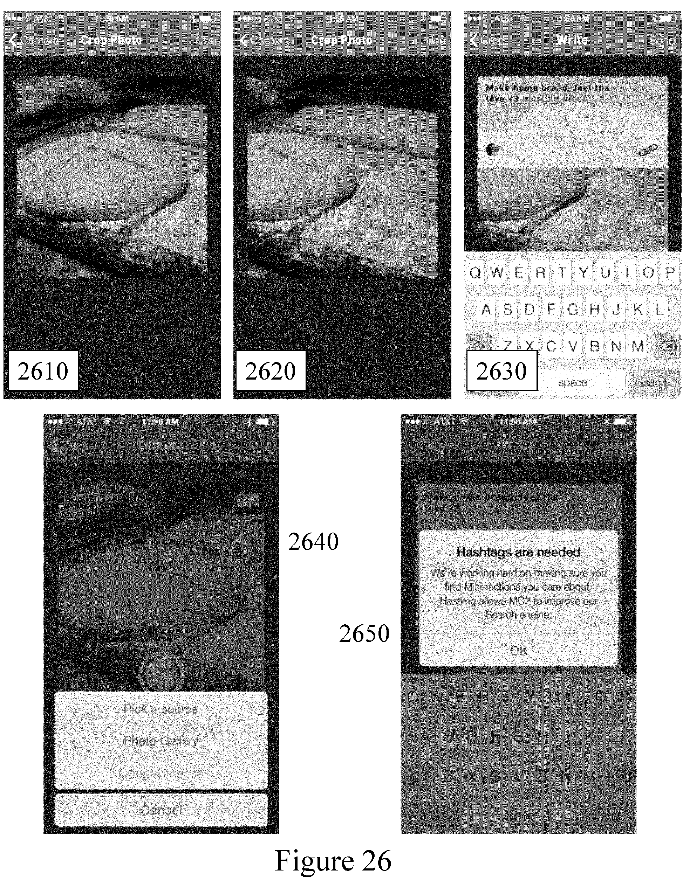

Referring to second screen image 2520 in Figure 25 and first to fifth screen images 2610 to 2650 in Figure 26 then these relate to creating microactions for a MCSSAP according to an embodiment of the invention. With respect to creating a microaction then the user executes the steps encompassing:
- Hit the "Create" icon;
- Camera;
- Crop the multimedia content;
- Accept the cropped multimedia content;
- Write the microaction; and
- Add a link.

Accordingly, with the Camera the user can take a multimedia content or pick an image from their device's gallery or an online resource. In cropping the multimedia content the user can align the multimedia content to the microaction card frame by moving the multimedia content laterally and vertically. Optionally, in addition to lateral / vertical motion of the multimedia content during the cropping scaling and / or rotation may be applied to the multimedia content. Once the cropped multimedia content is accepted by the user then they write the microaction which is up to 140 characters and add a link. The MCSSAP checks to see if any of the microaction text includes any hashtags. If none are present a prompt explains why they must type at least one hashtag for filtering / searching and returns the user to edit the microaction. The user can only create one microaction at a time. Optionally, the MCSSAP may allow for creation and scheduling / saving of microactions so that a user can create them ahead of time for subsequent release.

Second screen image 2520 in Figure 25 and first to fifth screen images 2610 to 2650 in Figure 26 depict respectively:
- Second screen image 2520 shows a create microaction for a user;
- First screen image 2610 shows the start of a cropping process applied to a captured image;
- Second screen image 2620 shows the framed multimedia content which can be moved laterally and vertically;
- Third screen image 2630 depicts the user writing the microaction;
- Fourth image 2640 depicts an example of selecting a source for a multimedia content within a microaction; and
- Fifth screen image 2650 depicts an example of the hashtag warning screen presented to a user.

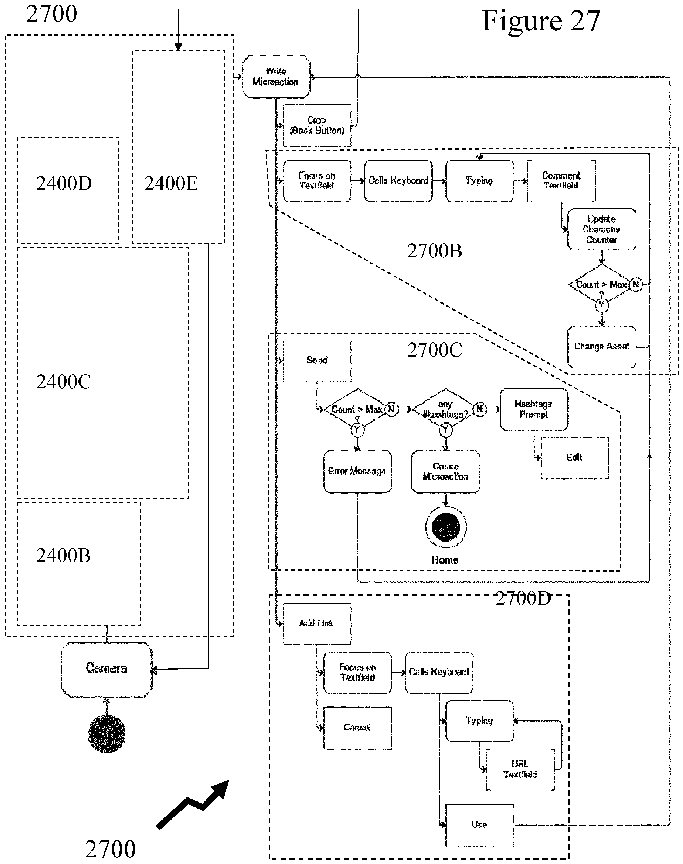

Now referring to Figure 27 there is depict a microaction generation process flow for a MCSSAP according to an embodiment of the invention comprising first to fourth sub-flows 2700A to 2700D in flow 2700. As depicted first sub-flow 2700A comprises second to fifth sub-flows 2400B to 2400E of first flow 2400 in Figure 24. Remaining sub-flows comprise:
- Second sub-flow 2700B controls the text entry phase of creating the microaction;
- Third sub-flow 2700C controls the verification of the message size, hashtag content, etc.; and
- Fourth sub-flow 2700D controls the addition of a link to the created microaction.

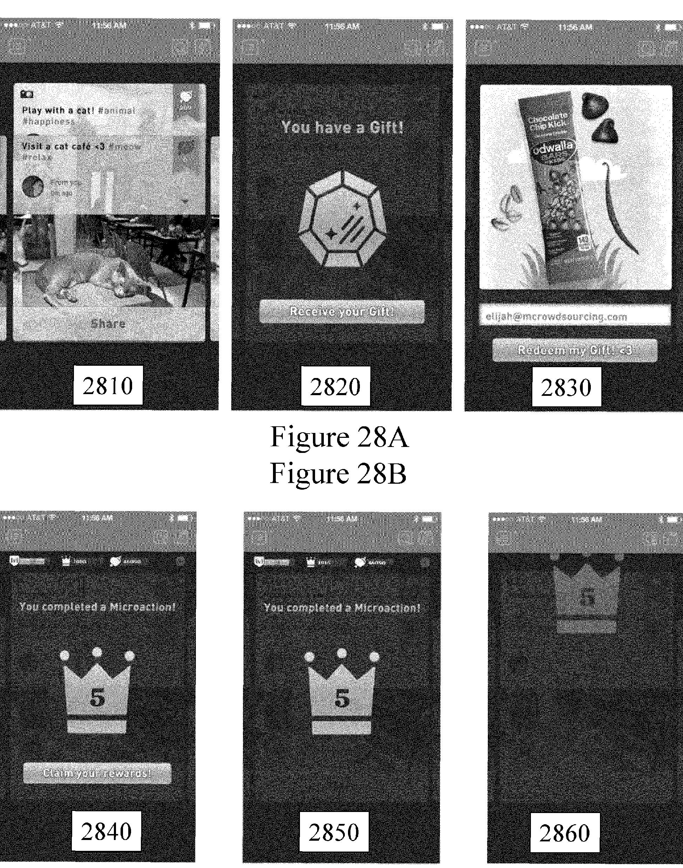

Now referring to Figures 28A and 28B respectively there are depicted first to sixth screen images 2810 to 2860 respectively relating to rewards associated with a microaction for a MCSSAP according to an embodiment of the invention. These depict:
- First screen image 2810 shows completion of a microaction;
- Second screen image 2820 depicts the initial stage of a reward;
- Third screen image 2830 depicts the second stage of a reward;
- Fourth screen image 2840 depicts a full Crowns reward overlay;
- Fifth screen image 2850 depicts the reward overlay after the user taps it;
- Sixth screen image 2860 depicts the transition away as the reward assets go away.

It would be evident to one skilled in the art that rather than rewards being provided by the MCSSAP that the MCSSAP may provide external application interfaces for a plurality of other reward providers to be associated with a reward for completion of a microaction including third party providers, enterprises, sponsors, advertisers, etc. When a user completes a microaction and their submission is uploaded to the MCSSAP servers and verified the MCSSAP returns to the initial microaction screen and shows the user's completed micro-action. If an external reward has been triggered, the appropriate overlay appears on top of the expanded stack of completed micro -action cards. The user can either redeem or skip the reward, and the sequence continues. Their decision is tracked and may form part of advertiser, enterprise, third-party feedback for example. An overlay is displayed above the stack of completed micro -actions and below the header. The "Microaction Completed!" text is displayed, the Points Bar is visible, the level increments and, a few seconds later, the Crowns asset and the "Claim" button pop from the bottom of the screen. The number of Crowns may be fixed or it may be variable as discussed *supra.* When the user taps the "Claim!" button, it disappears, the Points Bar is visible and the amount of Crowns is increased. After a few seconds, the Points Bar is hidden and the assets move up and fade away. If the user received an external reward, then an external reward overlay is displayed such as "Please visit BlahBlah's blog for more details on custom notification." Optionally, the Header buttons are disabled during the Reward Sequence. The user must claim their reward to continue.

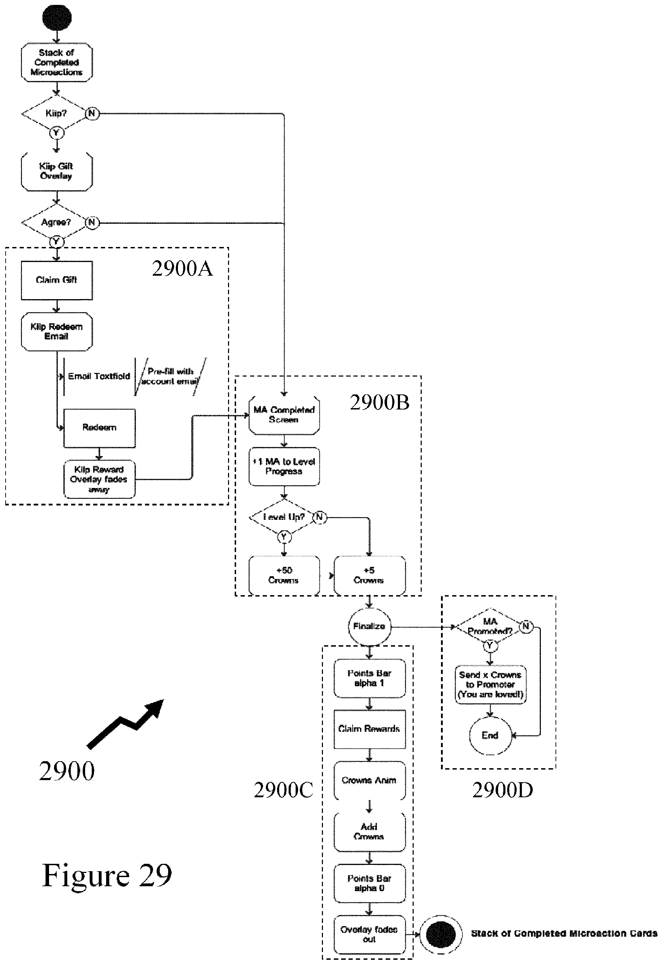

Now referring to Figure 29 there is depicted a reward process flow 2900 for a MCSSAP according to an embodiment of the invention comprising first to fourth sub-flows 2900A to 2900D respectively after an initial series of steps relating to whether the user has received an external reward / gift. These sub-flows comprise:
- First sub-flow 2900A wherein the user accepts the external reward / gift;
- Second sub-flow 2900B wherein the microaction screen is presented and a determination is made as to whether the user is levelling up or simply completing a microaction;
- Third sub-flow 2900C where the reward points are displayed and claimed by the user; and
- Fourth sub-flow 2900D wherein if the microaction was promoted then Crowns are sent to the promoter.

Within embodiments of the invention the MCSSAP may level up a user based upon a levelling formula, such as a modified Fibonacci sequence for example [*X*_{*n*-1}] + *roundup*[*X*_{*n*-2}]/2 yielding the level vs microaction table presented in Table 2.

**Table 2**

| Level | Microactions | | Level | Microactions |
|---|---|---|---|---|
| 1 | 0 | | 7 | 8 |
| 2 | 1 | | 8 | 11 |
| 3 | 2 | | 9 | 15 |
| 4 | 3 | | 10 | 21 |
| 5 | 4 | | 11 | 29 |
| 6 | 6 | | ... | ... |

With respect to points then users can gain Loves and Crowns. Users can spend (invest) Crowns in promoting a microaction. Users cannot un-love a Microaction they have loved. Users cannot Love their own Microactions. An example of a rewards table is given in Table 3.

**Table 3**

| Event | Point Type | Amount |
|---|---|---|
| Complete microaction | Crown | 5 |
| Gained a level | Crown | +50 |
| Microaction the user created is loved | Love | +1 |
| Microaction the user completed is loved | Love | +1 |
| Promote "X" on microaction | Crown | -"X" |
| Another user completes microaction user promoted | Crown | +2 ^{∗} "X" |
| .... | .... | .... |

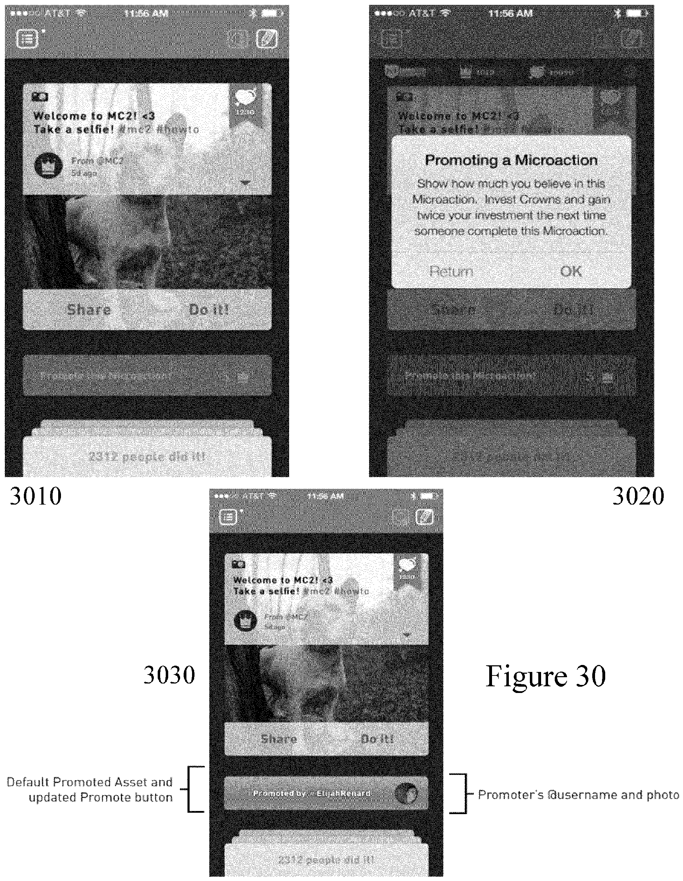

Now referring to Figure 30 there are depicted first to sixth screen images 2810 to 2860 respectively relating to promoting a microaction for a MCSSAP according to an embodiment of the invention. These depict:
- First screen image 2810 shows the instance where the user does not have enough Crowns and hence buttons are disabled;
- Second screen image 2820 shows a prompt to a user upon their first promotion activity; and
- Third screen image 2830 depicts a promoted microaction.

When viewing a microaction, the user can tap the "Promote this microaction!" button to invest a predetermined or variable number of Crowns on the microaction. In exchange for promoting the microaction, the user gets their @username and profile multimedia content displayed on the microaction as its Promoter. Within an embodiment a microaction may only be promoted by a single user at a time. Alternatively, multiple users may promote a single microaction. When tapping the "Promote this microaction!" button, the user invests the required number of Crowns into that microaction. Once the microaction is completed, the user who promoted the microaction receives the value promoting the microaction. Where a single user only may promote a microaction then once completed that microaction is then available to be promoted by other users. Where multiple promoters may be associated with a single microaction then they may promote at any time or by a deadline set by the microaction creator.

If the user doesn't have the required number of Crowns, then the "Promote this Microaction!" button is disabled.

When a microaction is promoted, the "Promote this microaction" button is updated to display a different button asset and the text includes the user's @username and their profile multimedia content. From that point forward, the microaction's Promoter, e.g. @ElijahRenard], gains say 10 Crowns, being 2 * what they invested every time someone completes that microaction until the Promotion amount has depleted. As an example, Janet promotes a microaction with 5 Crowns. These Crowns are removed from her bank, and the server stores them in the Microaction. When Bob completes the microaction, Janet receives 10 Crowns. The microaction can be promoted by someone again once the banked Crowns are removed. Promoting a microaction does not affect ordering in the pool of microactions. When a user completes a microaction they promoted, the amount invested stays in the bank and the user does not receive a promotion bonus, i.e. the user gains 5 Crowns for completing the microaction, and the bonus 10 Crowns is saved until a different user completes the microaction.

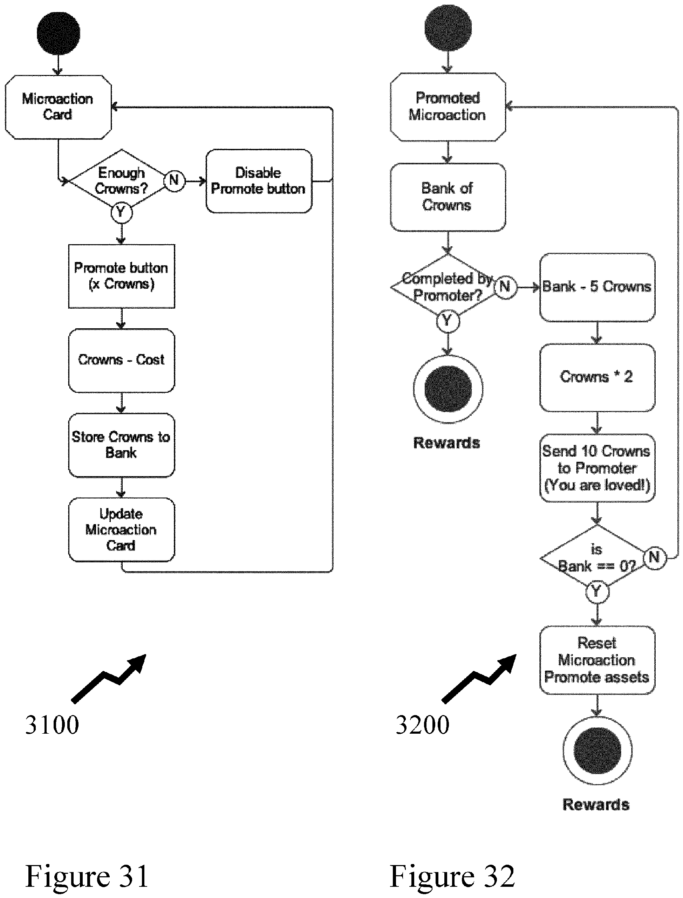

Now referring to Figures 31 and 32 there are depicted process flows 3100 and 3200 respectively relating to microaction promotion for a MCSSAP according to an embodiment of the invention. Process flow 3100 covers the step of promoting and determining whether enough Crowns are possessed by the user and the management of them when there are enough. Process flow 3200 depicts the process for completion of a microaction and the management of the Crowns rewarded. Optionally, other assets may be employed in promoting a microaction.

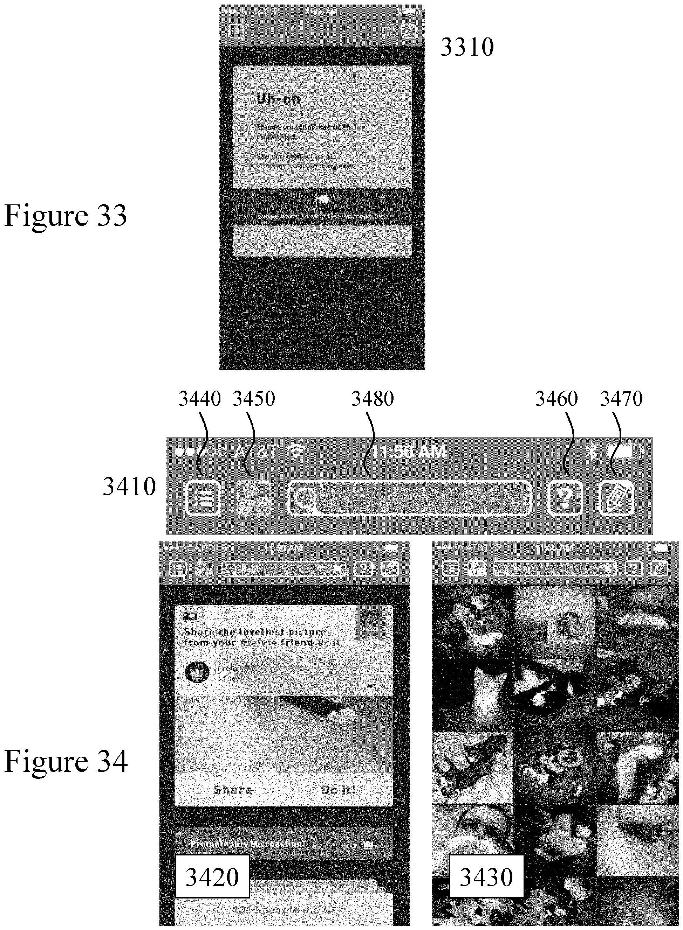

Now referring to Figure 33 there is depicted screen image 3310 relating to moderation of a microaction for a MCSSAP according to an embodiment of the invention. Where a user posts a microaction which a moderator of the MCSSAP considers inappropriate then the microaction card may be replaced by the moderation card. In other instance users may object to a moderator who will view the microaction card and decide whether to intervene or not. If they do intervene then screen image 3310 is presented in place of the microaction card.

In addition to user accounts an MCSSAP may include administration accounts allowing, for example, the administrator to adjust the following in respect of user related features:
- Reset password [manually reset the generator, which emails the user];
- Reset email address [manually change a user's email address];
- Reset username [manually change a username];
- Activate- Deactivate any account [like ban user feature, without deletion in database]; and
- Delete user multimedia content.

The administrator may also adjust the following in respect of microaction related features:
- Categorize any existing microaction as one of the Tutorial microaction, the microaction of the Day, and the featured microaction;
- View any Microaction
- Convert any microaction to a Geolocation microaction if provided coordinates and radius;
- Receive reports of inappropriate microaction [email + link to view said Microaction];
- Hide/Show any microaction [respond to report];
- Create Multimedia content microactions;
- Create Geolocation microactions; and
- Save Multimedia content microactions and Geolocation microactions [saved but not launched].

In instances of reports of inappropriate microaction(s) then when receiving an email for moderation, the administrator gets a link to the reported microaction, along with the @username of the reportee. With that information, the administrator can act and contact the reportee to inform them of the action/decision taken. When a Microaction is flagged and hidden, users cannot access it anymore, the microaction card is replaced by the Moderation Card, explaining why the microaction has gone. The microaction stays in the database and the points given/received remains as well.

The Moderation card may be thought of as a hidden microaction card such that the microaction card in question is replaced with a generic Moderation Card. At this point the Love button and Loves [sum], Promote/Promoted by and "x people did it!" sections are hidden as well.

Within the embodiments of the invention described supra the MCSSAP is primarily considered from the viewpoint of a standalone software application. However, it would be evident to one skilled in the art that the MCSSAP may interface with a range of other software systems and / or software applications. For example, user having associated their social media to the MCSSAP may be fed microactions from these other social media platforms or their completed microactions and active microactions they are undertaking may be pushed to their social media to form part of their social media feed / stream. Equally, as discussed supra, a user may acquire new microactions from an NFC enabled device within an environment such as a retail store, for example. That microaction, for example, could be donate $1 to the retailer's charity, return tomorrow and get 25% of printed tee-shirts, or join our team cleaning the neighbourhood or at a local community activity.

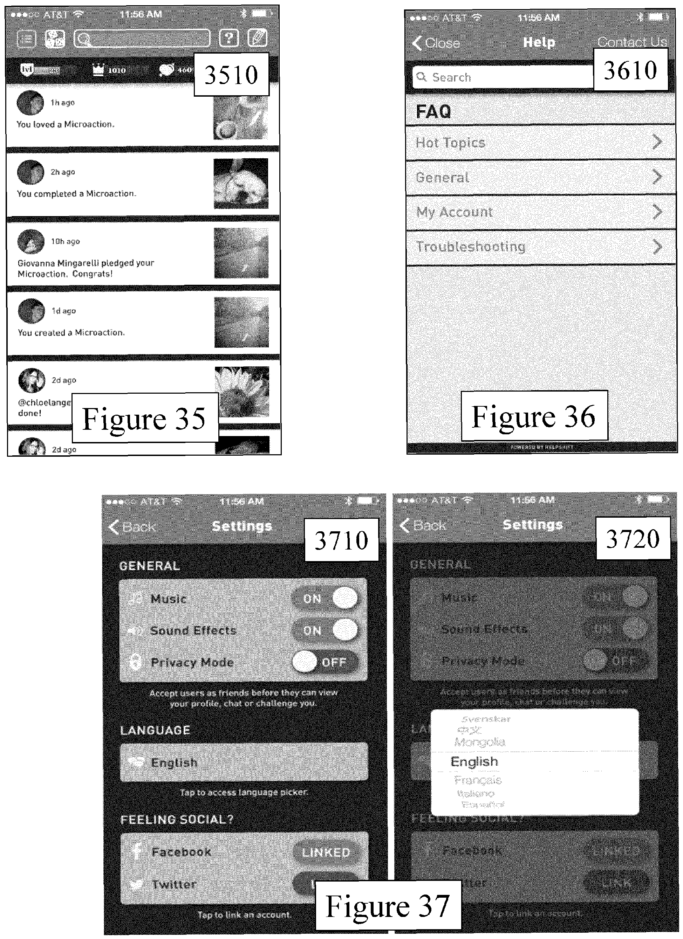

Within the preceding screen images in Figures 3 through 33 the upper toolbar has been depicted essentially absent features. Referring to Figure 34 there is depicted toolbar 3410 together with first and second screen images 3420 and 3430 relating to searching for micro-crowd content based upon a hashtag a MCSSAP according to an embodiment of the invention. As depicted in toolbar 3410 the user is presented with four toolbar icons 3440 to 3470 respectively and search field 3480. These providing:
- First toolbar icon 3440 linking the user to their activity screen such as depicted in Figure 35;
- Second toolbar icon 3450 linking the user to the home page;
- Third toolbar icon 3460 linking the user to help screen such as depicted in Figure 36;
- Fourth toolbar icon 3470 linking the user to a create microaction screen such as described in respect to the process flow in Figure 27; and
- Search field 3480 wherein the user can enter text relating to a search they wish to perform.

First screen image 3420 depicts an exemplary screen wherein the user has entered the search term "#cat" wherein through the search function they are then presented with second screen image 3430 wherein the search results are presented to the user wherein each image relates to a microaction (pending, completed, etc.) containing the hashtag within the search field. If the user taps the search field 3480 then a hashtag is depicted wherein the user enters the text thereby triggering also presentation of the clear icon. Once the user has typed in their search term and tapped the search field 3480 then the screen contents shift to the left and microactions containing the selected hashtag are loaded. The "home" button, second toolbar icon 3450, changes state to "normal". Tapping the "Clear" button (the "X" within the search field 3480) clears the "Search" text field and returns the display to the home screen showing the microaction displayed earlier. Optionally, microactions within the search results may be listed by completion rate, i.e. the microaction with the highest submissions / completions, etc. is displayed first. When the user taps on a given microaction, the MCSSAP loads it in full view, i.e. similar behaviour as tapping on a microaction from the activity stream as depicted in Figure 36. Optionally, only created microactions may be displayed in the search results screen and submission microactions are ignored. It would be evident that other configurations may be employed. As a user scrolls down the search results then more microactions are loaded.

Now referring to Figure 35 there is depicted a screen image relating to a user selecting to view their activity screen within a MCSSAP according to an embodiment of the invention such as via first toolbar icon 3440 in Figure 34. Accordingly, the Home screen content shifts to the right and the Activity Screen slides in from left to right within an embodiment of the invention allowing the user to view their activities and similarly scroll through where these are more than can be displayed upon a single screen.

Referring to Figure 36 there is depicted a screen image 3610 relating to a help interface for a user within a MCSSAP according to an embodiment of the invention such as upon their selection of third toolbar icon 3460 in Figure 34. Accordingly, a help menu is displayed allowing the user to navigate through different menus and sub-menus. The initial help menu displayed comprising "Hot Topics", "General", "My Account", and "Troubleshooting."

Now referring to Figure 37 there are depicted first and second screen images 3710 and 3720 respectively relating to a settings screen and default operating system for a user within a MCSSAP according to an embodiment of the invention. First screen image 3710 depicts a Settings Screen which may be accessed, for example, through selection of a Gear button within an Activity Screen such as described and depicted in respect of Figure 35. The "General" section allows user to change aspects such as music, sound effects, privacy mode, push notification etc. The "Language" section includes, for example, a button allowing the MCSSAP to access the default operating system picker settings of the PED/FED the MCSSAP is operating upon. Selection of this may trigger second screen image 3720 wherein the user can scroll through language options but other features, settings may be accessed including font size, screen resolution, auto-rotate, etc. The "Feeling Social?" section allows the user to connect to their social media accounts, such as Facebook^{™}, Twitter^{™}, and LinkedIn^{™} for example. Other buttons may be accessed through scrolling or alternate screen layouts such as "Help", "Logout", MCSSAP synchronisation, MCSSAP subscription settings, etc.

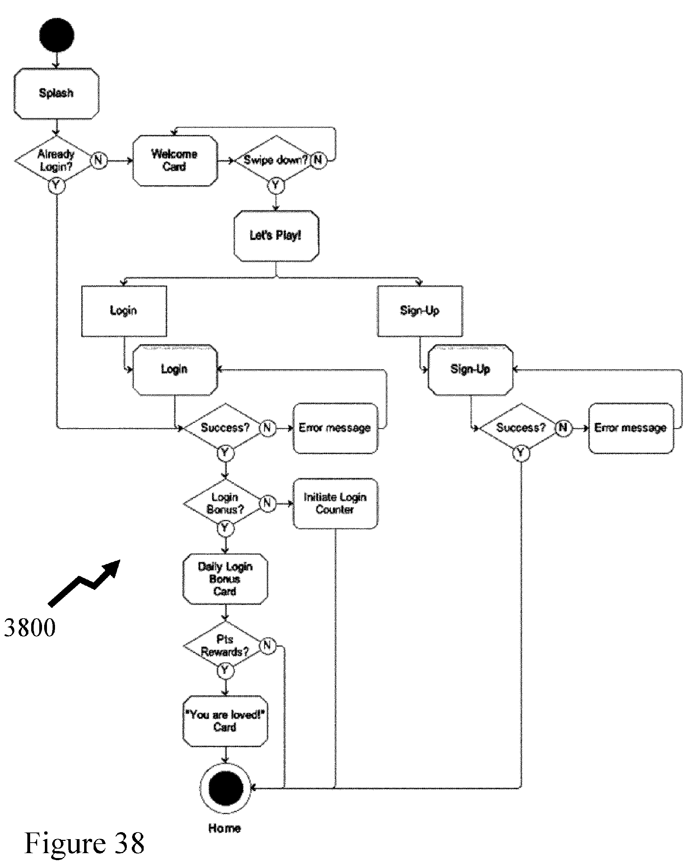

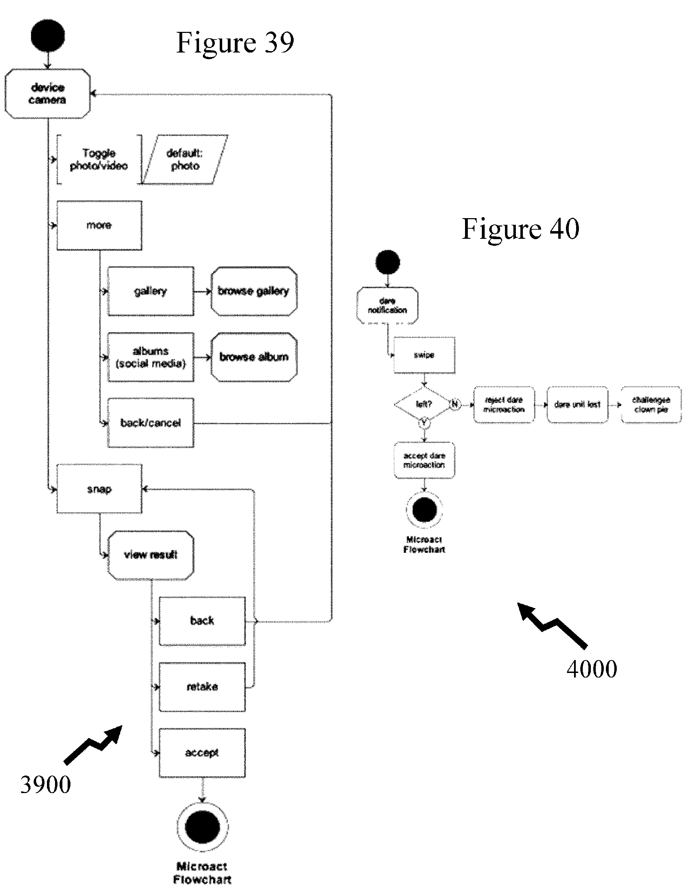

Referring to Figure 38 there is depicted a process flow 3800 relating to a user engaging a microaction game loop within a MCSSAP according to an embodiment of the invention. In the embodiments of the invention described supra in respect of Figures 1 to 37 many of the features, options, actions, etc. have been described in respect of "button" type interfaces upon the user's PED/FED. However, today's user may expect a different mobile experience. Accordingly, process flow 3800 depicts a user engaging within a microaction game loop within a MCSSAP according to an embodiment of the invention but now their selection mechanism is through swipe motions upon a touch screen interface upon their PED/FED. As such in order to view a microaction, the user is able to swipe to continue it or skip it. In other embodiments of the invention voice commands, gestures, PED motion, facial recognition, etc. may be employed to determine user decisions. Within the microloop game depicted in process flow 3800 the user through a "smart" "randomizing" engine provides the user with microactions similar to the ones they created or have continued. Further, as the user's friends' list is populated from their social media links then the "randomizing" engine may also account for the actions, selections, creations, completions, continuations, etc. of their social circle(s) as well. Further, MCSSAP's according to embodiments of the invention may provide a new social mechanic, daring a friend, in order to create a competitive and social component for the user such as described and depicted with respect to Figure 40.

Referring to Figure 39 there is depicted a camera flow chart 3900 relating to user navigation of images within a MCSSAP according to an embodiment of the invention. As such the user may select video / photo and either navigate through stored images / content such as within the memory of their PED/FED or galleries etc. associated with social media profiles in order to provide an image in respect of a microaction. Alternatively, they may capture a new image / photo.

Now referring to Figure 40 there is depicted a dare / challenge game loop process flow 4000 navigated by a user employing a MCSSAP according to an embodiment of the invention. According to an embodiment of the invention each day, each user has a limited amount of "dare" to send to one or more other users. When a challengee completes a dare and get verified, the challenger gains additional dare units and when a challengee fails a dare, either by rejecting it or by failing verification, they receive a default fail animation, such as having a virtual ice bucket challenge, and lose dare units. Optionally, a virtual store may be provided allowing users can spend "crowns" and / or real-life currencies in order to purchase and use custom animations. The concept of "crowns" having been described supra as a "currency" within a MCSSAP according to embodiments of the invention. Optionally, when a challengee fails a dare, the "dare" unit(s) used by the challenger are simply lost. Optionally, the "dare" units may change according to the type of challenge. Optionally, "dare" units are reset daily and do not accumulate whilst in others they accumulate. Optionally, in either instance the "dare" units available to a user may increase as a result of their actions within the MCSSAP and / or purchase of additional "dare" units through a virtual store.

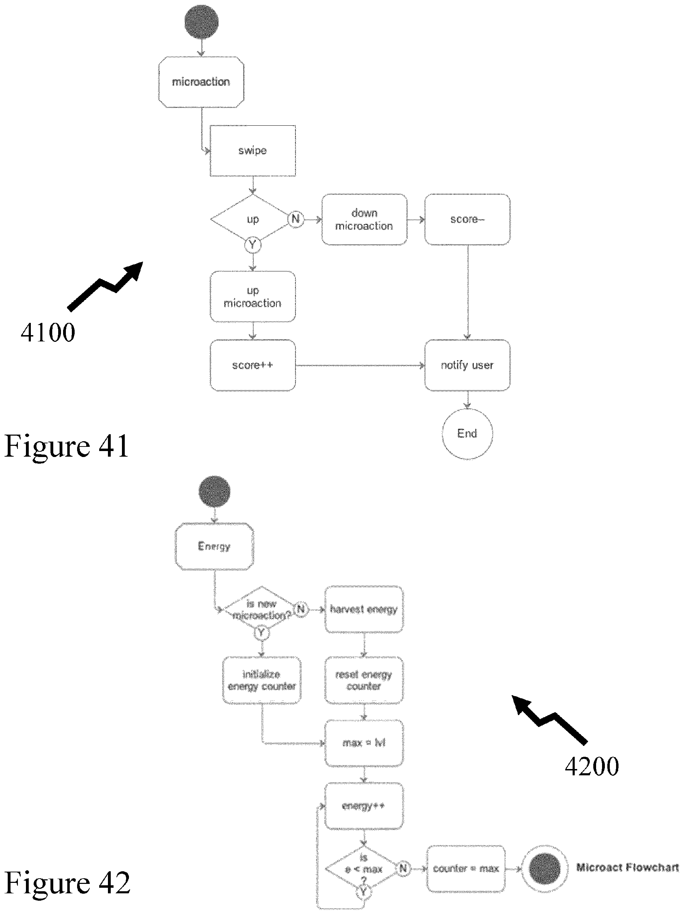

Referring to Figure 41 there is depicted a rating microaction process flowchart relating to a user's actions within a MCSSAP according to an embodiment of the invention. Accordingly, within embodiments of the invention the user is able to "Upvote" and "Downvote" microactions. Users may also opt-in or opt-out to receive / not receive notifications when their microactions are rated. Within some embodiments of the invention humour may form an essential element to viral content and accordingly the rating system may not be automatically tied to any verification. Optionally, through the rating system, microactions could be used to create communities, groups, etc. In some embodiments of the invention a person who shared a video of a puppy walking for the first time in the snow is as valid as walking any other dog but might win more "Upvotes". The value of "Up votes" and "Downvotes may be summarized as a microaction "Score" and, optionally, translates into an Energy Multiplier such as described and depicted in respect of Figure 42. The score of a specific microaction may be normalized, e.g. it is divided by the total amount of microaction submissions such that a microaction with a score of 10 out of a pool of 3 submissions is worth more than a microaction with a score of 10 out of a pool of 15 submissions.

Referring to Figure 42 there is depicted a flowchart 4200 relating to execution within a MCSSAP according to an embodiment of the invention of a user acquiring energy points based upon levels of microaction etc. For example, within an embodiment of the invention, when a microaction is initialized it begins to generate energy points. These points accumulate over time according to a specific formula, such that for example, a level 1 microaction can produce a maximum of 10 energy points. Users can harvest energy points by repeating a microaction, for example, and energy points can be either converted into a MCSSAP currency, e.g. "crowns" or to second currency in a virtual store, e.g. bitcoins^{™}. Equally, a user can spend an online or real world currency to acquire energy points. This mechanism is intended to incent users to learn to create easy microactions that most people can do and will want to repeat. It adds a "replay value" to each microaction. Ultimately, the best microactions will be curated by their levels, score, energy profitability and ease-of-access as well as other aspects such as age, geography, language, etc.

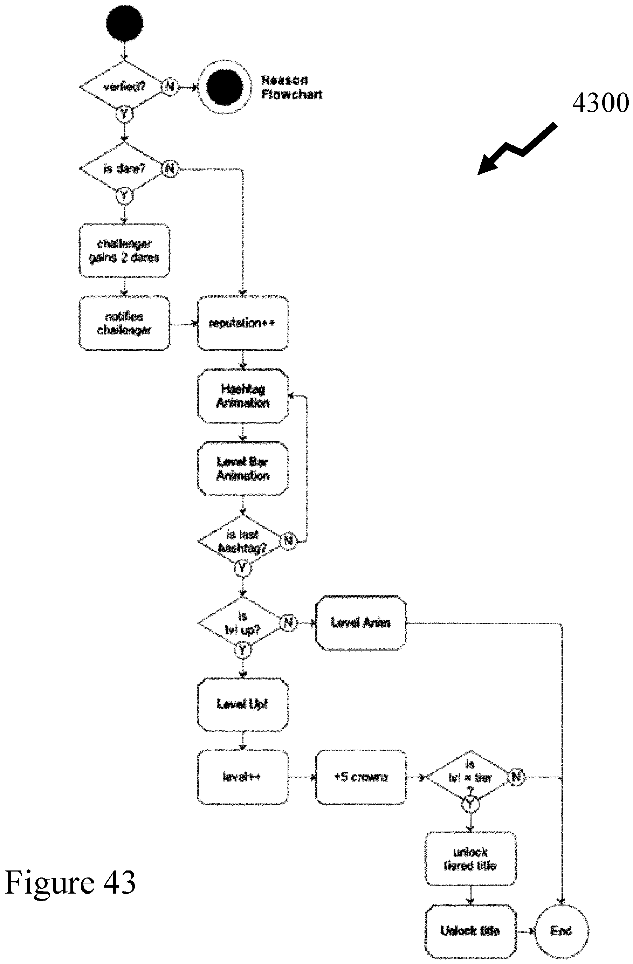

Now referring to Figure 43 there is depicted a reputation augmentation process flow 4300 relating to users within a MCSSAP according to an embodiment of the invention such that their reputation increases based upon verified activities. The inventors refer to this as "levelling up." In essence, within embodiments of the invention each time a microaction is verified, the user who did it gains reputation, thereby allowing the creation of an "honour" system within the MCSSAP, thereby adding value to the user's accountability. Further, as a MCSSAP already may exploit hashtags as categorizing and search methods, it would be further beneficial to track and quantify them within the leveling system. For example, whilst two users reaching a particular level of reputation will have generally completed the same amount of microactions they will have different hashtag levels. These hashtag levels will directly influence which type of titles a user unlocks when reaching a new tier within the MCSSAP. "Levelling up" will reward a user based upon their verified microactions with a set amount of MCSSAP currency or alternatively a virtual and / or real-world currency.

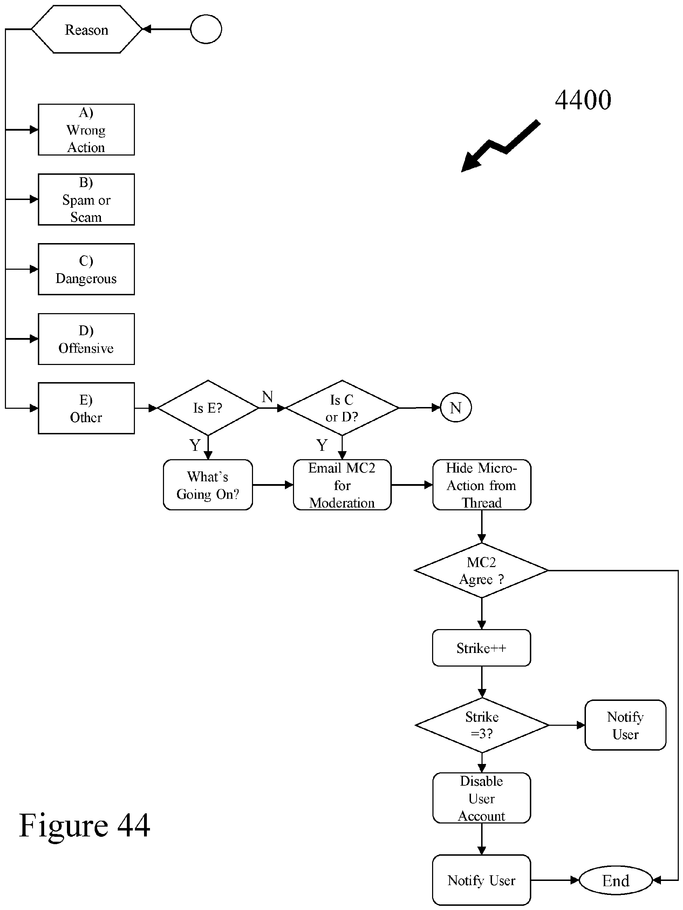

Since users are verifying and monitoring microactions within embodiments of the invention the MCSSAP should also provide "responsibility" to explain why a user is rejecting a microaction. A serious or contest oriented microaction might not have room for jokes. Unfortunately, any successful social media application attracts spam accounts, and potentially malicious bots (Internet bots, also known as web robots or simply bots) which generate false information etc. As such these can be reported, as may any microaction that breaks the MCSSAP community guidelines and sanctions may apply. As such within Figure 44 there is depicted a process flow 4400 relating to a user's ability within a MCSSAP according to an embodiment of the invention to reject a microaction and provide a reason.

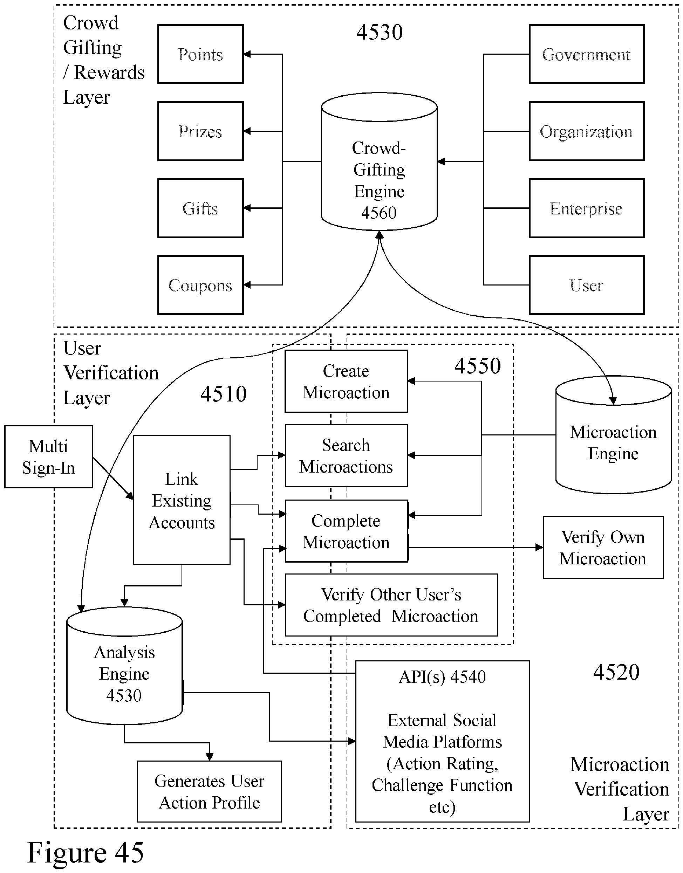

Within the preceding descriptions and associated Figure 1 to 44 MCSSAPs according to embodiments of the invention have been described and depicted. As depicted in Figure 45 these may form several layers within an exemplary hierarchy layering for a MCSSAP according to an embodiment of the invention as depicted in Figure 45. As depicted a first layer 4510 relates to user verification and authentication, a second layer 4520 relates to microaction verification, and a third layer 4530 relates to a crowd gifting / rewards layer. In this manner, a user's activities in the second layer 4520 impact their profile within the first layer 4510 but also their rewards / gifts etc. in the third layer 4530. As such a user with a high rate of generating verified microactions increases their authentication within the first layer 4510 but also their attractiveness within the third layer 4530 as being not only verified but also a performer / completer of microactions.

Accordingly, in order to augment existing social media presence, and ensure that communications that are occurring between individuals are met with a level of confidence (which is currently occurring within prior art social media), users are validated and a profile is created in a more concise manner across their multiple social media platforms through the use of the MCSSAP Analysis Engine within the first layer 4510. Within the prior art the inventors have established that the existing social media landscape, as well as the mobile tools that shape our everyday lives, are missing a key component to fully mapping the users everyday experience. The ability to engage and support the existing spectrum of tools for social engagement and online activities lacks a solution that can effectively reference a user's actions whilst maintaining the integrity of each user from a local level to a broader demographic in real-time. Currently most social platforms and services validate their individual users through single sign on, email verification or other less complicated forms of completion. This can easily be reproduced or manipulated to enable thousands of users to be created with a sophisticated program. In contrast, MCSSAPs according to embodiments of the invention provide this missing analysis mechanism, via Analysis Engine 4530, which affirms a user's behaviours, identities, and interactions from all of their other social media accounts and provides any external platform or services the ability to leverage the MCSSAP analysis mechanism. Each platform, fellow users, and other unique entities that leverages the analysis mechanism of MCSSAPs according to embodiments of the inventor for their benefit can be confident of a verified users actions by using the user action rating through an application programming interface / interfaces (APIs) 4540. The Analysis Engine 4530 is a system, database, method to accurately and repeatedly qualify and quantify the actions and inactions that a user performs based on all of their existing and new content on the aggregate of their social media accounts they link to MCSSAP using a cognitive, interpretive linguistic and pattern recognition algorithms, verification processes etc. in addition to supplementing peer-to-peer verification.

The MCSSAP API(s) 4540 provide within the microaction verification layer a framework of reliable and interoperable virtual identities. Furthermore the ability to shape, monitor, and direct efforts within each of the existing networks that are critical elements that is currently unknown and presents a significant challenge to other social and virtual online platforms in the market. Each platform, fellow users, and other unique entities that leverage these systems for their benefit can be confident of a verified users actions by using the user action rating API 4540. Possible applications of the MCSSAP according to embodiments of the invention and its microaction verification layer include, but are not limited to:
- Supporting any existing "human check" system
- Ranking and sorting user comments on any public platform (social media, YouTube^{™}, Reddit^{™}, blogs, news media sites, etc.) based upon the reliability of the user and their previous types of comments and actions (this should prevent third parties posting damaging and negative comments using secondary public profiles and accounts);
- Ability to rank and sort user actions and comments on any public platform based on the level of expertise of the user such that users can become recognized / ranked higher based on their proven authority on a subject or issue;
- Verify users and their reliability for any sharing economy services such as, for example, AirBnB^{™}, Uber^{™}, Lyft^{™} etc.; and
- Verify users and their proven historic actions and interests for specific interest groups, dating websites etc.

Similarly to existing encryption technologies that are designed to securing communication pathways, MCSSAPs according to embodiments of the invention improve and expand the existing nature of the social media point of presence with a streamlined capacity that enables users to become validated and verified through their microactions. This is a critical element for security and transparency of users in a virtual context, online anonymity, and it's reciprocity in authenticating users to fully engage groups, communities, movements and societies at every level. Accordingly, the microaction processes 4550 in Figure 45 allow for a multi-vertical verification and validation process which combines a series of overlapping verification functions such as email verification, geolocation, and IP address resolution to confirm the existence and the everyday actions that make up an individual's "profile" and a cognitive, interpretive linguistic and pattern recognition algorithm. Further MCSSAPs according to embodiments of the invention can provide a peer-to-peer based human validation and verification system, where users whose actions have been validated for a specific microaction(s) become the validation and verification network for other users.

This multi-vertical verification and validation process reflects a highly sophisticated process that cannot be easily reproduced outside an MCSSAP and provides a more likely candidate to be leveraged to support existing "human checks" and prompt a greater response from the community of interest or in general.

Based on the verified pool of users and their verified actions, the MCSSAP's third layer 4530 through one or more MCSSAP crowd gifting engines 4560 allows peer-to-peer gifting, where users (governments, organizations, businesses, users etc.) are be able to perform certain actions, including but not limited to:
- A: Offer a gift to a pre-defined or open criterion for a microactions verified completion. This democratizes and provides an open platform for the exchange of goods and services for completed, real-world activities; and
- B: Provide a reward / gift to a user for an already completed microaction. This allows users within the MCSSAP community to recognize and reward verified actions to their fellow user.

Within embodiments of the invention a gift may include, but not be limited to, a physical gift (requiring physical delivery), a coupon for redemption, points within the MCSSAP, a real-world currency, a virtual currency, and points. Points within embodiments of the invention allow a mechanism for gamification of a user's actions. Optionally, one or more different types of points may be awarded, measured and tracked including love (altruistic actions), money (linked to a gift algorithm), glory (for praise and recognition), experience points (for the level and frequency of activity) and "Crowns (which is an MCSSAP internal points system linked to the crowd-gifting system and other external points systems such as VISA, AirMiles^{™}, etc. Optionally, badges, levels and titles may be awarded within an MCSSAP to recognize milestone achievements for users that are linked to their actions and types of actions

MCSSAPs according to embodiments of the invention may support other additional features and processes above and beyond those described and depicted supra in respect of Figures 1 to 45 respectively. Examples of such features include, but are not limited to, peer verification, search engine, verification process, and verification methods.

*Peer Verification:* Any completed action that does not result in a clearly verified action using the above mentioned multi-vertical verification and validation process or when the microaction creator designs the microaction to have the peer verification layer will result in the completed action being verified by other peers whose completed microaction(s) has/have already been verified for that specific microaction.

*Search Engine:* An MCSSAP search engine can understand unstructured data (based on natural language, text and patterns) allowing users to simply pick their favourite topics and link their existing accounts and the MCSSAP search engine will recommend microactions based on other users' activities on the app and the hashtag and other metadata. The more popular and positive microactions (voted up and with positive goals) will be displayed higher in the search results.

*Verification Process:* Once a user's friend has completed a microaction then it is initially verified by the multi-vertical verification and validation process (combination of the photo, video or location etc. and the cognitive, interpretive linguistic and pattern recognition algorithm). Subsequently, the verifications are refined over time and help the cognitive, interpretive linguistic and pattern recognition algorithm recommend other microactions for users to complete based on their past preferences and actions.

*Verification Methods:* wherein all signals that are automatically and manually sent to a server including, but not limited, images, simple message service (SMS) messages (text), video, voice message, GPS, Bluetooth, mesh networking associations, wearable device data, Internet Protocol (IP) enabled hardware (house appliances, smoke alarms etc.), digestible technology, Internet enabled body modifications, etc. are merged and combined with the user's MCSSAP profile / verified identity and / or may be employed in generating a microaction verification.

Possible Applications for the crowd-gifting aspects of the MCSSAPs described according to embodiments of the invention include, but are not limited to:
- Promotional campaigns and advertising for corporations to enable collective actions;
- Existing societies, groups, movements and organizations to self-reward actions aligned to their mandate and cause; from popular celebrity contests to Red Cross / Greenpeace activities;
- Corporate Social Responsibility (CSR) campaigns for businesses and organizations; to track and reward user/ customer actions aligned to the CSR mandate; brand recognition for CSR campaigns;
- Tiered funds distribution for governments, organizations, venture and angel capital projects and companies; using a targeted and specific user(s) aligned to specific key performance indicators (KPIs) and milestones;
- Micro-financing reporting, tracking and fund distribution tool for developing and third world countries; using a targeted and specific user(s) aligned to specific KPI and milestones in the company's development; and
- Horizontal platform for existing rewards and points systems (retail points cards, air miles, credit card points etc.) to transfer points and / or use points to purchase items in the MCSSAP gift store or vice-versa from the MCSSAP platform into their respective points system.

Within the description supra in respect of embodiments of the invention with respect to Figures 1 to 45 a series of exemplary flows for the MCSSAP were presented. With respect to user actions within an MCSSAP then exemplary process flows may include, but not be limited to, first to fourth user processes described in bullet form below.

*User Process* #*1:* (1) Create a new microaction (with hashtags); (2) Share directly to social media; (3) Challenge a friend(s); and (4) Get points & prizes.

*User Process #2:* (1) Search for a microaction; (2) Share directly to social media; (3) Challenge a friend(s); and (4) Get points & prizes.

*User Process #3:* (1) Receive a microaction challenge / view a microaction on social media; (2) Click on the microaction to complete it - if they have a profile, they can challenge another friend to do the same - if they don't have a profile, they can login via their social media or create an MCSSAP account and then complete it; and (3) Get points and prizes.

*User Process #4:* (1) Search through completed microactions; (2) Share directly to social media - can comment on the microaction and up or down vote the activity; and (3) Offer a prize or gift.

In each instance other users can comment on the microaction (and any other verified completion) and up or down vote the activity. All activities are posted to the users MCSSAP profile, and they earn their place on the leader board.

Within the specification *supra* and with respect to embodiments of the invention described in respect of Figures 1 to 45 references have been made to microaction(s). However, these may alternatively be referred to as microtasks, microjobs, microcalls, etc. without departing from the scope of the invention in that they may in addition to or in replacement of being considered as an action may be a task (e.g. one allocated to employees of an enterprise), a job (e.g. seeking students to make money by distributing flyers), or a call (e.g. a microaction for friends to call a specified friend as it is their birthday).

Within the specification *supra* and with respect to embodiments of the invention described in respect of Figures 1 to 45 references have primarily been made to a user viewing the MCSSAP and communications associated with it via a PED such as a smartphone. However, as noted *supra* a user may also access the MCSSAP through a range of other PEDs and / or FEDs in order to create, manage, track, complete, verify and promote microactions. It would also be evident that wearable devices may also provide support for one or more activities associated with a MCSSAP and / or microaction. In some embodiments of the invention these activities may be automatically undertaken, e.g. a user wearing Google Glass^{™} may receive microactions of "Go to Food Bank" and "Sort at Food Bank" wherein upon their arrival, as noted through GPS positioning, the camera within their Google Glass^{™} may be triggered providing an image for transmission as part of completing the first microaction. The second microaction may be completed, for example, by another individual capturing an image of the user sorting food at the Food Bank which is transferred to the user's device and therein to the MCSSAP via the network 100. The other individual may receive themselves a microaction to take the photograph of the user if they become associated to the user, e.g. via NFC communications, for example, between the user's device and a wearable device of the individual. Alternatively, verifying their microaction completion may, for example, be by taking an image of a label or hologram.

Microactions may also be indicated as completed and / or verified through the user of special hand motions which, may for example, be tracked via a camera, motion sensors within a wearable device or PED, special sensors such as within gaming controllers, for example, physical contact of the user to an object, user embedded electronics, etc. Optionally, the user may consume a pill embedded with a sensor or sensors, electronics etc. to verify activities that cannot exploit conventional wearable devices, PEDs etc. Optionally, a microaction may be completed based upon the detection of a user's emotions and a semantic association of the appropriate emotion(s) to the microaction(s) for the user.

As noted supra a user in its broadest sense may include, but not be limited to, software systems, mechanical systems, robotic systems, android systems, etc. that may be characterised by an ability to at least one of monitor, acquire, store, transmit, process, generate, participate, use, and manage one or more aspects of a MCSSAP according to an embodiment or embodiments of the invention. Accordingly, such software systems, mechanical systems, robotic systems, android systems, etc. may also complete microactions within an MCSSAP. Such microactions may be communicated through text, SMS, GUI content etc. accessed by such systems but may alternatively be microactions sent to the system's IP address. As such microactions may be generated by human users as well as their generation may be triggered by one or more other systems. Similarly, such systems may trigger microactions to human users as well as other systems.

Specific details are given in the above description to provide a thorough understanding of the embodiments. However, it is understood that the embodiments may be practiced without these specific details. For example, circuits may be shown in block diagrams in order not to obscure the embodiments in unnecessary detail. In other instances, well-known circuits, processes, algorithms, structures, and techniques may be shown without unnecessary detail in order to avoid obscuring the embodiments.

Implementation of the techniques, blocks, steps and means described above may be done in various ways. For example, these techniques, blocks, steps and means may be implemented in hardware, software, or a combination thereof. For a hardware implementation, the processing units may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described above and/or a combination thereof.

Also, it is noted that the embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be rearranged. A process is terminated when its operations are completed, but could have additional steps not included in the figure. A process may correspond to a method, a function, a procedure, a subroutine, a subprogram, etc. When a process corresponds to a function, its termination corresponds to a return of the function to the calling function or the main function.

Furthermore, embodiments may be implemented by hardware, software, scripting languages, firmware, middleware, microcode, hardware description languages and/or any combination thereof. When implemented in software, firmware, middleware, scripting language and/or microcode, the program code or code segments to perform the necessary tasks may be stored in a machine readable medium, such as a storage medium. A code segment or machine-executable instruction may represent a procedure, a function, a subprogram, a program, a routine, a subroutine, a module, a software package, a script, a class, or any combination of instructions, data structures and/or program statements. A code segment may be coupled to another code segment or a hardware circuit by passing and/or receiving information, data, arguments, parameters and/or memory content. Information, arguments, parameters, data, etc. may be passed, forwarded, or transmitted via any suitable means including memory sharing, message passing, token passing, network transmission, etc.

For a firmware and/or software implementation, the methodologies may be implemented with modules (e.g., procedures, functions, and so on) that perform the functions described herein. Any machine-readable medium tangibly embodying instructions may be used in implementing the methodologies described herein. For example, software codes may be stored in a memory. Memory may be implemented within the processor or external to the processor and may vary in implementation where the memory is employed in storing software codes for subsequent execution to that when the memory is employed in executing the software codes. As used herein the term "memory" refers to any type of long term, short term, volatile, nonvolatile, or other storage medium and is not to be limited to any particular type of memory or number of memories, or type of media upon which memory is stored.

Moreover, as disclosed herein, the term "storage medium" may represent one or more devices for storing data, including read only memory (ROM), random access memory (RAM), magnetic RAM, core memory, magnetic disk storage mediums, optical storage mediums, flash memory devices and/or other machine readable mediums for storing information. The term "machine-readable medium" includes, but is not limited to portable or fixed storage devices, optical storage devices, wireless channels and/or various other mediums capable of storing, containing or carrying instruction(s) and/or data.

The methodologies described herein are, in one or more embodiments, performable by a machine which includes one or more processors that accept code segments containing instructions. For any of the methods described herein, when the instructions are executed by the machine, the machine performs the method. Any machine capable of executing a set of instructions (sequential or otherwise) that specify actions to be taken by that machine are included. Thus, a typical machine may be exemplified by a typical processing system that includes one or more processors. Each processor may include one or more of a CPU, a graphics-processing unit, and a programmable DSP unit. The processing system further may include a memory subsystem including main RAM and/or a static RAM, and/or ROM. A bus subsystem may be included for communicating between the components. If the processing system requires a display, such a display may be included, e.g., a liquid crystal display (LCD). If manual data entry is required, the processing system also includes an input device such as one or more of an alphanumeric input unit such as a keyboard, a pointing control device such as a mouse, and so forth.

The memory includes machine-readable code segments (e.g. software or software code) including instructions for performing, when executed by the processing system, one of more of the methods described herein. The software may reside entirely in the memory, or may also reside, completely or at least partially, within the RAM and/or within the processor during execution thereof by the computer system. Thus, the memory and the processor also constitute a system comprising machine-readable code.

In alternative embodiments, the machine operates as a standalone device or may be connected, e.g., networked to other machines, in a networked deployment, the machine may operate in the capacity of a server or a client machine in server-client network environment, or as a peer machine in a peer-to-peer or distributed network environment. The machine may be, for example, a computer, a server, a cluster of servers, a cluster of computers, a web appliance, a distributed computing environment, a cloud computing environment, or any machine capable of executing a set of instructions (sequential or otherwise) that specify actions to be taken by that machine. The term "machine" may also be taken to include any collection of machines that individually or jointly execute a set (or multiple sets) of instructions to perform any one or more of the methodologies discussed herein.
Embodiments of the present invention may also be set out by way of the following numbered clauses:
1. A method comprising:
   providing an incentive to a first user to perform either an action or a task generated by a second user, wherein
   the incentive is a reward for completion of either the action or the task by a third user based upon the third user engaging the second user.
2. The method according to clause 1, wherein
   the reward is at least one of a virtual reward and a physical reward.
3. The method according to clause 1, wherein
   the completion of either the action or the task includes a verification process comprising at least one of generation of a verification by at least one of the third user and a fourth user.
4. The method according to clause 3, wherein
   the verification comprises at least one of an image, a video segment, and geolocation data.
5. A method comprising:
   generating within a network based software application at least one of an action and a task for completion, the generation being by a first user;
   receiving within the network based software application feedback from a predetermined subset of a plurality of users relating to the at least one of an action and a task; wherein
   the predetermined subset of a plurality of users are registered members of the network based software application;
   a first portion of the predetermined subset of a plurality of users complete the at least one of an action and a task;
   a second portion of the predetermined subset of a plurality of users do not complete the at least one of an action and a task; and
   the completion of the at least one of an action and a task by each user of the first portion of the predetermined subset of a plurality of users comprises providing to the network based software application verification data generated by at least one of the user of the first portion of the predetermined subset of a plurality of users and by an independent individual during the user of the first portion of the predetermined subset of a plurality of users completion of the at least one of an action and a task.
6. The method according to clause 5, further comprising:
   providing the first user with a reward established in dependence upon the first portion of the predetermined subset of a plurality of users, wherein
   the reward is at least one of a virtual reward associated with the network based software application, a virtual reward associated with an independent reward program to the network based software application, and a physical reward.
7. The method according to clause 5, further comprising:
   providing the first user with a reward established in dependence upon verification data generated by the first portion of the predetermined subset of a plurality of users, wherein
   the reward is at least one of a virtual reward associated with the network based software application, a virtual reward associated with an independent reward program to the network based software application, and a physical reward.
8. The method according to clause 1, wherein
   the completion of either the action or the task includes a verification process comprising at least one of generation of a verification by at least one of the third user and a fourth user.
9. The method according to clause 5, wherein
   the verification data comprises at least one of an image, a video segment, and geolocation data.
10. A method of validating a user comprising:
   receiving a registration of the user via a network based software application comprising at least one social association of a plurality of social associations;
   tracking the activity of the user via the network based software application with respect to their completion of or participation within a microaction of a plurality of microactions established within the network based software application by either the user or other users;
   determining whether the activity of the user was valid by verifying the completion of or participation within the microaction of the plurality of microactions via the web based network application;
   adjusting a ranking associated with the user in dependence upon the determination;
   rewarding the verified user's completed microaction within a gaming system comprising points, badges and levels and providing the verified user with at least one of a reward and a gift from at least one of another user and an entity, wherein the at least one of a reward and a gift is determined in dependence upon the type of action performed; and
   validating the user to other users of the network based software application or to other social media platforms and network based software services upon the user's ranking meeting a predetermined threshold.
11. The method according to clause 10, wherein
   the microaction of a plurality of microactions comprises:
   at least one of an action and a task to be performed by the user; and
   identification of the means by which the user should present verification information to the network based software application.
12. The method according to clause 10, wherein
   determining whether the completion of or participation within the microaction of a plurality of microactions comprises receiving at least one of:
   at least one of an image, a video, and a message from the user in association with geographic location data automatically generated by an electronic device associated with the generation of the at least one of; and
   at least one of an image, a video, and a message from another user.
13. The method according to clause 10, wherein
   the adjustment of the ranking is dependent upon at least one of:
   a number of valid determinations;
   a degree of separation between the user and another user providing verification data for the determination process; and
   a format of the verification data for the determination process.
14. The method according to clause 10, wherein
   the microaction of a plurality of microactions comprises at least a hashtag of a plurality of hashtags established by the generator of the microaction of a plurality of microactions.
15. The method according to clause 10, wherein
   determining whether the completion of or participation within the microaction of a plurality of microactions comprises receiving verification data from the user and another user which includes at least a hashtag of a plurality of hashtags established by the generator of the verification data.
16. The method according to clause 10, further comprising
   providing an incentive to a first user to perform the microaction of a plurality of microactions when it is generated by a second user, wherein
   the incentive is a reward for verified completion of the microaction of a plurality of microactions by another user.
17. Computer executable instructions for execution by a microprocessor stored upon a non-volatile non-transitory memory, the computer executable instructions providing a process comprising the steps of:
   receiving a registration of the user via a network based software application comprising at least one social association of a plurality of social associations;
   tracking the activity of the user via the network based software application with respect to their completion of or participation within a microaction of a plurality of microactions established within the network based software application by either the user or other users;
   determining whether the activity of the user was valid by verifying the completion of or participation within the microaction of the plurality of microactions via the web based network application;
   adjusting a ranking associated with the user in dependence upon the determination; and
   rewarding the verified user's completed microaction within a gaming system comprising points, badges and levels and providing the verified user with at least one of a reward and a gift from at least one of another user and an entity, wherein the at least one of a reward and a gift is determined in dependence upon the type of action performed; and
   validating the user to other users of the network based software application or to other social media platforms and network based software services upon the user's ranking meeting a predetermined threshold.
18. A system comprising:
   a registration engine in execution upon a first computer server comprising a microprocessor and a network interface coupled to a computer network, the registration engine for receiving a registration of the user via the computer network comprising at least one social association of a plurality of social associations;
   a tracking engine in execution upon a second computer server comprising a microprocessor and a network interface coupled to the computer network, wherein the tracking engine tracks the activity of the user with respect to their completion of or participation within a microaction of a plurality of microactions established within the network based software application by either the user or other users;
   a verification engine in execution upon a third computer server comprising a microprocessor and a network interface coupled to the computer network, the verification engine for determining whether the activity of the user was valid by verifying the completion of or participation within the microaction of the plurality of microactions via the web based network application which includes a peer-to-peer verification system;
   a user profile engine in execution upon a fourth computer server comprising a microprocessor and a network interface coupled to the computer network, the user profile engine for at least:
      adjusting a ranking associated with the user in dependence upon the determination; and
      validating the user to other users of the network based software application upon the user's ranking meeting a predetermined threshold; and
   a reward engine in execution upon a fifth computer server comprising a microprocessor and a network interface coupled to the computer network, the reward engine for at least one of:
      providing a user whose completion of or participation within the microaction of the plurality of microactions has been verified with a predetermined number of verified user points relating to a gaming system;
      providing a user whose completion of or participation within the microaction of the plurality of microactions has been verified with at least one of a reward and a gift from at least one of another user and an entity wherein the at least one of a reward and a gift is determined in dependence upon at least the type of action performed during completion of or participation within the microaction of the plurality of microactions;
      providing a user in conjunction with a notification relating to a new microaction of the plurality of microactions that there is at least one of a reward and a gift associated with the new microaction of the plurality of microactions.
19. A method of validating a user comprising:
   receiving a registration of the user via a network based software application comprising at least one social association of a plurality of social associations;
   tracking the activity of the user via the network based software application with respect to their completion of or participation within a microaction of a plurality of microactions established within the network based software application by either the user or other users;
   determining whether the activity of the user was valid by verifying the completion of or participation within the microaction of the plurality of microactions via the web based network application;
   adjusting a ranking associated with the user in dependence upon the determination;
   rewarding the verified user's completed microaction within a gaming system comprising points, badges and levels and providing the verified user with at least one of a reward and a gift from at least one of another user and an entity, wherein the at least one of a reward and a gift is determined in dependence upon the type of action performed; and
   validating the user to other users of the network based software application or to other social media platforms and network based software services upon the user's ranking meeting a predetermined threshold.
20. The method according to clause 19, wherein the microaction of a plurality of microactions comprises:
   at least one of an action and a task to be performed by the user; and
   identification of the means by which the user should present verification information to the network based software application.
21. The method according to clause 19, wherein
   determining whether the completion of or participation within the microaction of a plurality of microactions comprises receiving at least one of:
   at least one of an image, a video, and a message from the user in association with geographic location data automatically generated by an electronic device associated with the generation of the at least one of; and
   at least one of an image, a video, and a message from another user.
22. The method according to clause 19, wherein
   the adjustment of the ranking is dependent upon at least one of:
   a number of valid determinations;
   a degree of separation between the user and another user providing verification data for the determination process; and
   a format of the verification data for the determination process.
23. The method according to clause 19, wherein
   the microaction of a plurality of microactions comprises at least a hashtag of a plurality of hashtags established by the generator of the microaction of a plurality of microactions.
24. The method according to clause 19, wherein
   determining whether the completion of or participation within the microaction of a plurality of microactions comprises receiving verification data from the user and another user which includes at least a hashtag of a plurality of hashtags established by the generator of the verification data.
25. The method according to clause 19, further comprising
   providing an incentive to a first user to perform the microaction of a plurality of microactions when it is generated by a second user, wherein
   the incentive is a reward for verified completion of the microaction of a plurality of microactions by another user.
26. A method comprising:
   providing an incentive to a user relating to the performance of either an action or a task generated by an originator, wherein
   the incentive is a reward for completion of either the action or the task provided by a provider based upon the provider engaging the originator.
27. The method according to clause 26, wherein
   at least one of:
   the reward is at least one of a virtual reward and a physical reward;
   the completion of either the action or the task includes a verification process comprising at least one of generation of a verification by at least one of the provider and an independent party;
28. The method according to clause 26, wherein
   providing the incentive to a user comprises the steps:
   generating within a network based software application at least one of an action and a task for completion, the generation being by the orginator;
   receiving within the network based software application feedback from a predetermined subset of a plurality of users relating to the at least one of the action and the task; wherein
   the predetermined subset of a plurality of users are registered members of the network based software application;
   a first portion of the predetermined subset of a plurality of users complete the at least one of the action and the task;
   a second portion of the predetermined subset of a plurality of users do not complete the at least one of the action and the task; and
   the completion of the at least one of an action and a task by each user of the first portion of the predetermined subset of a plurality of users comprises providing to the network based software application verification data generated by at least one of the user of the first portion of the predetermined subset of a plurality of users and by a plurality of independent individuals provided during the user of the first portion of the predetermined subset of a plurality of users completion of the at least one of the action and the task.
29. The method according to claim 26, further comprising:
   at least one of:
      providing the first portion of the predetermined subset of a plurality of users with a reward established in dependence upon the first portion of the predetermined subset of a plurality of users; and
      providing the first portion of the predetermined subset of a plurality of users with a reward established in dependence upon verification data generated by at least one of the first portion of the predetermined subset of a plurality of users and the plurality of individuals, wherein
   the reward is at least one of a virtual reward associated with the network based software application, a virtual reward associated with an independent reward program to the network based software application, and a physical reward.
30. The method according to clause 26, wherein
   the reward is at least one of a virtual reward associated with the network based software application, a virtual reward associated with an independent reward program to the network based software application, and a physical reward.
31. The method according to clause 26, wherein
   the completion of either the action or the task includes a verification process comprising at least one of generation of a verification by at least one of the provider and an independent party, wherein the verification comprises at least one of an image and a video segment at least one of generated by and featuring the user or geolocation data relating to the user.
32. Computer executable instructions for execution by a microprocessor stored upon a non-volatile non-transitory memory, the computer executable instructions providing a process comprising the steps of:
   receiving a registration of the user via a network based software application comprising at least one social association of a plurality of social associations;
   tracking the activity of the user via the network based software application with respect to their completion of or participation within a microaction of a plurality of microactions established within the network based software application by either the user or other users;
   determining whether the activity of the user was valid by verifying the completion of or participation within the microaction of the plurality of microactions via the web based network application;
   adjusting a ranking associated with the user in dependence upon the determination; and
   rewarding the verified user's completed microaction within a gaming system comprising points, badges and levels and providing the verified user with at least one of a reward and a gift from at least one of another user and an entity, wherein the at least one of a reward and a gift is determined in dependence upon the type of action performed; and
   validating the user to other users of the network based software application or to other social media platforms and network based software services upon the user's ranking meeting a predetermined threshold.
33. A system comprising:
   a registration engine in execution upon a first computer server comprising a microprocessor and a network interface coupled to a computer network, the registration engine for receiving a registration of the user via the computer network comprising at least one social association of a plurality of social associations;
   a tracking engine in execution upon a second computer server comprising a microprocessor and a network interface coupled to the computer network, wherein the tracking engine tracks the activity of the user with respect to their completion of or participation within a microaction of a plurality of microactions established within the network based software application by either the user or other users;
   a verification engine in execution upon a third computer server comprising a microprocessor and a network interface coupled to the computer network, the verification engine for determining whether the activity of the user was valid by verifying the completion of or participation within the microaction of the plurality of microactions via the web based network application which includes a peer-to-peer verification system;
   a user profile engine in execution upon a fourth computer server comprising a microprocessor and a network interface coupled to the computer network, the user profile engine for at least:
      adjusting a ranking associated with the user in dependence upon the determination; and
      validating the user to other users of the network based software application upon the user's ranking meeting a predetermined threshold; and
   a reward engine in execution upon a fifth computer server comprising a microprocessor and a network interface coupled to the computer network, the reward engine for at least one of:
      providing a user whose completion of or participation within the microaction of the plurality of microactions has been verified with a predetermined number of verified user points relating to a gaming system;
      providing a user whose completion of or participation within the microaction of the plurality of microactions has been verified with at least one of a reward and a gift from at least one of another user and an entity wherein the at least one of a reward and a gift is determined in dependence upon at least the type of action performed during completion of or participation within the microaction of the plurality of microactions;
      providing a user in conjunction with a notification relating to a new microaction of the plurality of microactions that there is at least one of a reward and a gift associated with the new microaction of the plurality of microactions.

The foregoing disclosure of the exemplary embodiments of the present invention has been presented for purposes of illustration and description. It is not intended to be exhaustive or to limit the invention to the precise forms disclosed. Many variations and modifications of the embodiments described herein will be apparent to one of ordinary skill in the art in light of the above disclosure. The scope of the invention is to be defined only by the claims appended hereto, and by their equivalents.

Further, in describing representative embodiments of the present invention, the specification may have presented the method and/or process of the present invention as a particular sequence of steps. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the specification should not be construed as limitations on the claims. In addition, the claims directed to the method and/or process of the present invention should not be limited to the performance of their steps in the order written, and one skilled in the art can readily appreciate that the sequences may be varied and still remain within the spirit and scope of the present invention.

## Claims

1. A method to automatically validate a user of a network based software application to one or more of other users of the network based software application, a social media platform and a network based software service based upon a level of the user established by the network based software application comprising:
generating by a micro-crowd sourcing application hosted by a server in communication with a network a plurality of micro-actions, where each micro-action is automatically generated and communicated to a plurality of registrants with the micro-crowd sourcing application in dependence upon data received by the server from a registrant of the plurality of registrants or another registrant of the plurality of registrants;
receiving at the server electronic data associated with the registrant of the plurality of registrants to automatically track with the micro-crowd sourcing application an activity of the registrant of the plurality of registrants with respect to their completion of a micro-action of the plurality of micro-actions;
receiving at the server verification data from which an analysis engine in execution upon the server automatically determines whether the registrant of the plurality of registrants completed the micro-action of the plurality of micro-actions in dependence upon the electronic data and the verification data;
provide a reward to the registrant of the plurality of registrants upon completion of the microaction of the plurality of micro-actions;
automatically adjust a level of the registrant of the plurality of registrants when the analysis engine determines that the registrant of the plurality of registrants completed of the micro-action of the plurality of micro-actions;
automatically adjusting a reward of the registrant of the plurality of registrants when the analysis engine determines that the registrant of the plurality of registrants completed of the microaction of the plurality of micro-actions where the adjustment of the reward is established in dependence upon the completed of the micro-action of the plurality of micro-actions;
determining whether the level has met a predetermined threshold; and
upon determining that the level has met the predetermined threshold automatically validating with the micro-crowd sourcing application the user to one or more of other users of the network based software application, the social media platform and the network based software service; wherein
the electronic data associated with the registrant is acquired by the server from one or more social media accounts linked to the micro-crowd sourcing application by the registrant of the plurality of registrants or from the network based software application in execution upon an electronic device associated with the registrant of the plurality of registrants; and
the tracking, determination, adjustment and validation of the registrant of the plurality of registrants are performed in real-time.

2. The method according to claim 1, wherein
the electronic data comprises one or more of:
image data of the registrant of the plurality of registrants performing or participating within the micro-action of the plurality of micro-actions;
video data of the registrant of the plurality of registrants performing or participating within the micro-action of the plurality of micro-actions; and
geolocation data received in association with a message indicating of the registrant of the plurality of registrants performing or participating within the micro-action of the plurality of micro-actions; and
the verification data comprises one or more of:
other geolocation data established when the micro-action of the plurality of micro-actions was established;
mesh network associations of an electronic device associated with the registrant of the plurality of registrants employed to generate the electronic data;
other electronic data from one or more of:
a wearable device associated with the registrant of the plurality of registrants,
data from an Internet enabled item of hardware associated with the electronic device of the registrant of the plurality of registrants employed to generate the electronic data;
data from a digestible technology device associated with the registrant of the plurality of registrant; and
data from an Internet enabled body modification of the registrant of the plurality of registrants; and
the adjustment in reward is dependent upon the verification data provided by the registrant of the plurality of registrants.

3. The method according to claim 1, wherein
the electronic data comprises one or more of:
image data of the registrant of the plurality of registrants performing or participating within the micro-action of the plurality of micro-actions;
video data of the registrant of the plurality of registrants performing or participating within the micro-action of the plurality of micro-actions; and
geolocation data received in association with a message indicating of the registrant of the plurality of registrants performing or participating within the micro-action of the plurality of micro-actions;
the verification data is acquired by the server from one or more other social media accounts linked to the micro-crowd sourcing application by another registrant of the plurality of registrants or from the network based software application in execution upon another electronic device associated with the another registrant of the plurality of registrants and comprises one or more of:
image data of the registrant of the plurality of registrants performing or participating within the micro-action of the plurality of micro-actions;
video data of the registrant of the plurality of registrants performing or participating within the micro-action of the plurality of micro-actions; and
geolocation data received in association with a message indicating of the registrant of the plurality of registrants performing or participating within the micro-action of the plurality of micro-actions; and
the adjustment of the reward increases with a degree of separation between the registrant of the plurality of registrants and another registrant of the plurality of registrants providing the verification data.

4. The method according to claim 1, wherein
the completed micro-action of the plurality of micro-actions relates to to a specific key performance indicator or specific milestone; and
electronic funds are distributed to the validated registrant of the plurality of registrants upon their validation.

5. The method according to claim 1, wherein
the micro-crowd sourcing application provides an entity with a micro-financing reporting, tracking and fund distribution tool;
the completed micro-action of the plurality of micro-actions relates to a specific key performance indicator or specific milestone; and
electronic funds are distributed to the validated registrant of the plurality of registrants upon their validation as having completed the micro-action of the plurality of micro-actions.

6. The method according to claim 1, wherein
the electronic data comprises one or more of:
image data of the registrant of the plurality of registrants performing or participating within the micro-action of the plurality of micro-actions;
video data of the registrant of the plurality of registrants performing or participating within the micro-action of the plurality of micro-actions; and
geolocation data received in association with a message indicating of the registrant of the plurality of registrants performing or participating within the micro-action of the plurality of micro-actions;
the verification data is acquired by the server from one or more other social media accounts linked to the micro-crowd sourcing application by another registrant of the plurality of registrants or from the network based software application in execution upon another electronic device associated with the another registrant of the plurality of registrants and comprises one or more of:
image data of the registrant of the plurality of registrants performing or participating within the micro-action of the plurality of micro-actions;
video data of the registrant of the plurality of registrants performing or participating within the micro-action of the plurality of micro-actions; and
geolocation data received in association with a message indicating of the registrant of the plurality of registrants performing or participating within the micro-action of the plurality of micro-actions; and
the adjustment of the reward increases in dependence upon a number of another registrant of the plurality of registrants providing verification data.

7. The method according to claim 1, wherein
the micro-crowd sourcing application provides an entity with a mandate alignment tool;
the completed micro-action of the plurality of micro-actions aligns with a mandate of the entity; and
either:
the registrant of the plurality of registrants is a member of the entity;
or:
the registrant of the plurality of registrants is a customer of the entity; and
the mandate is a corporate social responsibility mandate.

8. A method comprising:
providing an incentive to a first user to perform either an action or a task generated by a second user, wherein
the incentive is a reward for completion of either the action or the task by a third user based upon the third user engaging the second user.

9. The method according to claim 1, wherein
the reward is at least one of a virtual reward and a physical reward.

10. The method according to claim 1, wherein
the completion of either the action or the task includes a verification process comprising at least one of generation of a verification by at least one of the third user and a fourth user.

11. The method according to claim 10, wherein
the verification comprises at least one of an image, a video segment, and geolocation data.

12. A method comprising:
generating within a network based software application at least one of an action and a task for completion, the generation being by a first user;
receiving within the network based software application feedback from a predetermined subset of a plurality of users relating to the at least one of an action and a task; wherein
the predetermined subset of a plurality of users are registered members of the network based software application;
a first portion of the predetermined subset of a plurality of users complete the at least one of an action and a task;
a second portion of the predetermined subset of a plurality of users do not complete the at least one of an action and a task; and
the completion of the at least one of an action and a task by each user of the first portion of the predetermined subset of a plurality of users comprises providing to the network based software application verification data generated by at least one of the user of the first portion of the predetermined subset of a plurality of users and by an independent individual during the user of the first portion of the predetermined subset of a plurality of users completion of the at least one of an action and a task.

13. The method according to claim 12, further comprising:
providing the first user with a reward established in dependence upon the first portion of the predetermined subset of a plurality of users, wherein
the reward is at least one of a virtual reward associated with the network based software application, a virtual reward associated with an independent reward program to the network based software application, and a physical reward.

14. The method according to claim 12, further comprising:
providing the first user with a reward established in dependence upon verification data generated by the first portion of the predetermined subset of a plurality of users, wherein
the reward is at least one of a virtual reward associated with the network based software application, a virtual reward associated with an independent reward program to the network based software application, and a physical reward.

15. The method according to claim 1, wherein the completion of either the action or the task includes a verification process comprising at least one of generation of a verification by at least one of the third user and a fourth user.
